# EUROPÄISCHE PATENTSCHRIFT

(11) **EP 3 038 950 B1**
(45) Veröffentlichungstag und Bekanntmachung des Hinweises auf die Patenterteilung: **21.06.2017**
(21) Anmeldenummer: 14796656.8
(22) Anmeldetag: 26.08.2014
(51) Int. Cl.: B65G 1/04, B61B 5/02, B60L 5/38, B60L 13/00, B60M 1/34

(54) **AUTOMATISCHES REGALLAGERSYSTEM UND ENTSPRECHENDES VERFAHREN**
AUTOMATIC RACK STORAGE SYSTEM AND CORRESPONDING METHOD
SYSTÈME D'ENTREPÔT À RAYONNAGES AUTOMATIQUE ET PROCÉDÉ CORRESPONDANT

(30) Priorität: 27.08.2013 AT 505262013
(43) Veröffentlichungstag der Anmeldung: 06.07.2016
(73) Patentinhaber: TGW Logistics Group GmbH, 4600 Wels (AT)
(72) Erfinder: GROSSE, Eric, 63225 Langen (DE)
(74) Vertreter: Burger, Hannes
(86) Internationale Anmeldenummer: PCT/AT2014/050183
(87) Internationale Veröffentlichungsnummer: WO 2015/027261

(56) Entgegenhaltungen:
- EP-A1- 1 512 661
- EP-A2- 1 775 240
- WO-A1-2013/090958
- US-A- 3 417 879
- US-A- 3 880 264

## Beschreibung

Die Erfindung betrifft ein automatisches Regallagersystem, wie dieses im Anspruch 1 beschrieben ist.

Die EP 2 287 093 A1 beschreibt ein Regallagersystem sowie ein Verfahren zum Betreiben dieses Regallagersystems. Das Regallagersystem umfasst ein Regallager, das mehrere benachbart zueinander angeordnete Regalreihen mit sich zwischen benachbarten Regalreihen erstreckenden Regalgassen aufweist. Weiters bilden die Regalreihen jeweils in vertikaler Richtung mehrere Regalebenen aus. In jeder der Regalebenen jeder Regalgasse können ein oder mehrere Förderfahrzeuge vorgesehen sein. Die Förderfahrzeuge dienen der Aufnahme und dem Transport von in den Regalreihen einzulagernden oder aus dem Regallager auszulagernden Transporthilfsmitteln, wie Paletten, Behälter oder dgl., die mit Produkten befüllt sein können. Des Weiteren sind in den Regalgassen zumindest in einzelnen der Regalebenen Führungsbahnen zum Führen der Förderfahrzeuge vorgesehen.

Die WO 2011/108636 A1 bzw. die EP 2 543 611 A1 beschreiben ein Regallagersystem, welches ein Regallager mit benachbart zueinander angeordneten Lagerregalen und in übereinander liegenden Regalebenen entlang einer Regalgasse verlaufende Führungsbahnen für Förderfahrzeuge zur Aufnahme und dem Transport von Ladegütern, eine Ladegut-Hebevorrichtung, eine erste Puffervorrichtung und eine zweite Puffervorrichtung aufweist. Die erste Puffervorrichtung und zweite Puffervorrichtung sind beidseitig zur Regalgasse angeordnet. Jede dieser Puffervorrichtungen umfasst in zumindest einigen der Regalebenen Bereitstellvorrichtungen, welche als Bereitstell-Fördervorrichtungen ausgebildet sind. Die Förderrichtungen der Bereitstell-Fördervorrichtungen je Puffervorrichtung können entweder gleichsinnig oder aber auch gegenläufig sein, sodass nach einer ersten Ausführung die erste Puffervorrichtung ausschließlich Auslager-Bereitstellvorrichtungen und die zweite Puffervorrichtung ausschließlich Einlager-Bereitstellvorrichtungen bzw. nach einer zweiten Ausführung die erste Puffervorrichtung wechselweise Auslager-Bereitstellvorrichtungen und Einlager-Bereitstellvorrichtungen und die zweite Puffervorrichtung wechselweise Einlager-Bereitstellvorrichtungen und Auslager-Bereitstellvorrichtungen ausbildet. Die Ladegut-Hebevorrichtung umfasst einen sich in der Verlängerung der Regalgasse stirnseitig vor dem Regallager oder innerhalb der Regalgasse ortsfest aufgestellten Mast und an diesem gelagerte, heb- und senkbare Transportvorrichtung zum Einlagern und/oder Auslagern der Ladegüter. Die Ladegüter können zwischen der ersten/zweiten Transportvorrichtung und der jeweiligen Bereitstell-Fördervorrichtung der ersten/zweiten Puffervorrichtung gefördert werden. Die Ladegut-Hebevorrichtung ist an eine Fördertechnik zum Antransport und Abtransport von Ladegütern zu bzw. von der Ladegut-Hebevorrichtung derart angeschlossen, dass Ladegüter zwischen der ersten/zweiten Transportvorrichtung und der Fördertechnik gefördert werden können.

Befindet sich die Ladegut-Hebevorrichtung mit ihren Mast in der Regalgasse und sind zu deren beiden Seiten jeweils die erste Puffervorrichtung, zweite Puffervorrichtung sowie die Regallager aufgestellt, so erstrecken sich in den Regalebenen die Führungsbahnen bis zu den Puffervorrichtungen. Je Regalebene können zwei Förderfahrzeuge derart verfahren, dass das erste Förderfahrzeug ausschließlich die (linken) Bereitstellvorrichtungen der ersten/zweiten Puffervorrichtung und das zweite Förderfahrzeug ausschließlich die (rechten) Bereitstellvorrichtungen der ersten/zweiten Puffervorrichtung bedienen können. Der Mast in der Regalgasse begrenzt die maximalen Verfahrwege der Förderfahrzeuge.

Liegt eine Störung beispielweise am (linken) ersten Förderfahrzeug vor, so können in dieser Regalebene die (linken) Bereitstellvorrichtungen der ersten/zweiten Puffervorrichtung nicht mehr bedient werden, nachdem das (rechte) zweiten Förderfahrzeug die (linken) Bereitstellvorrichtungen der ersten/zweiten Puffervorrichtung nicht bedienen kann. Damit verbunden ist ein Leistungseinbruch, welcher insbesondere beim Auslagerbetrieb sehr nachteilig ist.

Aus der DE 10 2010 030 998 A1 ist ein Regallagersystem mit Führungsbahnen für Förderfahrzeuge und ein Verfahren zu dessen Betrieb bekannt geworden. Die Förderfahrzeuge werden über eine Schleifleitungsanordnung mit elektrischem Strom versorgt. Des Weiteren werden über dieselbe Schleifleitungsanordnung die Förderfahrzeuge auch mit Daten von einem zentralen Steuerungssystem versorgt. Weiters kann die Schleifleitungsanordnung für die Datenversorgung in mehrere Abschnitte unterteilt sein, wobei sich in jedem Abschnitt gleichzeitig ein oder mehrere Förderfahrzeuge befinden und jeder Abschnitt nur mit den Daten für die jeweiligen Förderfahrzeuge versorgt wird.

Die EP 0 733 563 A1 beschreibt eine Ausbildung eines Regallagersystems mit einem Regallager mit Lagerregalen, welche in übereinander liegenden Regalebenen Lagerplätze für Ladegüter aufweisen. Zwischen den Lagerregalen erstreckt sich eine Regalgasse, wobei an stirnseitigen Regallagerseiten jeweils eine Ladegut-Manipulationseinheit zum Einlagern und Auslagern von Ladegütern angeordnet sind. Andererseits kann die Ladegut-Manipulationseinheit auch innerhalb des Regallagers integriert sein und beidseits der Regalgasse angeordnete Ladegut-Hebevorrichtungen umfassen. In jeder Regalebene der Regalgasse ist jeweils ausschließlich ein einziges, autonomes Förderfahrzeug angeordnet.

Aus der DE 42 17 084 A1 ist ein automatisiertes Regallagersystem bekannt geworden, bei welchem in einer Regalgasse und in mehreren Regalebenen zwischen zwei Regalreihen mehrere, elektrisch angetriebene Förderfahrzeuge vorgesehen sind. Auf Höhe jeder Regalebene ist eine Schienenpaar mit einer rechten und linken Führungsschiene angeordnet, um die Förderfahrzeuge führen zu können. Je Regalebene ist ein einziges Förderfahrzeug vorgesehen. Dabei umfasst das System an der rechten Führungsschiene Stromzuführungsdrähte zur Energieversorgung des Förderfahrzeuges und an der linken Führungsschiene Steuersignalübertragungsdrähte zur Datenversorgung des Förderfahrzeuges. Das Förderfahrzeug ist auf beiden Längsseiten mit Kollektoreinheiten versehen, wovon die rechte Kollektoreinheit auf den Stromzuführungsdrähte und die linke Kollektoreinheit auf den Steuersignalübertragungsdrähte gleiten. Andere Regallagersysteme sind auch aus der DE 2 113 201 A1, DE 2 113 202 A1 und JP 2004 - 123240 A bekannt. Das Dokument WO 2013/090958 A1 offenbart ein Regallagersystem nach dem Oberbegriff des Anspruchs 1 und ein Verfahren nach dem Oberbegriff des Anspruchs 18. Der vorliegenden Erfindung liegt die Aufgabe zugrunde, auch bei einem Einsatz von jeweils zwei Förderfahrzeugen in einer der Regalebenen nicht nur eine einwandfreie Energieversorgung sondern auch eine eindeutige Zuordnung der Steuersignale für den Fahrbetrieb jedes einzelnen der Förderfahrzeuge bei einem gleichzeitigen Betrieb beider Förderfahrzeuge sicher zu stellen.

Die Aufgabe der Erfindung wird durch die Merkmale sowie der Maßnahmen der Ansprüche 1 und 18 gelöst. Die Vorteile liegen darin, dass durch das Vorsehen der voneinander getrennt angeordneten Schleifleitungsanordnungen an den jeweils seitlich der Regalgasse an den Lagerregalen verlaufenden Führungsschienen für jedes der Förderfahrzeuge eine voneinander getrennte Energie- und/oder Datenversorgung ermöglicht wird. So kann das erste Förderfahrzeug über dessen Stromabnehmer die Schleifleitungen der ersten Schleifleitungsanordnung kontaktieren. Das zweite Förderfahrzeug wiederum kann über dessen Stromabnehmer die Schleifleitungen der zweiten Schleifleitungsanordnung kontaktieren. Dadurch wird eine räumlich getrennte Führung der Schleifleitungsanordnungen an den beiden die Führungsbahn bildenden Führungsschienen ermöglicht. Die Schleifleitungsanordnungen sind baugleich bzw. identisch aufgebaut und erfüllen jeweils die gleiche Funktionalität. Entweder dienen beide Schleifleitungsanordnungen den Förderfahrzeugen, welche sich auf einer Regalebene befinden, ausschließlich der Energieversorgung oder der Datenversorgung. Andererseits können beide Schleifleitungsanordnungen den Förderfahrzeugen, welche sich auf einer Regalebene befinden, auch jeweils der Energie- und Datenversorgung dienen. In einer bevorzugten Variante werden auf einer Regalebene maximal zwei Förderfahrzeuge angeordnet, sodass jedem der Förderfahrzeuge genau eine Schleifleitungsanordnung zugeordnet ist. So kann über die beiden Schleifleitungsanordnungen jedem der Förderfahrzeuge, wenn sich diese auf der gleichen Regalebene befinden, unabhängig vom jeweils anderen Förderfahrzeug eine ausreichende Energiemenge für dessen Fahrbetrieb zur Verfügung gestellt werden. Andererseits kann über die beiden Schleifleitungsanordnungen jedem der Förderfahrzeuge, wenn sich diese auf der gleichen Regalebene befinden, auch nur jene Daten- bzw. Steuersignale zugeführt werden, welche für das jeweilige Förderfahrzeug bestimmt sind. Damit können Störungen bei einer Datenübertragung über die Schleifleitungsanordnungen zwischen den einzelnen Förderfahrzeugen und einem zentralen Steuerungssystem vermieden werden. Auf diese Weise ist ein gesicherter gleichzeitiger Betrieb von zwei Förderfahrzeugen in der gleichen Regalebene unabhängig voneinander möglich.

Vorteilhaft ist auch eine Ausführungsform nach Anspruch 2, da so je Schleifleitungsanordnung zwei voneinander getrennte Schleifleitungen vorgesehen werden, mit welchen unabhängig voneinander das jeweilige damit kontaktierte Förderfahrzeug mit Energie und/oder Daten versorgt werden kann. Es erweist sich besonders vorteilhaft, wenn maximal drei Schleifleitungen je Schleifleitungsanordnung, bevorzugt ausschließlich zwei Schleifleitungen je Schleifleitungsanordnung vorgesehen werden, welche bei geringer Bauhöhe einen zuverlässigen Fahrbetrieb für jedes der Förderfahrzeuge ermöglicht. Zudem kann der erforderliche Einbauraum minimiert werden. Die Führungsschienen können sehr kompakt gebaut werden, sodass auch die Realisierung einer hohen Anzahl an Regalebenen möglich ist. Die Schleifleitungsanordnungen können innerhalb des Profilquerschnitts der sehr kompakten Führungsschienen angeordnet werden.Vorteilhaft ist auch eine Ausbildung nach Anspruch 3, da so jedem der Förderfahrzeuge innerhalb der gleichen Regalebene über ein unabhängiges Energieversorgungssystem die entsprechenden Motor- bzw. Steuerströme für den Fahrantrieb bzw. die Steuerelektronik zugeführt werden können.

Durch die Ausbildung nach Anspruch 4 ist es möglich, eine von der Schleifleitungsanordnung getrennte Datenübertragung zwischen einem zentralen Steuerungssystem und den einzelnen Förderfahrzeugen zu schaffen, beispielweise mittels WLAN.

Nach einer anderen Ausführungsvariante gemäß Anspruch 5 kann so über die jeweils gleiche Schleifleitungsanordnung das jeweilige Förderfahrzeug nicht nur mit Energie sondern auch gleichzeitig mit den entsprechenden Steuerdaten für die durchzuführenden Verfahrbewegungen versorgt werden. Dabei erfolgt über die erste Schleifleitungsanordnung die Energie- und Datenversorgung für das erste Förderfahrzeug und über die zweite Schleifleitungsanordnung die Energie- und Datenversorgung für das zweite Förderfahrzeug. Nachdem eine Trennung der Energie- und Datenversorgung je Förderfahrzeug erfolgt, kann auch bei "Aufmodulierung" der Datensignale auf die jeweilige Schleifleitungsanordnung die bidirektionale Datenübertragung zwischen dem jeweiligen Förderfahrzeug und dem zentralen Steuerungssystem sehr zuverlässig erfolgen.

Vorteilhaft ist auch eine Weiterbildung nach Anspruch 6, da die Führungsschienen einerseits mit einer sehr hohen Biegesteifigkeit und andererseits mit geringen Profilabmessungen hergestellt werden können. Dadurch können die Förderfahrzeuge sehr exakt entlang der Führungsschienen bewegt werden und ist auch eine einfache Integration der Schleifleitungsanordnungen innerhalb des jeweiligen Profilquerschnitts der Führungsschienen möglich. Dabei kann die erste Schleifleitungsanordnung entweder am unteren Profilflansch oder dem Profilsteg der ersten Führungsschiene befestigt werden. Die zweite Schleifleitungsanordnung kann entweder am unteren Profilflansch oder dem Profilsteg der zweiten Führungsschiene befestigt werden. Nach beiden Ausführungen liegen die Schleifleitungsanordnungen jeweils innerhalb des Profilquerschnitts der ersten/zweiten Führungsschiene.

Bei der Ausgestaltung nach Anspruch 7 oder 8 ist von Vorteil, dass so für jedes der Förderfahrzeuge eine eindeutige Zuordnung zu den jeweiligen an den Fahrschienen angeordneten Schleifleitungsanordnungen möglich ist. Damit kann schon mit geringem mechanischen Aufwand eine Fehlsteuerung der Förderfahrzeuge in der gleichen Regalebene vermieden werden.

Nach der Ausbildung gemäß Anspruch 9 sind die erste Ladegut-Hebevorrichtung und erste Puffervorrichtung als Baueinheit außerhalb der Regalgasse angeordnet. Die erste Puffervorrichtung umfasst ausschließlich in Richtung der Regalgasse an einer der Seiten der ersten Ladegut-Hebevorrichtung und in zumindest einigen der Regalebenen Bereitstellvorrichtungen für das Zwischenpuffern eines oder mehrerer einzulagernder und/oder auszulagernder Ladegüter. Dadurch wird eine sehr kompakte Bauform der Ladegut-Manipulationseinheit bei ausreichend hoher Einlager- und Auslagerleistung geschaffen.

Gemäß Anspruch 10 ist es vorgesehen, dass die erste Puffervorrichtung in Richtung der Regalgasse auf beiden Seiten zur ersten Ladegut-Hebevorrichtung und in zumindest einigen der Regalebenen Bereitstellvorrichtungen für das Zwischenpuffern eines oder mehrerer einzulagernder und/oder auszulagernder Ladegüter umfasst. Dadurch ist eine Auftrennung zwischen Bereitstellvorrichtungen für einen Einlagerbetrieb und Bereitstellvorrichtungen für einen Auslagerbetrieb möglich. Damit verbunden ist eine höhere Einlager- und Auslagerleistung.

Durch die Ausbildung nach Anspruch 11 kann eine optimale Auslastung der einzelnen Förderfahrzeuge in der gleichen Regalebene und damit eine maximale Einlager- und Auslagerleistung erreicht werden. Damit wird es aber auch möglich, über die entsprechende LadegutHebevorrichtung die ein- bzw. auszulagernden Ladegüter unabhängig von der jeweiligen Stellung der Förderfahrzeuge in den einzelnen Regalebenen entweder in die dafür vorgesehene Regalebene zu verbringen oder aus einer entsprechend vorgewählten Regalebene für einen Auslagervorgang dort abholen zu können.

Dabei ist nach einer ersten Ausführung die zweite Ladegut-Hebevorrichtung und zweite Puffervorrichtung als Baueinheit außerhalb der Regalgasse angeordnet, wie im Anspruch 12 beschrieben. Die zweite Puffervorrichtung umfasst ausschließlich in Richtung der Regalgasse an einer der Seiten der zweiten Ladegut-Hebevorrichtung und in zumindest einigen der Regalebenen Bereitstellvorrichtungen für das Zwischenpuffern eines oder mehrerer einzulagernder und/oder auszulagernder Ladegüter.

Nach einer zweiten Ausführung umfasst die zweite Puffervorrichtung in Richtung der Regalgasse auf beiden Seiten zur zweiten Ladegut-Hebevorrichtung und in zumindest einigen der Regalebenen Bereitstellvorrichtungen für das Zwischenpuffern eines oder mehrerer einzulagernder und/oder auszulagernder Ladegüter, wie im Anspruch 13 beschrieben.

Nachdem die erste und/oder zweite Ladegut-Hebevorrichtung der Ladegut-Manipulationseinheit seitlich bezüglich der Regalgasse angeordnet ist/sind, können die einzelnen Förderfahrzeuge an der ersten und/oder zweiten Ladegut-Hebevorrichtung vorbeifahren.Gemäß Anspruch 14 wird eine durchgängige Regalgasse geschaffen, um so das Vorbeifahren und/oder Durchfahren über die gesamte Länge der Regalgasse zu ermöglichen.

Bei der Ausbildung gemäß Anspruch 15 wird eine zentrale Anordnung der Manipulationseinheit innerhalb der Lagerregale geschaffen. Dadurch können Verfahrwege zwischen den beiden Stirnenden der Lagerregale für das Ein- und/oder Auslagern der Ladegüter verkürzt werden.

Möglich ist dabei auch eine Ausbildung nach Anspruch 16, weil dadurch kein Lagerplatz innerhalb des Regallagers bzw. der Lagerregale für das Anordnen der Fördertechnik zum Antransport und Abtransport von Ladegütern zu bzw. von der Ladegut-Hebevorrichtung verloren geht. Dadurch kann bei gleichem Platzbedarf eine höhere Stückzahl an Ladegütern in den Lagerregalen abgestellt werden.

Von Vorteil ist auch die im Anspruch 17 beschriebene Ausführung, da je nach Bedarf die Förderfahrzeuge zwischen den Regalebenen umgesetzt werden können. Die Förderfahrzeug-Hebevorrichtung kann auf der heb- und senkbaren Aufnahmevorrichtung entweder nur ein einziges Förderfahrzeug oder zwei Förderfahrzeuge aufnehmen. Nach letzterer Ausführung können beide Förderfahrzeuge von der Förderfahrzeug-Hebevorrichtung auf eine einzige Regalebene oder an unterschiedliche Regalebenen abgegeben werden.

Werden an zumindest einer der Führungsbahnen das erste Förderfahrzeug als auch das zweite Förderfahrzeug derart verfahren werden, wie im Anspruch 19 beschrieben, kann in einer ersten Betriebsphase das erste Förderfahrzeug die Auslager-Bereitstellvorrichtung für das Zwischenpuffern eines oder mehrerer auszulagernder Ladegüter bedienen und das zweite Förderfahrzeug die Einlager-Bereitstellvorrichtung für das Zwischenpuffern eines oder mehrerer einzulagernder Ladegüter bedienen. In einer zweiten Betriebsphase kann das erste Förderfahrzeug die Einlager-Bereitstellvorrichtung für das Zwischenpuffern eines oder mehrerer einzulagernder Ladegüter und/oder das zweite Förderfahrzeug die Auslager-Bereitstellvorrichtung für das Zwischenpuffern eines oder mehrerer auszulagernder Ladegüter bedienen. Das Umschalten zwischen den Betriebsphasen für die Förderfahrzeuge erfolgt mittels des Steuerungssystems.

So ist es nach der Maßnahme nach Anspruch 20 auch möglich, dass in der zweiten Betriebsphase das erste und zweite Förderfahrzeug entweder die Auslager-Bereitstellvorrichtung für das Zwischenpuffern eines oder mehrerer auszulagernder Ladegüter oder die Einlager-Bereitstellvorrichtung für das Zwischenpuffern eines oder mehrerer einzulagernder Ladegüter bedienen.

Der wesentliche Vorteil liegt nun darin, dass durch das Vorsehen der getrennt angeordneten Schleifleitungsanordnungen die Förderfahrzeugen in jeweils der gleichen Regalebene noch flexibler angesteuert werden können, ohne den Steuerungsaufwand maßgeblich zu erhöhen, sodass auch der Einlager- und Auslagerbetrieb optimiert durchgeführt werden kann.

Wird beispielweise eine hohe Auslagerleistung gefordert, so können Ladegüter nicht nur von einem Förderfahrzeug, sondern beiden Förderfahrzeugen in dieser Regalebenen ausgelagert werden. Dabei können nach einer ersten Ausführung nur auf der linken Seite zur Ladegut-Hebevorrichtung oder nur auf der rechten Seite zur Ladegut-Hebevorrichtung Ladegüter aus den Lagerregalen entnommen werden. Nach einer zweiten Ausführung können aber auch von der linken und rechten Seite zur Ladegut-Hebevorrichtung Ladegüter aus den Lagerregalen entnommen werden.

Mit anderen Worten können gleichzeitig und unabhängig voneinander die jeweiligen Förderfahrzeuge die Ladegüter an voneinander getrennten Örtlichkeiten aufnehmen und/oder abgeben, wodurch die Wirtschaftlichkeit des gesamten Regallagersystems noch zusätzlich erhöht werden kann.

Werden an zumindest einer der Führungsbahnen das erste Förderfahrzeug als auch das zweite Förderfahrzeug derart verfahren werden, wie im Anspruch 21 beschrieben, kann in einer ersten Betriebsphase das erste Förderfahrzeug die Auslager-Bereitstellvorrichtung für das Zwischenpuffern eines oder mehrerer auszulagernder Ladegüter oder die Einlager-Bereitstellvorrichtung für das Zwischenpuffern eines oder mehrerer einzulagernder Ladegüter bedienen und entweder das einzulagernde Ladegut von der Einlager-Bereitstellvorrichtung zu einem der als Pufferplatz dienenden Lagerplätze oder das auszulagernde Ladegut vom Pufferplatz zur Auslager-Bereitstellvorrichtung transportieren und das zweite Förderfahrzeug unabhängig vom ersten Förderfahrzeug das auszulagernde bzw. einzulagernde Ladegut zwischen dem Pufferplatz und einem vordefinierten Lagerplatz transportieren. In einer zweiten Betriebsphase kann auch das zweite Förderfahrzeug die Auslager-Bereitstellvorrichtung für das Zwischenpuffern eines oder mehrerer auszulagernder Ladegüter oder die Einlager-Bereitstellvorrichtung für das Zwischenpuffern eines oder mehrerer einzulagernder Ladegüter bedienen und entweder das einzulagernde Ladegut von der Einlager-Bereitstellvorrichtung zu einem der als Pufferplatz dienenden Lagerplätze oder einem vordefinierten Lagerplatz, oder das auszulagernde Ladegut vom Pufferplatz oder vordefinierten Lagerplatz zur Auslager-Bereitstellvorrichtung transportieren. Das Umschalten zwischen den Betriebsphasen für die Förderfahrzeuge erfolgt mittels dem Steuerungssystem.

Dabei ist von Vorteil, dass das erste Förderfahrzeug in der ersten Betriebsphase der Übernahme/Übergabe von Ladegütern zwischen der Einlager-Bereitstellvorrichtung/Auslager-Bereitstellvorrichtung und dem Förderfahrzeug und das zweite Förderfahrzeug der Einlagerung/Auslagerung von Ladegütern in/aus den Lagerregalen dient. In der zweiten Betriebsphase können beide Förderfahrzeuge in einer bevorzugten Ausführung für einen Auslagerbetrieb, aber auch für einen Einlagerbetrieb verwendet werden, womit ein Leistungsvorteil erreicht bzw. Leistungsspitzen können abgedeckt werden, was vor allem beim Auslagerbetrieb öfters erforderlich ist.

Schließlich ist auch die Maßnahme nach Anspruch 22 von Vorteil, da die Bereitstellvorrichtungen sowohl für einen Auslagerbetrieb als auch für einen Einlagerbetrieb verwendet werden. Hierzu ist einfach eine Umkehr der Förderrichtung für die Ladegüter erforderlich. Demnach entspricht ein und dieselbe Bereitstellvorrichtung im Auslagerbetrieb einer Auslager-Bereitstellvorrichtung und im Einlagerbetrieb einer Einlager-Bereitstellvorrichtung.

Soll beispielweise ein Ladegut in Regallager eingelagert werden, welches an der Einlager-Bereitstellvorrichtung oder von der Ladegut-Hebevorrichtung in einer der Regalebenen bereitgestellt wird, wird dieses vom ersten Förderfahrzeug an der Bereitstellvorrichtung oder der Ladegut-Hebevorrichtung übernommen und an einem freien Lagerplatz (bzw. Pufferplatz) in der gleichen Regalebene zwischengelagert. Anschließend wird dieses Ladegut vom zweiten Förder-fahrzeug am nunmehr belegten Lagerplatz (bzw. Pufferplatz) übernommen und mit dem zweiten Förderfahrzeug zu dem in dieser Regalebene dafür vorgesehenen Lagerplatz gefördert. Dort angekommen, wird das Ladegut auf dem Lagerplatz abgestellt. Andererseits kann dieses Ladegut auch in einer anderen Regalebene gelagert werden, wozu das zweite Förderfahrzeug mit diesem Ladegut zur Förderfahrzeug-Hebevorrichtung verfahren, auf die Förderfahrzeug-Hebevorrichtung übernommen und danach auf die andere Regalebene angehoben/abgesenkt wird. In dieser Regalebene wird nun das zweite Förderfahrzeug mit dem Ladegut auf die Führungsbahn abgegeben und in dieser anderen Regalebene zum vorgesehenen Lagerplatz bewegt. Diese Maßnahme kann vor allem für Langsamdreher, so genannte B-Artikel oder C-Artikel eingesetzt werden. Das Auslagern kann in umgekehrter Richtung erfolgen.

Damit können die Ein- und/oder Auslagervorgänge der Ladegüter noch besser aufeinander abgestimmt werden. Es ist auch möglich, zwischenzeitlich nicht benötigte Ladegüter am Pufferplatz abzustellen, um so an der Ladegut-Hebevorrichtung bzw. der Bereitstellvorrichtung Platz für andere Ladegüter zu schaffen und das entsprechende Umlagern erst dann durchzuführen, wenn für den dazu notwendigen Umlagervorgang kein anderer dringender Auftrag durch das entsprechende Förderfahrzeug abzuarbeiten ist.

Eine vorteilhafte Maßnahme ist auch im Anspruch 23 beschrieben, da selbst nach dem Umschalten von der ersten Betriebsphase in die zweite Betriebsphase, wo sich die Fahrbereiche der Förderfahrzeuge, welche auf einer Führungsbahnen gleichzeitig betrieben werden, überschneiden, eine Kollision der Förderfahrzeuge vermieden wird. Diese Kollisionsüberwachung kann auf Basis einer zusätzlichen "internen" Sensorik an den Förderfahrzeugen oder "externen" Sensorik je Führungsbahn erfolgen. Andererseits kann auch unabhängig von jeglicher Sensorik ausschließlich über ein elektronisches Fahrwegplanungsmodul die Überwachung der Fahrbewegungen erfolgen. Es ist aber auch eine Kombination aus den Möglichkeiten der Fahrbewegungsüberwachung realisierbar.

Zum besseren Verständnis der Erfindung wird diese anhand der nachfolgenden Figuren näher erläutert.

Es zeigen jeweils in stark vereinfachter, schematischer Darstellung:
- Fig. 1: einen Ausschnitt einer ersten Regallagerseite eines Regallagersystems in einer ersten Ausführung und zweiten Ausführung mit einem Regallager und einer Ladegut-Manipulationseinheit in Draufsicht auf eine Regalebene;
- Fig. 2: einen Ausschnitt einer zweiten Regallagerseite des Regallagersystems nach Fig. 1 in Draufsicht auf eine Regalebene;
- Fig. 3: eine Seitenansicht auf die Ladegut-Manipulationseinheit nach Fig. 1 gemäß den Linien III-III in Fig. 1;
- Fig. 4: eine Seitenansicht auf die Ladegut-Manipulationseinheit nach Fig. 1 gemäß den Linien IV-IV in Fig. 1;
- Fig. 5: eine Stirnansicht auf das Regallager und Abschnitte der beiden hintereinander angeordneten Förderfahrzeuge;
- Fig. 6: eine vergrößerte Darstellung von Teilabschnitten aus der Fig. 5;
- Fig. 7: ein Regallagersystem in einer dritten Ausführung mit einem Regallager und einer Ladegut-Manipulationseinheit in Draufsicht;
- Fig. 8: ein Regallagersystem in einer vierten Ausführung mit einem Regallager und einer Ladegut-Manipulationseinheit in Draufsicht;
- Fig. 9: ein Regallagersystem in einer fünften Ausbildung mit einem Regallager und einer Ladegut-Manipulationseinheit in Draufsicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

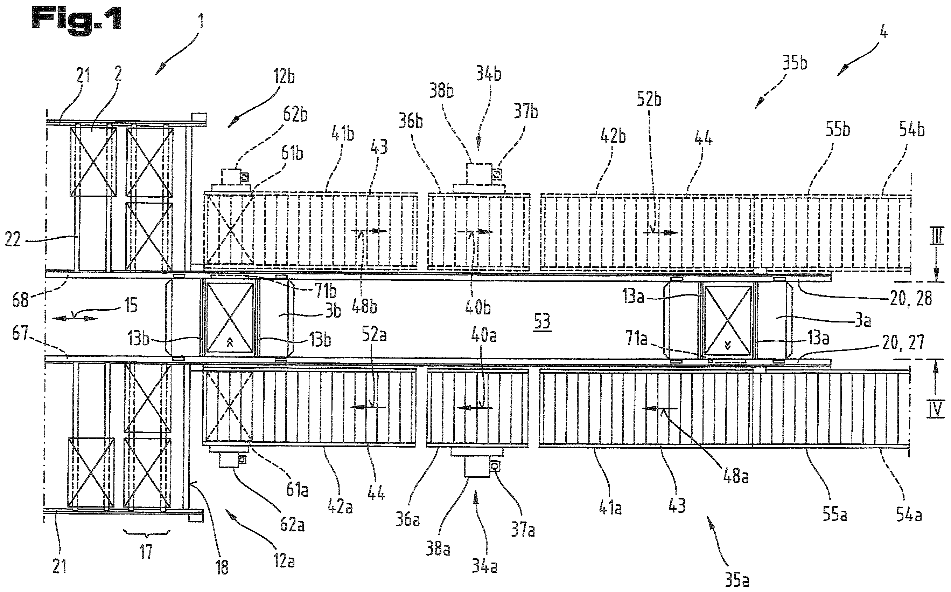

In den Fig. 1 bis 4 ist eine erste Ausführung eines Regallagersystems gezeigt, welches ein Regallager 1 für Ladegüter 2, mehrere selbstfahrende, autonome Förderfahrzeuge 3a, 3b, eine bevorzugt vollautomatisierte Ladegut-Manipulationseinheit 4 und gegebenenfalls eine Förderfahrzeug-Hebevorrichtung 5 umfasst.

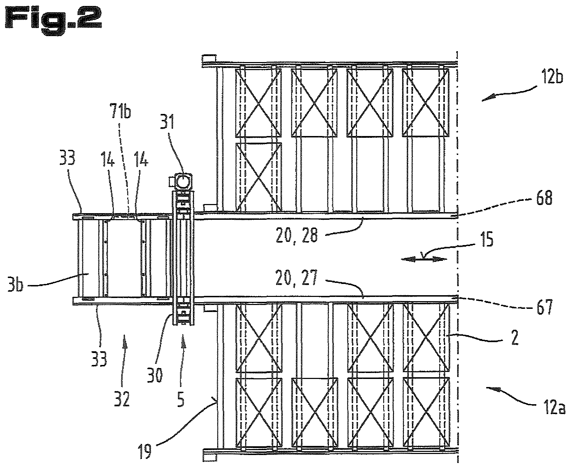

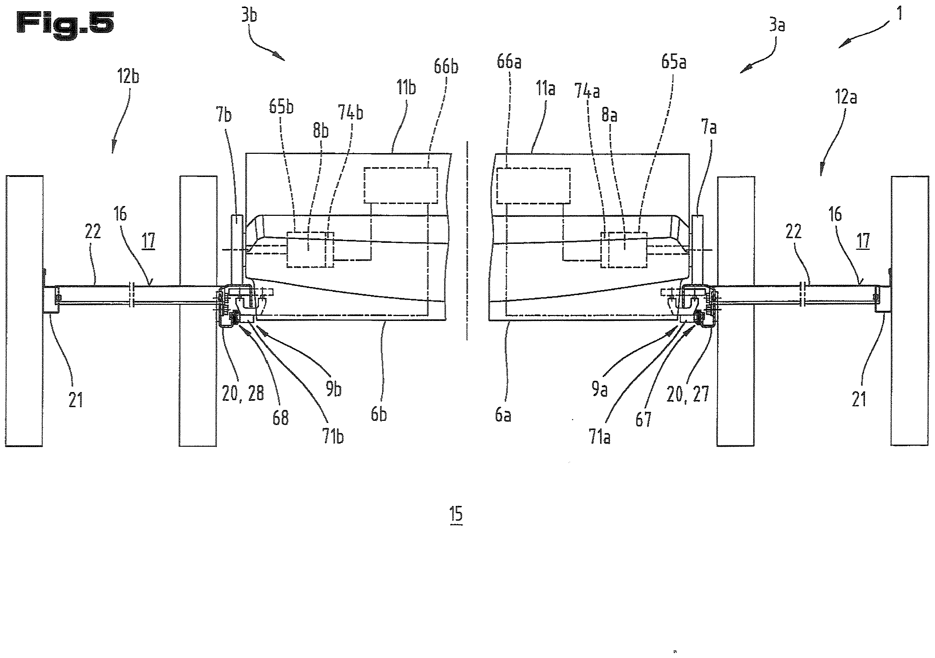

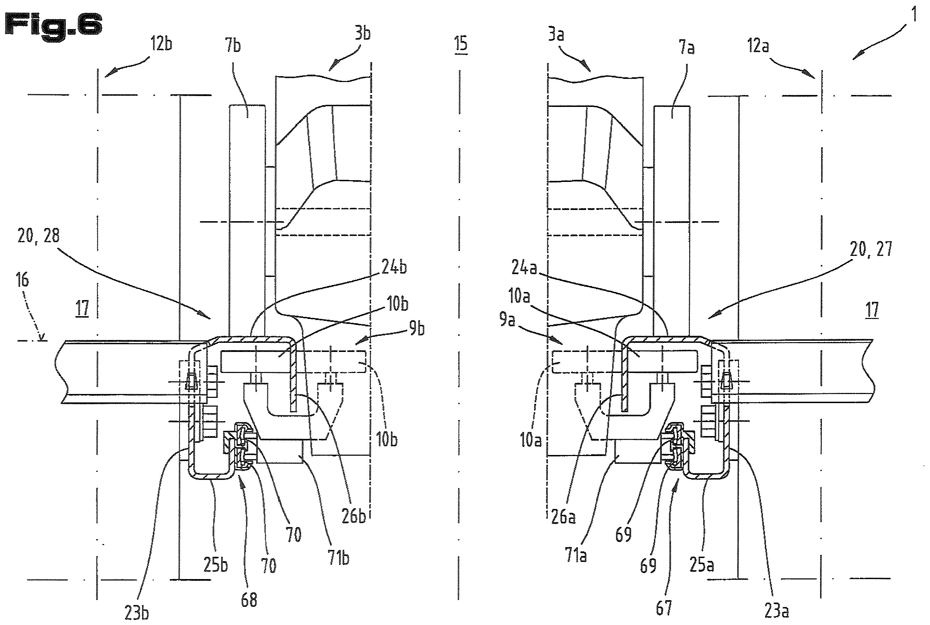

Das oder die Förderfahrzeuge 3a, 3b sind bevorzugt Einebenenregalbediengeräte (Shuttles) und umfassen zumindest, wie dies in den nachfolgenden Fig. 5 und 6 angedeutet ist, einen Grundrahmen 6, Laufräder 7, einen Fahrmotor 8 zum Antrieb mindestens eines Laufrades 7, eine Führungsvorrichtung 9 mit Führungsräder 10 sowie eine Lastaufnahmevorrichtung 11, beispielweise zur Einlagerung und Auslagerung von Ladegütern 2 in ein bzw. aus einem Lagerregal 12a, 12b des Regallagers 1. Die Lastaufnahmevorrichtung 11 umfasst nach gezeigter Ausführung nach beiden Seiten relativ zum Förderfahrzeug 3 ausfahrbare Teleskoparme 13 und jeweils an diesen angeordnete Mitnehmer 14 - siehe Fig. 2 - zum Erfassen eines oder mehrerer Ladegüter 2, wie dies hinlänglich bekannt ist. Die Zusatzbezeichnungen "a" sowie "b" bei den einzelnen Bauteilen der Förderfahrzeuge 3a, 3b können analog der Förderfahrzeugbezeichnung hinzugefügt werden, um so auch bei einer nicht näheren gewählten allgemeinen Bezeichnung eine entsprechende Zuordnung schaffen zu können.

Eine solche Lastaufnahmevorrichtung 11 ist beispielsweise aus der US 2005/0095095 A1 oder EP 0 647 575 A1 bekannt, und kann aufgrund der kompakten Bauweise der Teleskoparme 13 und der zuverlässigen Funktionsweise mit Vorteil eingesetzt werden. Die Ladegüter 2 sind beispielsweise Behälter, Kartonagen, Tablare und dgl. oder ein Warenartikel selbst.

Das Regallager 1 weist in einem Abstand parallel zueinander angeordnete Lagerregale 12a, 12b auf, zwischen denen sich zumindest eine Regalgasse 15 erstreckt und welche in übereinander liegenden Regalebenen 16 jeweils nebeneinander vorgesehene Lagerplätze 17 für die Ladegüter 2 ausbilden. Das Regallager 1 bildet stirnseitig einander gegenüberliegend eine erste Regallagerseite 18 und eine zweite Regallagerseite 19 aus. Es kann das Regallager 1 aber auch eine Vielzahl von Lagerregalen 12a, 12b und zwischen einigen benachbarten Lagerregale 12a, 12b einige Regalgassen 15 umfassen.

Die Lagerregale 12a, 12b umfassen jeweils der Regalgasse 15 benachbarte, vertikale vordere Regalsteher und von der Regalgasse 15 entfernte, vertikale hintere Regalsteher, wobei sich zwischen den vorderen Regalstehern in der jeweiligen Regalebene 16 zumindest eine horizontale vordere Längstraverse 20 und zwischen den hinteren Regalstehern in der jeweiligen Regalebene 16 zumindest eine horizontale hintere Längstraverse 21 erstreckt. Die Längstraversen 20, 21 sind über Befestigungsmittel, beispielweise Schrauben, Steckverbindungen mit den Regalstehern verbunden.

Die vorderen Längstraversen 20 verlaufen in Längsrichtung der Regalgasse 15 (X-Richtung), wobei die in der jeweiligen Regalebene 16 paarweise einander gegenüberliegenden Längstraversen 20 eine Führungsbahn bilden, entlang welcher das Förderfahrzeug 3 bewegt werden kann.

Die Längstraversen 20, 21 der jeweiligen Regalebene 16 sind über die Lagerplätze 17 bzw. Lagerfläche bildende Querträger 22 miteinander verbunden. Die Querträger 22 erstrecken sich zwischen den Längstraversen 20, 21 in Tiefenrichtung eines Regalfaches (Z-Richtung).

Nach gezeigter Ausführung bilden die Lagerregale 12a, 12b in den Regalebenen 16 jeweils nebeneinander und hintereinander vorgesehene Lagerplätze 17 für die Ladegüter 2 aus, sodass in Tiefenrichtung der Lagerregale 12a, 12b zwei Ladegüter 2 abgestellt werden können, daher eine so genannte "doppelttiefe" Lagerung möglich ist. Andererseits ist es auch möglich, dass die Lagerregale 12a, 12b in den Regalebenen 16 jeweils ausschließlich in einer Reihe nebeneinander vorgesehene Lagerplätze 17 für die Ladegüter 2 ausbilden, sodass in Tiefenrichtung der Lagerregale 12a, 12b nur ein Ladegut 2 abgestellt werden kann, daher eine so genannte "einfachtiefe" Lagerung möglich ist. Es kann aber auch eine mehrfachtiefe Lagerung der Ladegüter 2 erfolgen, wobei dies in Abhängigkeit von der Größe bzw. den Abmessungen der Ladegüter 2 frei gewählt werden kann.

Die vordere Längstraverse 20, siehe Fig. 6, umfasst einen Profilsteg 23, einen von diesem abgewinkelten horizontalen oberen Profilflansch 24, einen vom Profilsteg 23 abgewinkelten unteren Profilflansch 25 und einen vom oberen Profilflansch 24 abgewinkelten Führungssteg 26. Der obere Profilflansch 24 bildet eine horizontale Lauffläche für die Laufräder 7 des Förderfahrzeuges 3a, 3b und der Führungssteg 26 einander gegenüberliegende Führungsflächen für die Führungsräder 10 der Führungsvorrichtung 9 aus. Der untere Profilflansch 25 bildet einen horizontalen Profilschenkel und gegebenenfalls einen von diesem abgewinkelten vertikalen Profilschenkel aus.

Die einander paarweise gegenüberliegenden, vorderen Längstraversen 20 in der jeweiligen Regalebene 16 bilden gemeinsam eine Führungsbahn aus und werden im vorliegenden Ausführungsbeispiel mit ersten und zweiten Führungsschienen 27 und 28 bezeichnet. Die nähere Beschreibung der Zufuhr von bzw. Versorgung mit Energie und/oder Daten für die einzelnen Förderfahrzeuge 3a, 3b erfolgt später in detaillierter Form.

Trotz der Mehrfachanordnung von Förderfahrzeugen 3a, 3b in zumindest einzelnen der Regalebenen 16 kann es trotzdem notwendig sein, in eine Regalebene 16, in welcher z.B. nur ein einziges Förderfahrzeug 3a vorgesehen ist, aus einer anderen Regalebene 16 ein weiteres Förderfahrzeug 3b zu verbringen. Dazu kann die bekannte Förderfahrzeug-Hebevorrichtung 5, wie sie in Fig. 2 gezeigt ist, eingesetzt werden.

Da es in der heutigen Zeit notwendig ist, die Ein- und Auslagerleistung für die Ladegüter 2 noch weiter zu erhöhen und die Baugröße des Regallagersystems möglichst klein zu dimensionieren zu können, werden zumindest in einigen der Regalebenen 16 bevorzugt zwei Förderfahrzeuge 3a und 3b gleichzeitig eingesetzt. Grundsätzlich könnten aber auch mehr als zwei Förderfahrzeuge 3a, 3b, z.B. drei oder mehr Förderfahrzeuge 3a, 3b je Regalebene 16 verwendet werden.

Die Förderfahrzeuge 3 sind ein nicht unwesentlicher Kostenfaktor bei den Regallagersystemen, werden aber in erhöhter Anzahl immer häufiger benötigt, um noch rascher und effizienter den Warenumschlag (einlagern und/oder auslagern) der Ladegüter 2 durchführen zu können. Dazu ist vorgesehen, dass in zumindest einzelnen der Regalebenen 16 jeweils gleichzeitig zumindest zwei Förderfahrzeuge 3a und 3b vorhanden sind, um die Ladegüter 2 innerhalb der jeweiligen Regalebene 16 transportieren und/oder umlagern zu können. Die nähere Beschreibung dazu erfolgt in nachfolgenden Figuren.

Die Förderfahrzeug-Hebevorrichtung 5 (Umsetzvorrichtung) ist bei diesem gezeigten Beispiel auf der zweiten Regallagerseite 19 stirnseitig vor dem Regallager 1 angeordnet und umfasst einen Führungsrahmen 30 und eine über einen Hubantrieb 31 am Führungsrahmen 30 hebund senkbare Aufnahmevorrichtung 32 für das oder die Förderfahrzeuge 3a, 3b. Die Aufnahmevorrichtung 32 umfasst parallel zur Regalgasse 15 (X-Richtung) mit gegenseitigem Abstand horizontal erstreckende Längstraversen 33, wobei diese ebenso wie die Führungsschienen 27, 28 jeweils mit einer Schleifleitungsanordnung (nicht dargestellt) versehen sind, um das (rechte oder linke) Förderfahrzeug 3a; 3b mit Energie- und/oder Daten zu versorgen, wenn es zwischen den Regalebenen 16 umgesetzt werden soll. Diese Schleifleitungsanordnungen sind identisch zu jenen Schleifleitungsanordnungen 67, 68 aufgebaut, wie sie bei den Führungsschienen 27, 28 verwendet werden. Ist die Aufnahmevorrichtung 32 entsprechend dimensioniert, können gleichzeitig auch zwei Förderfahrzeuge 3a, 3b auf den Längstraversen 33 hintereinander aufgenommen und voneinander getrennt mit Energie und/oder Daten versorgt werden. Durch die Hubbewegung wird die Aufnahmevorrichtung 32 relativ zu den Regalebenen 16 in vertikaler Richtung (Y-Richtung) bis zu einer von einem Rechnersystem festgelegten y-Position bewegt.

Die Ladegut-Manipulationseinheit 4 umfasst stirnseitig vor den Lagerregalen 12a, 12b angeordnet eine erste Ladegut-Hebevorrichtung 34a und eine erste Puffervorrichtung 35a zum Zwischenspeichern von Ladegütern 2. Dabei handelt es sich um die erste mögliche Ausführungsform der Ladegut-Manipulationseinheit 4 des Regallagers 1.

Bevorzugt sind, wie in einer zweiten Ausführung gezeigt, jedoch zusätzlich eine zweite Ladegut-Hebevorrichtung 34b sowie eine zweite Puffervorrichtung 35b zum Zwischenspeichern von Ladegütern 2 vorgesehen, wie dies in strichlierten Linien wie in Fig. 1 angedeutet ist. Eine solche Ausführung eignet sich für höchste Leistungsanforderungen und kann eine zweite, unabhängige Ausführungsform der Ladegut-Manipulationseinheit 4 darstellen. Dabei sei erwähnt, dass die nachfolgende Beschreibung auf die beidseits der Regalgasse 15 angeordneten Ladegut-Hebevorrichtungen 34a, 34b sowie die Puffervorrichtungen 35a, 35b gerichtet ist, es jedoch auch möglich ist, dass nur auf einer der Seiten der Regalgasse 15 nur eine der Ladegut-Hebevorrichtungen 34a oder 34b sowie eine der Puffervorrichtungen 35a oder 35b vorgesehen sein kann.

Die Ladegut-Hebevorrichtungen 34a, 34b sind nach gezeigter Ausführung zur Regalgasse 15 spiegelbildlich einander gegenüberliegend aufgestellt. Andererseits ist es auch möglich, dass die Ladegut-Hebevorrichtungen 34a, 34b einander gegenüberliegend aufgestellt, aber in Richtung der Regalgasse 15 axial zueinander versetzt sind.

Die ortsfest aufgestellten Ladegut-Hebevorrichtungen 34a, 34b umfassen jeweils eine heb- und senkbare Transportvorrichtung 36a, 36b für Ladegüter 2, wobei die erste Transportvorrichtung 36a auf einem über einen ersten Hubantrieb 37a vertikal verstellbaren Hubrahmen und die zweite Transportvorrichtung 36b auf einem über einen zweiten Hubantrieb 37b vertikal verstellbaren Hubrahmen aufgebaut sind. Nach gezeigter Ausführung ist die erste Transportvorrichtung 36a über den Hubrahmen auf einem ersten Mast 38a und die zweite Transportvorrichtung 36b über den Hubrahmen auf einem zweiten Mast 38b gelagert. Die heb- und senkbaren Transportvorrichtungen 36a, 36b und/oder deren Fördervorrichtungen sind unabhängig voneinander ansteuerbar.

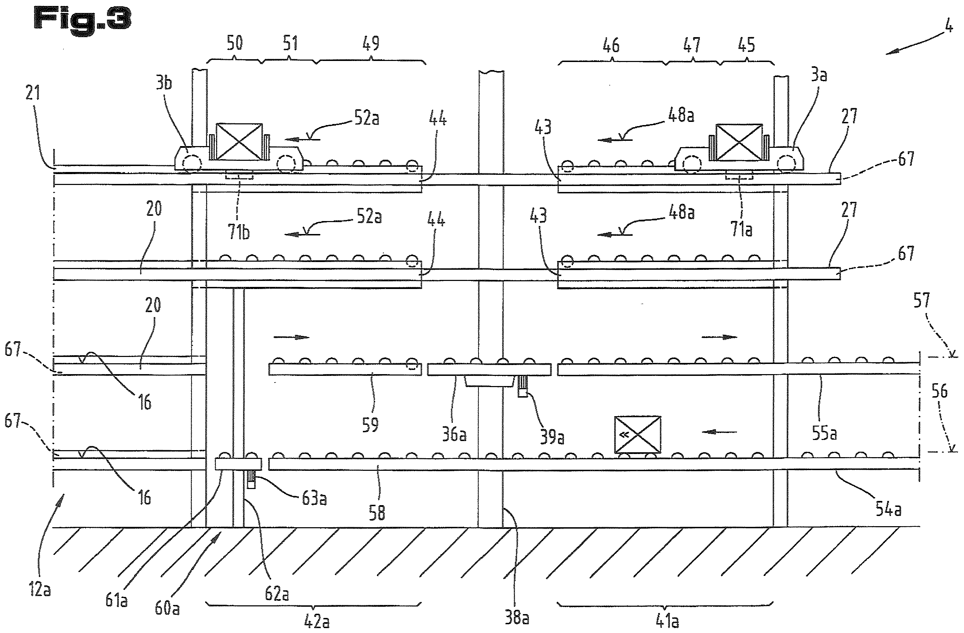

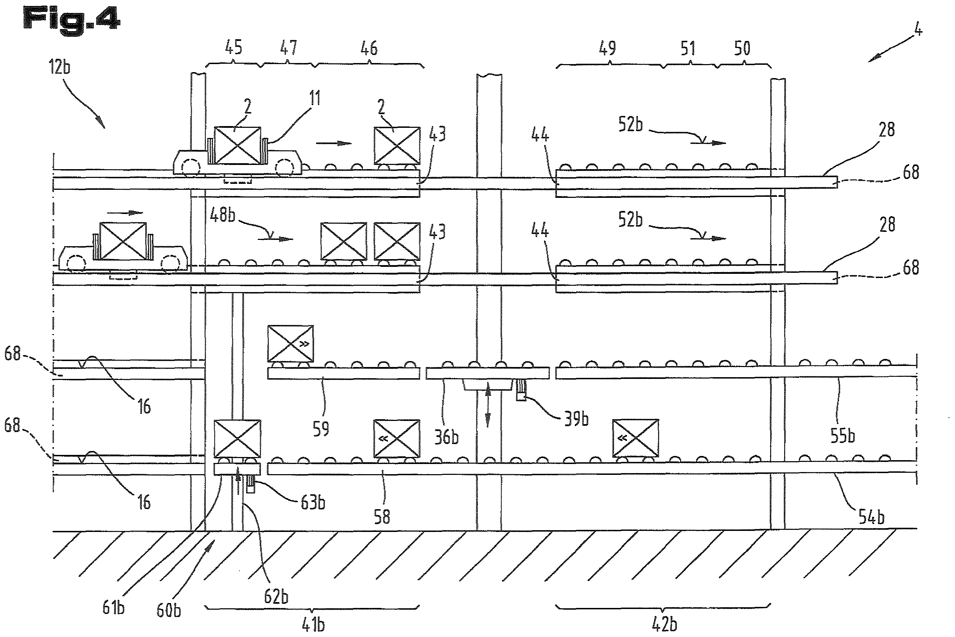

Die Transportvorrichtungen 36a, 36b können jeweils eine über einen Antriebsmotor 39a, 39b (Fig. 3; 4) reversibel antreibbare Fördervorrichtung mit einer parallel zur Regalgasse 15 verlaufenden umkehrbaren Förderrichtung 40a, 40b (Fig. 1) umfassen und können ein Ladegut 2 oder in Förderrichtung 40a, 40b hintereinander zumindest zwei Ladegüter 2 aufnehmen. Ist die Transportvorrichtung 36a, 36b zwischen einander gegenüberliegenden Bereitstellvorrichtungen 43, 44 positioniert, wie in Fig. 1 gezeigt, so entspricht die Förderrichtung 40a, 40b den Förderrichtungen der jeweiligen Bereitstellvorrichtungen 43, 44, sofern diese mit einer eigenen Fördervorrichtung ausgestattet sind. In diesem Fall kann auch die Bezeichnung Bereitstell-Fördervorrichtung gewählt werden.

Ist hingegen die Transportvorrichtung 36a, 36b zwischen einander gegenüberliegenden Fördervorrichtungen 54a, 55a, 54b, 55b positioniert, wie in Fig. 3; 4 gezeigt, so entspricht die Förderrichtung 40a, 40b den Förderrichtungen der Fördervorrichtungen 54a, 55a, 54b, 55b. Die Fördervorrichtung ist beispielweise eine Rollenbahn oder ein Förderband und dgl.

Die Bereitstellvorrichtungen 43, 44 können anstelle der Bereitstell-Fördervorrichtungen alternativ als stationäre Auflagetische ohne jeglicher Fördervorrichtung ausgebildet sein. Die unterschiedlichen Varianten der Bereitstellvorrichtungen sind in der WO 2013/090970 A2 offenbart und sind Gegenstand dieser Offenbarung.

Die ortsfest aufgestellten Puffervorrichtungen 35a, 35b umfassen nach dieser zweiten Ausführung jeweils einen ersten Pufferstreckenabschnitt 41a, 41b und einen zweiten Pufferstreckenabschnitt 42a, 42b, wobei in jedem dieser Pufferstreckenabschnitte 41a, 41b, 42a, 42b zumindest in einigen der Regalebenen 16 übereinander Bereitstellvorrichtungen 43, 44 angeordnet sind.

Wie in den Fig. 3 und 4 entnehmbar, sind zum Einen in den unteren beiden Regalebenen 16 des ersten Pufferstreckenabschnittes 41a und zweiten Pufferstreckenabschnittes 42b und zum Anderen in der einen unteren Regalebene 16 des ersten Pufferstreckenabschnittes 41b und zweiten Pufferstreckenabschnittes 42a keine Bereitstellvorrichtungen 43, 44 vorgesehen, um die Anordnung einer Fördertechnik zum Antransport von Ladegütern 2 zur Ladegut-Hebevorrichtung 34a, 34b und zum Abtransport von Ladegütern 2 von der Ladegut-Hebevorrichtung 34a, 34b zu ermöglichen.

Die Bereitstellvorrichtungen 43 im ersten Pufferstreckenabschnitt 41a, 41b können jeweils durch Staubahnen gebildet sein, welche einen Übernahmeabschnitt 45, einen Übergabeabschnitt 46 und zwischen diesen zumindest einen Pufferabschnitt 47 umfassen. Der Übergabeabschnitt 46 umfasst nach dieser Ausführung zwei Übergabeplätze, auf denen zwei Ladegüter 2 bereitgestellt werden können. Der Übernahmeabschnitt 45 umfasst hingegen nach dieser Ausführung einen Übernahmeplatz, auf dem ein Ladegut 2 aufgenommen werden kann. Der Pufferabschnitt 51 umfasst zumindest einen Pufferplatz für ein Ladegut 2. Mittels der Staubahnen können die Ladegüter 2 von dem zur Ladegut-Hebevorrichtung 34a, 34b entfernten Übernahmeabschnitt 45 zu dem zur Ladegut-Hebevorrichtung 34a, 34b benachbarten Übergabeabschnitt 46 in einer einzigen Förderrichtung 48a, 48b gefördert werden.

Die Bereitstellvorrichtungen 44 im zweiten Pufferstreckenabschnitt 42a, 42b können jeweils auch durch Staubahnen gebildet sein, welche einen Übernahmeabschnitt 49, einen Übergabeabschnitt 50 und zwischen diesen zumindest einen Pufferabschnitt 51 umfassen. Der Übernahmeabschnitt 49 umfasst nach dieser Ausführung zwei Übernahmeplätze, auf denen zwei Ladegüter 2 aufgenommen werden können. Der Übergabeabschnitt 50 umfasst hingegen nach dieser Ausführung einen Übernahmeplatz, auf dem ein Ladegut 2 bereitgestellt werden kann. Der Pufferabschnitt 51 umfasst zumindest einen Pufferplatz für ein Ladegut 2. Mittels der Staubahnen können die Ladegüter 2 von dem zur Ladegut-Hebevorrichtung 34a, 34b benachbarten Übernahmeabschnitt 49 zu dem zur Ladegut-Hebevorrichtung 34a, 34b entfernten Übergabeabschnitt 50 in einer einzigen Förderrichtung 52a, 52b gefördert werden.

Demnach dienen die Bereitstellvorrichtungen 43 in den ersten Pufferstreckenabschnitten 41a, 41b einem Auslagervorgang von Ladegütern 2 bzw. als Auslager-Bereitstellvorrichtungen und die Bereitstellvorrichtungen 44 in den zweiten Pufferstreckenabschnitten 42a, 42b einem Einlagervorgang von Ladegütern 2 bzw. als Einlager-Bereitstellvorrichtungen.

Die Bereitstellvorrichtungen 43, 44 bzw. Staubahnen können durch Staurollenförderer, Staugurtförderer und dgl. gebildet sein, wobei ein Stauplatz jeweils einen der Übernahmeplätze für die Übernahmeabschnitte 49, ein Stauplatz den Übernahmeplatz für die Übernahmeabschnitte 45, ein Stauplatz jeweils einen der Übergabeplätze für die Übergabeabschnitte 46, ein Stauplatz den Übergabeplatz für die Übergabeabschnitte 50, ein Stauplatz zumindest einen Pufferplatz bzw. Pufferabschnitt 47, 51 bildet. Somit können auf einer Bereitstellvorrichtung 43, 44 zumindest vier Ladegüter 2, bevorzugt fünf Ladegüter 2 gepuffert werden.

Wie die Fig. 1 und 3 erkennen lassen, weisen die Bereitstellvorrichtungen 43, 44, wenn diese mit einer eigenen Fördervorrichtung versehen sind, in den jeweiligen Regalebenen 16 eine einzige (nicht reversierbare) Förderrichtung 48a, 48b, 52a, 52b auf. Mit anderen Worten, sind die Bereitstellvorrichtungen 43, 44 jeder Puffervorrichtung 35a, 35b bzw. die Staubahnen in allen Regalebenen 16, in denen sie angeordnet sind, mit einer einzigen (nicht reversierbaren) Förderrichtung 48a, 48b, 52a, 52b betrieben. Bevorzugt werden die Bereitstellvorrichtungen 43, 44 jeder Puffervorrichtung 35a, 35b bzw. die Staubahnen in jeder gemeinsamen Regalebene 16, in denen sie angeordnet sind, mit einer einzigen (nicht reversierbaren) Förderrichtung 48a, 48b, 52a, 52b betrieben, daher an der Puffervorrichtung 35a, wie in Fig. 1 und 3 ersichtlich, von rechts nach links und an der Puffervorrichtung 35b, wie in Fig. 1 und 4 ersichtlich, von links nach rechts. Bloß die Förderrichtung 40a, 40b der Transportvorrichtung 36a, 36b ist reversierbar, wie oben beschrieben. Die (nicht reversierbare) Förderrichtung 48a, 52a ist aber entgegengesetzt zur (nicht reversierbaren) Förderrichtung 48b, 52b.

Wie in den Fig. 1 und 3 ersichtlich, verlaufen auch nach dieser Ausführung entlang der Ladegut-Manipulationseinheit 4 in Längsrichtung der Regalgasse 15 (X-Richtung) und in zumindest einigen der Regalebenen 16 die horizontale Längstraversen 20, wie oben beschrieben. Die Förderfahrzeuge 3a, 3b können auszulagernde Ladegüter 2 von den Lagerplätzen 17 zu dem Übernahmeabschnitt 45 der ersten Pufferstreckenabschnitte 41a, 41b antransportieren oder einzulagernde Ladegüter 2 von dem Übergabeabschnitt 50 der zweiten Pufferstreckenabschnitte 42a, 42b zu den Lagerplätzen 17 abtransportieren.

Die Längstraversen 20 bzw. Führungsbahnen verlaufen in Längsrichtung der Regalgasse 15 (X-Richtung) entlang der Lagerregale 12a, 12b und entlang der Ladegut-Hebevorrichtungen 34a, 34b und der Puffervorrichtungen 35a, 35b. Dabei ist entlang der Ladegut-Hebevorrichtungen 34a, 34b und der Puffervorrichtungen 35a, 35b ein Umsetzbereich 53 definiert.

An die Ladegut-Manipulationseinheit 4 kann eine Vorzonen-Fördertechnik zum Antransport von Ladegütern 2 zur Ladegut-Hebevorrichtung 34a und gegebenenfalls zur Ladegut-Hebevorrichtung 34b und zum Abtransport von Ladegütern 2 von der Ladegut-Hebevorrichtung 34a und gegebenenfalls von der Ladegut-Hebevorrichtung 34b angeschlossen sein. Diese umfasst eine die Ladegüter 2 zu der Ladegut-Hebevorrichtung 34a antransportierende erste Fördervorrichtung 54a und eine die Ladegüter 2 von der Ladegut-Hebevorrichtung 34a abtransportierende zweite Fördervorrichtung 55a.

Sind auch die Ladegut-Hebevorrichtung 34b und die Puffervorrichtung 35b gemäß den Fig. 1 und 3 vorgesehen, so umfasst die Fördertechnik wiederum eine die Ladegüter 2 zu der Ladegut-Hebevorrichtung 34b antransportierende erste Fördervorrichtung 54b und eine die Ladegüter 2 von der Ladegut-Hebevorrichtung 34b abtransportierende zweite Fördervorrichtung 55b.

Die erste Fördervorrichtung 54a; 54b und zweite Fördervorrichtung 55a; 55b sind nach gezeigter Ausführung in übereinander liegenden Fördertechnikebenen 56, 57 im unteren Höhenbereich (Bodenbereich) des Regallagers 1 angeordnet und weisen entgegensetzte Förderrichtungen auf, wie dies mit den Pfeilen angedeutet ist. Andererseits kann die erste Fördervorrichtung 54a; 54b und zweite Fördervorrichtung 55a; 55b in übereinander liegenden Fördertechnikebenen 56, 57 auch im oberen Höhenbereich des Regallagers 1 angeordnet sein. Die erste Fördervorrichtung 54a; 54b und zweite Fördervorrichtung 55a; 55b erstrecken sich dabei parallel zur Regalgasse 15 in der Verlängerung des jeweiligen Lagerregals 12a; 12b.

Vorzugweise liegen die Fördertechnikebene 56 und die unterste Regalebene 16 innerhalb einer ersten Horizontalebene sowie die Fördertechnikebene 57 und die darüber liegende Regalebene 16 innerhalb einer zweiten Horizontalebene. Dadurch wird eine sehr Platz sparende Anordnung der Fördertechnik erreicht.

Wie in den Fig. 1, 3 und 4 ersichtlich, umfasst die erste Fördervorrichtung 54a; 54b in übereinander liegenden Fördertechnikebene 56, 57 und parallel zur Regalgasse 15 verlaufende (ortsfeste) Förderabschnitte 58, 59, welche über einen Umsetzheber 60a; 60b miteinander verbunden sind.

Sind auch die Ladegut-Hebevorrichtung 34b und die Puffervorrichtung 35b vorgesehen, wie die Fig. 1, 3 und 4 zeigen, so umfasst auch die erste Fördervorrichtung 54b einen Umsetzheber 60b für die Ladegüter 2.

Der ortsfest aufgestellte Umsetzheber 60a; 60b umfasst eine heb- und senkbare Transportvorrichtung 61a, 61b für Ladegüter 2, wobei die erste Transportvorrichtung 61a auf einem über einen (nicht dargestellten) ersten Hubantrieb vertikal verstellbaren Hubrahmen und eine zweite Transportvorrichtung 61b auf einem über einen (nicht dargestellten) zweiten Hubantrieb vertikal verstellbaren Hubrahmen aufgebaut sind. Nach gezeigter Ausführung ist die erste Transportvorrichtung 61a über den Hubrahmen auf einem ersten Mast 62a und die zweite Transportvorrichtung 61b über den Hubrahmen auf einem zweiten Mast 62b gelagert.

Die Transportvorrichtungen 61a, 61b umfassen jeweils eine über einen Antriebsmotor 63a, 63b antreibbare Fördervorrichtung mit einer parallel zur Regalgasse 15 verlaufenden Förderrichtung und können ein einziges Ladegut 2 oder in Förderrichtung hintereinander zwei Ladegüter 2 aufnehmen. Die Fördervorrichtung ist beispielweise eine Rollenbahn oder ein Förderband und dgl..

Die Transportvorrichtung 61a, 61b kann nun über den Hubantrieb zwischen den Förderabschnitten 58, 59 verstellt werden, um Ladegüter 2 von dem unteren Förderabschnitt 58 zu übernehmen und auf den oberen Förderabschnitt 59 abzugeben.

Die Transportvorrichtungen 36a; 36b sind unabhängig (entkoppelt) voneinander zwischen den Regalebenen 16 auf das Höhenniveau einer jeden Regalebene 16 und auf das Höhenniveau der Fördertechnikebene 57 verstellbar, sodass Ladegüter 2 einerseits zwischen der Transportvorrichtung 36a; 36b und der Bereitstellvorrichtung 43, 44 und andererseits zwischen der Transportvorrichtung 36a; 36b und der Bereitstellvorrichtung 43, 44 und den Fördervorrich-tungen 54a, 55a, 54b, 55b gefördert werden können.

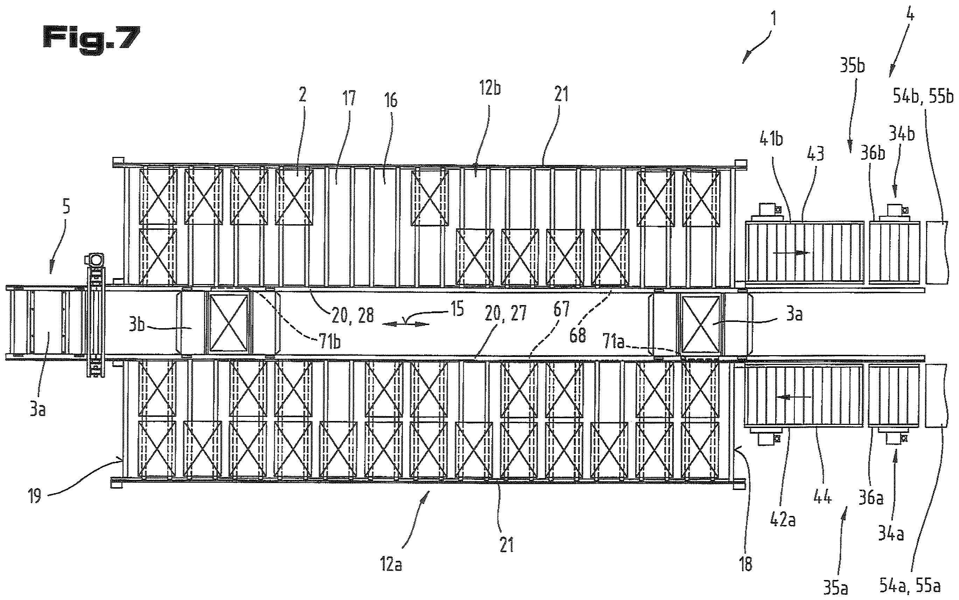

In einer in Fig. 7 schematisch gezeigten dritten Ausführungsvariante können auch nur die der ersten Regallagerseite 18 unmittelbar benachbart angeordneten Bereitstellvorrichtungen 43, 44 sowie die beiden Ladegut-Hebevorrichtungen 34a, 34b vorgesehen sein. Die Fördertechnik bzw. Vorzonenfördertechnik kann dann entsprechend dazu gleich wie zuvor beschrieben oder aber auch nur auf einer Seite der Lagerregale 12a oder 12b vorgesehen sein. Demnach dienen die in zumindest einigen der Regalebenen 16 angeordneten Bereitstellvorrichtungen 43 in den ersten Pufferstreckenabschnitten 41b einem Auslagervorgang von Ladegütern 2 bzw. als Auslager-Bereitstellvorrichtungen und die in zumindest einigen der Regalebenen 16 angeordneten Bereitstellvorrichtungen 44 in den zweiten Pufferstreckenabschnitten 42a einem Einlagervorgang von Ladegütern 2 bzw. als Einlager-Bereitstellvorrichtungen.

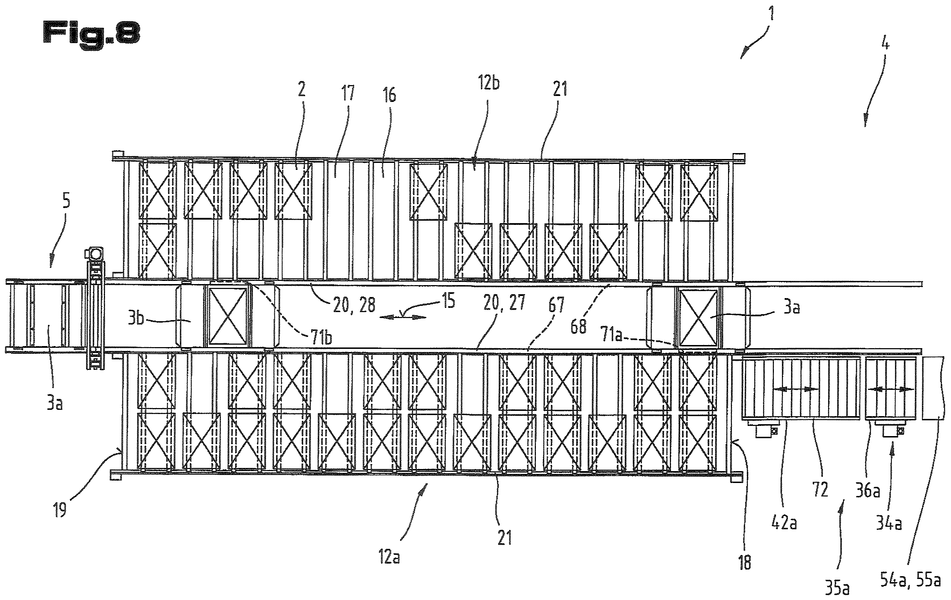

In einer in Fig. 8 schematisch gezeigten vierten Ausführungsform ist an der ersten Regallagerseite 18 unmittelbar benachbart zu einem der Lagerregale 12a oder 12b eine einzige Puffervorrichtung 35a und eine einzige Ladegut-Hebevorrichtung 34a vorgesehen. Die Puffervorrichtung 35a umfasst in Richtung der Regalgasse 15 an einer einzigen Seiten der Ladegut-Hebevorrichtung 34a einen Pufferstreckenabschnitt 42a mit in zumindest einigen der Regalebenen 16 angeordneten Bereitstellvorrichtungen 72 für das Zwischenpuffern eines oder mehrerer einzulagernder und/oder auszulagernder Ladegüter 2.Dabei sei noch erwähnt, dass im Gegensatz zu den zuvor beschriebenen Ausführungsformen bei den hier eingesetzten Bereitstellvorrichtungen 72 in jeder Regalebene 16 auch ein Reversierbetrieb vorgesehen sein kann. Umfassen die Bereitstellvorrichtungen 72 auch noch Fördervorrichtungen, können diese die Förderrichtungen reversieren, wie mit dem Doppelpfeil angedeutet. Damit können sowohl Einlagervorgänge als auch Auslagervorgänge der Ladegüter 2 in den jeweiligen Regalebenen 16 durchführt werden. Dies deshalb, da nur auf einer Seite der Ladegut-Hebevorrichtung 34a oder 34b die Bereitstellvorrichtungen 72 vorgesehen sind. Sollten die Bereitstellvorrichtungen 72 so ausgebildet sein, dass diese einen Längstransport von Ladegütern 2 in Richtung der Regalgasse 15 durchführen können, können diese auch als Bereitstell-Fördervorrichtungen mit Reversierbetrieb bezeichnet werden.

Auf die nähere Beschreibung der dritten und vierten Ausführungsformen basierend auf den zuvor beschriebenen ersten und zweiten Ausführungsformen gemäß der Fig. 1 bis 3 wird verzichtet, um unnötige Wiederholungen zu vermeiden, da nur gleichartig ausgebildete Anlagenteile verwendet werden.

Die erste und die zweite Führungsschiene 27, 28 der jeweiligen Führungsbahn erstrecken sich bis zu der Ladegut-Manipulationseinheit 4 oder die erste und die zweite Führungsschiene 27, 28 laufen an der Ladegut-Manipulationseinheit 4 vorbei.

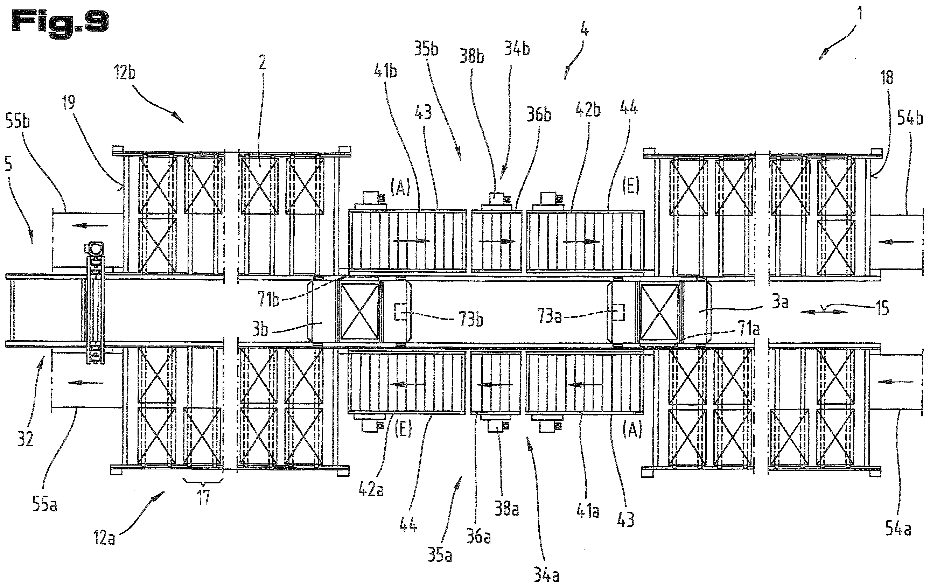

In der Fig. 9 ist eine weitere und gegebenenfalls für sich eigenständige fünfte Ausführungsform des Regallagersystems 1 gezeigt, wobei wiederum für gleiche Teile gleiche Bezugszeichen bzw. Bauteilbezeichnungen wie in den vorangegangenen Fig. 1 bis 8 verwendet werden. Um unnötige Wiederholungen zu vermeiden, wird auf die detaillierte Beschreibung in den vorangegangenen Fig. 1 bis 8 hingewiesen bzw. Bezug genommen.

Bei diesem hier gezeigten fünften Ausführungsbeispiel sind beidseits der Regalgasse 15 wiederum die erste und die zweite Ladegut-Hebevorrichtung 34a, 34b der Ladegut-Manipulationseinheit 4 vorgesehen. Diese können zumindest um eine Gassenbreite voneinander distanziert aufgestellt sein und spiegelbildlich einander gegenüber liegen. Des Weiteren ist hier im Gegensatz zu den zuvor beschriebenen Ausführungsbeispielen die Ladegut-Manipulationseinheit 4 in den Lagerregalen 12a, 12b integriert. Dies bedeutet, dass die Ladegut-Manipulationseinheit 4 nicht stirnseitig an eine der Regallagerseiten 18, 19, sondern zwischen den ersten und zweiten Regallagerseiten 18, 19 innerhalb zumindest eines der Lagerregale 12a, 12b angeordnet ist. Diese Ausführungsform kann auch als schachtinterne Lagervariante bezeichnet werden. Die beiden Ladegut-Hebevorrichtungen 34a, 34b mit deren Masten 38a, 38b sowie deren Transportvorrichtungen 36a, 36b können analog ausgebildet sein, wie dies bereits zuvor detailliert in den Fig. 1 bis 4 beschrieben worden ist. Damit wird auch hier wiederum eine durchgängige Regalgasse 15 auch im Bereich der Ladegut-Hebevorrichtungen 34a, 34b erzielt.

Auch die Puffervorrichtungen 35a, 35b umfassen hier in Richtung der Regalgasse 15 gesehen jeweils beidseits der Ladegut-Hebevorrichtungen 34a, 34b die Bereitstellvorrichtungen 43, 44.

Betrachtet man nun jene Anlagenteile, welche im Bereich des ersten Lagerregals 12a zur Bildung der Ladegut-Manipulationseinheit 4 vorgesehen sind, dienen die rechtsseitig der ersten Ladegut-Hebevorrichtung 34a angeordneten Bereitstellvorrichtungen 43 mit ihren Pufferstreckenabschnitten 41a jeweils den Auslagervorgängen in den einzelnen Regalebenen 16 eines oder mehrerer Ladegüter 2, daher bilden die Bereitstellvorrichtungen sogenannte Auslager-Bereitstellvorrichtungen.

Die linksseitig der ersten Ladegut-Hebevorrichtung 34a angeordneten weiteren Bereitstellvorrichtungen 44 mit ihren weiteren Pufferstreckenabschnitten 42a dienen jeweils den Einlagervorgängen in den einzelnen Regalebenen 16 eines oder mehrerer Ladegüter 2, daher bilden die Bereitstellvorrichtungen sogenannte Einlager-Bereitstellvorrichtungen.

Auf der von der ersten Ladegut-Hebevorrichtung 34a gegenüberliegenden Seite der Regalgasse 15 ist die zweite Ladegut-Hebevorrichtung 34b mit ihrer Transportvorrichtung 36b an deren Mast 38b in vertikaler Richtung zwischen den Regalebenen 16 verfahrbaren Transportvorrichtung 36b angeordnet.

Die Puffervorrichtung 35b umfasst wiederrum beidseits der zweiten Ladegut-Hebevorrichtung 34b in Richtung der Regalgasse 15 gesehen die Bereitstellvorrichtungen 43, 44, welche in zumindest einigen der Regalebenen 16 angeordnet sind.

Die hier linksseitig bezüglich der zweiten Ladegut-Hebevorrichtung 34b angeordneten Bereitstellvorrichtungen 43 mit ihren Pufferstreckenabschnitten 41b dienen dabei den Auslagervorgängen eines oder mehrerer Ladegüter 2.

Die rechtsseitig bezüglich der zweiten Ladegut-Hebevorrichtung 34b angeordneten Bereitstellvorrichtungen 44 dienen den Einlagervorgängen eines oder mehrerer Ladegüter 2.

Die erste Ladegut-Hebevorrichtung 34a ist wiederum an eine Fördertechnik zum Antransport und Abtransport von Ladegütern 2 zu bzw. von der ersten Ladegut-Hebevorrichtung 34a angeschlossen, wie schematisch angedeutet. Die Fördertechnik umfasst eine Fördervorrichtung 54a, auf welcher die Ladegüter 2 für einen Einlagervorgang antransportiert werden, und eine Fördervorrichtung 55a, auf welcher die Ladegüter 2 für einen Auslagervorgang abtransportiert werden. Die Fördervorrichtungen 54a, 55a verlaufen vorzugsweise in einer Ebene parallel zur Regalgasse und sind unterhalb der untersten Regalebene 16 des Lagerregales 12a angeordnet. Dabei schließen die Fördervorrichtungen 54a, 55a an die Ladegut-Hebevorrichtung 34a derart an, dass Ladegüter 2 zwischen den Fördervorrichtungen 54a, 55a und der sich auf die Ebene abgesenkten Transportvorrichtung 36a gefördert werden können.

Die zweite Ladegut-Hebevorrichtung 34b ist wiederum an eine Fördertechnik zum Antransport und Abtransport von Ladegütern 2 zu bzw. von der zweiten Ladegut-Hebevorrichtung 34b angeschlossen, wie schematisch angedeutet. Die Fördertechnik umfasst eine Fördervorrichtung 54b, auf welcher die Ladegüter 2 für einen Einlagervorgang antransportiert werden, und eine Fördervorrichtung 55b, auf welcher die Ladegüter 2 für einen Auslagervorgang abtransportiert werden. Die Fördervorrichtungen 54b, 55b verlaufen vorzugsweise in einer Ebene parallel zur Regalgasse und sind unterhalb der untersten Regalebene 16 des Lagerregales 12b angeordnet. Dabei schließen die Fördervorrichtungen 54b, 55b an die Ladegut-Hebevorrichtung 34b derart an, dass Ladegüter 2 zwischen den Fördervorrichtungen 54b, 55b und der sich auf die Ebene abgesenkten Transportvorrichtung 36b gefördert werden können.

Auch bei diesem Ausführungsbeispiel ist wiederrum vorgesehen, dass in zumindest einzelnen der Regalebenen 16 mehrere, bevorzugt zwei Förderfahrzeuge 3a, 3b innerhalb der Regalgasse 15 je Regalebene 16 verfahrbar sind. Ein zusätzliches Umsetzen von einzelnen der Förderfahrzeuge 3a, 3b von einer Regalebene 16 auf eine dazu in vertikaler Richtung davon distanzierte weitere Regalebene 16 kann über die im Bereich der zweiten Regallagerseite 19 angeordnete Fahrzeug-Hebevorrichtung 5 in bekannter Weise erfolgen bzw. durchgeführt werden.

Abweichend von der in der Fig. 9 beschriebenen Ladegut-Manipulationseinheit 4 wäre es nach einer anderen Ausführungsform möglich, dass nur an einer Seite der Regalgasse 15 eine der Ladegut-Hebevorrichtungen 34a oder 34b, eine der Puffervorrichtungen 35a oder 35b und Fördervorrichtungen 54a, 55a oder 54b, 55b vorgesehen sind.

Unabhängig davon könnte aber bei einer anderen Ausführungsform die Puffervorrichtung 35a, 35b auf nur einer Seite die Bereitstellvorrichtungen 43 oder 44 umfassen.

Wie aus dem oben Beschriebenen ersichtlich wird, umfasst die Ladegut-Manipulationsvorrichtung 4 die erste Ladegut-Hebevorrichtung 34a und die erste Puffervorrichtung 35a und/oder die zweite Ladegut-Hebevorrichtung 34b und die zweite Puffervorrichtung 35b.

Einerseits kann die Puffervorrichtung 35a; 35b in Richtung der Regalgasse 15 an nur einer der Seiten der Ladegut-Hebevorrichtung 34a; 34b und in zumindest einigen der Regalebenen 16 oder sämtlichen Regalebenen 16 die Bereitstellvorrichtungen 43; 44 für das Zwischenpuffern eines oder mehrerer einzulagernder und/oder auszulagernder Ladegüter 2 aufweisen. Andererseits kann die Puffervorrichtung 35a; 35b in Richtung der Regalgasse 15 an einer Seite der Ladegut-Hebevorrichtung 34a; 34b und in zumindest einigen der Regalebenen 16 oder sämtlichen Regalebenen 16 erste Bereitstellvorrichtungen 43 für das Zwischenpuffern eines oder mehrerer einzulagernder und/oder auszulagernder Ladegüter 2 sowie in Richtung der Regalgasse 15 an der anderen Seite der ersten Ladegut-Hebevorrichtung 34a; 34b und in zumindest einigen der Regalebenen 16 oder sämtlichen Regalebenen 16 zweite Bereitstellvorrichtungen 44 für das Zwischenpuffern eines oder mehrerer einzulagernder und/oder auszulagernder Ladegüter 2 umfassen.

Anderenfalls kann die Ladegut-Manipulationsvorrichtung 4 die erste Ladegut-Hebevorrichtung 34a und die erste Puffervorrichtung 35a sowie die zweite Ladegut-Hebevorrichtung 34b und die zweite Puffervorrichtung 35b umfassen, wobei dann die Puffervorrichtungen 35a, 35b ausschließlich in Richtung der Regalgasse 15 an nur einer der Seiten der Ladegut-Hebevorrichtung 34a, 34b und in zumindest einigen der Regalebenen 16 oder sämtlichen Regalebenen 16 die Bereitstellvorrichtungen 72 für das Zwischenpuffern eines oder mehrerer einzulagernder und/oder auszulagernder Ladegüter 2 aufweisen.

Nach diesen Ausführungen erfolgt eine so genannte "indirekte Übergabe" der Ladegüter 2 zwischen der Ladegut-Hebevorrichtung 34a; 34b; 72 und einem Förderfahrzeug 3a, 3b, wo die Ladegüter 2 bei einem Einlagerbetrieb und/oder Auslagerbetrieb temporär von der Puffervorrichtung 35a; 35b aufgenommen werden.

Grundsätzlich ist es aber auch denkbar, dass die Ladegut-Manipulations-vorrichtung 4 ausschließlich zumindest eine Ladegut-Hebevorrichtung umfasst und die Puffervorrichtung entfällt.

Nach dieser Ausführung erfolgt eine so genannte "direkte Übergabe" der Ladegüter 2 zwischen der Ladegut-Hebevorrichtung 34a; 34b und einem Förderfahrzeug 3a, 3b, daher erfolgt der Einlagerbetrieb und/oder Auslagerbetrieb ohne temporärer Lagerung der Ladegüter 2 in einer Puffervorrichtung.

Wesentlich ist, das bei all diesen Ausführungen sowohl bei der "indirekten Übergabe" der Ladegüter 2 als auch "direkte Übergabe" der Ladegüter 2 die Ladegut-Hebevorrichtung 34a; 34b und gegebenenfalls die Puffervorrichtung 35a; 35b; 72 außerhalb der Regalgasse 15 bzw. Gassenlichte angeordnet sind. Die Ladegut-Hebevorrichtung 34a; 34b und die Puffervorrichtung 35a; 35b; 72 bilden dabei eine Baueinheit. Durch diese Anordnung können die Förderfahrzeuge 3a, 3b auf den Fahrschienen 27, 28 an der Ladegut-Hebevorrichtung 34a; 34b; 72 und Puffervorrichtung 35a; 35b; 72 vorbeifahren.

Wie nun besser aus einer Zusammenschau der Fig. 5 und 6 zu ersehen ist, weist jedes der Förderfahrzeuge 3a, 3b einen eigenen Fahrantrieb 65a, 65b sowie eine eigene Steuerelektronik 66a, 66b auf. Damit sind die Förderfahrzeuge 3a, 3b über ein (nicht dargestelltes) elektro-nisches Steuerungssystem unabhängig voneinander ansteuerbar, um Ladegüter 2 gleichzeitig in einer Regalebene 16 einzulagern und/oder auszulagern. Die kollisionsfreie Bewegung von mehreren Förderfahrzeugen wird durch das Steuerungssystem sichergestellt.

In der Fig. 6 ist eine der Führungsbahnen mit der ersten Führungsschiene 27 sowie der zweiten Führungsschiene 28 in einer der Regalebenen 16 darstellt, wobei auf der rechten Seite dieser Darstellung die erste Führungsschiene 27 mit dem darauf verfahrbaren ersten Förderfahrzeug 3a und auf der linken Seite der Regalgasse 15 die zweite Führungsschiene 28 mit dem zweiten bzw. weiteren Förderfahrzeug 3b darstellt ist. Die beiden Förderfahrzeuge 3a, 3b sind üblicherweise hintereinander angeordnet und werden jeweils über ein in den ersten sowie zweiten Führungsschienen 27, 28 vorgesehenes Versorgungssystem mit Energie und/ oder Daten versorgt.

Dazu ist die erste Führungsschiene 27 mit einer ersten Schleifleitungsanordnung 67 und die zweite Führungsschiene 28 mit einer zweiten Schleifleitungsanordnung 68 ausgestattet. Weiters umfasst jede Schleifleitungsanordnung 67, 68 eigene Schleifleitungen 69, 70. Die Schleifleitungsanordnungen 67, 68 erstrecken sich jeweils über die gesamte Länge der Führungsschienen 27, 28.

Das erste Förderfahrzeug 3a umfasst seinerseits Stromabnehmer 71a und kontaktiert damit die Schleifleitungen 69 der ersten Schleifleitungsanordnung 67 zur Energie- und/oder Datenversorgung.

Das zweite Förderfahrzeug 3b umfasst seinerseits ebenfalls eigene Stromabnehmer 71b und kontaktiert damit die Schleifleitungen 70 der zweiten Schleifleitungsanordnung 68 zur Energie- und/oder Datenversorgung.

Damit wird es möglich, entlang zumindest einer der Führungsbahnen auf deren ersten und zweiten Führungsschienen 27, 28 das erste Förderfahrzeug 3a als auch das zweite Förderfahrzeug 3b gleichzeitig und unabhängig voneinander nicht nur mit Energie sondern auch mit Daten zu versorgen und damit auch unabhängig voneinander verfahren zu können. Durch die räumlich voneinander getrennte Anordnung der Schleifleitungsanordnungen 67, 68 an den ersten sowie zweiten Führungsschienen 27, 28 kann über jede der Schleifleitungen 69, 70 unabhängig voneinander die Versorgung mit Energie und/oder Daten zu dem exakt vorbestimmten Förderfahrzeug 3a, 3b erfolgen.

Des Weiteren ist es vorteilhaft, wenn jede der Schleifleitungsanordnungen 67, 68 jeweils maximal zwei voneinander getrennt verlaufende Schleifleitungen 69, 70 umfasst. Damit kann bei geringem Platzbedarf ein Einbau der Schleifleitungsanordnung 67, 68 in den ersten bzw. zweiten Führungsschienen 27, 28 erfolgen.

Des Weiteren ist es möglich, dass die Energieversorgung der ersten und zweiten Förderfahrzeuge 3a, 3b und Lastaufnahmevorrichtung 11 jeweils ausschließlich über die von den Förderfahrzeugen 3a, 3b kontaktierten Schleifleitungsanordnungen 67, 68 erfolgt. Die Datenversorgung zur Steuerung des Fahrbetriebes der einzelnen Förderfahrzeuge 3a, 3b und des Stellantriebes für die Lastaufnahmevorrichtung 11 kann hingegen über eine drahtlose Nahkommunikationsverbindung erfolgen. Dies kann beispielsweise über eine Funkverbindung erfolgen, beispielsweise WLAN, Bluetooth oder ZigBee.

Dabei sind die Steuerelektronik 66a des ersten Förderfahrzeugs 3a und die Steuerelektronik 66b des zweiten Förderfahrzeugs 3b zur bidirektionalen Datenübertragung über ein drahtloses, insbesondere gemeinsames, Kommunikationsnetzwerk, insbesondere ein Funknetzwerk mit dem zentralen Steuerungssystem verbunden.

Damit bildet die erste Schleifleitungsanordnung 67 mit ihren Schleifleitungen 69 ausschließlich einen ersten Energieversorgungsbus und die zweite Schleifleitungsanordnung 68 mit ihren Schleifleitungen 70 ausschließlich einen zweiten Energieversorgungsbus. Über den ersten Energieversorgungsbus sind Motor- bzw. Steuerströme für den Fahrantrieb 65a bzw. die Steuerelektronik 66a des ersten Förderfahrzeugs 3a und den zweiten Energieversorgungsbus Motor- bzw. Steuerströme für den Fahrantrieb 65b bzw. die Steuerelektronik 66b des zweiten Förderfahrzeugs 3b übertragbar. Ebenso sind über den ersten Energieversorgungsbus Motor- bzw. Steuerströme für den Stellantrieb der Lastaufnahmevorrichtung 11a des ersten Förderfahrzeugs 3a und den zweiten Energieversorgungsbus Motor- bzw. Steuerströme für den Stellantrieb der Lastaufnahmevorrichtung 11b des zweiten Förderfahrzeugs 3b übertragbar.

Hierzu sind der Fahrantrieb 65a bzw. Stellantrieb der Lastaufnahmevorrichtung 11a an die Steuerelektronik 66a des ersten Förderfahrzeugs 3a und der Fahrantrieb 65b bzw. Stellantrieb der Lastaufnahmevorrichtung 11b an die Steuerelektronik 66b des zweiten Förderfahrzeugs 3b angeschlossen.

Bevorzugt erfolgt jedoch sowohl die Energieversorgung als auch die Datenversorgung der ersten und zweiten Förderfahrzeuge 3a, 3b (daher des Fahrantriebs 65a, 65b bzw. Stellantriebes der Lastaufnahmevorrichtung 11a, 11b) jeweils ausschließlich über die von den Förderfahrzeugen 3a, 3b unabhängig voneinander kontaktierten Schleifleitungsanordnungen 67, 68.

Dabei werden über dieselben Schleifleitungen 69 der Schleifleitungsanordnung 67 Daten für das erste Förderfahrzeug 3a bzw. dieselben Schleifleitungen 70 der Schleifleitungsanordnung 68 Daten für das zweite Förderfahrzeug 3b "aufmoduliert". Hierzu sind das Steuerungssystem mit einer Vorrichtung (nicht dargestellt) zur gezielten Modulation der Daten auf den Strom für die Versorgung des ersten Förderfahrzeug 3a bzw. zweiten Förderfahrzeug 3b auf der entsprechenden Führungsbahn und die Steuerelektronik 66a, 66b an jedem Förderfahrzeug 3a, 3b mit einer Vorrichtung (nicht dargestellt) zur Demodulation der Daten aus dem Strom vorsehen.

So können z.B. aufgrund unterschiedlich verwendeter Frequenzen für die Energie sowie die Daten, diese über einen Filter am jeweiligen Förderfahrzeug 3a oder 3b jeweils getrennt voneinander abgenommen werden. Da jedes der Förderfahrzeuge 3a, 3b jeweils nur über eine eigene Schleifleitungsanordnung 67 bzw. 68 mit Energie und Daten versorgt wird, kann so eine sichere Steuerung der einzelnen Förderfahrzeuge 3a, 3b in allen dafür vorgesehenen und dafür ausgerüsteten Regalebenen 16 unabhängig voneinander erfolgen. Damit kann nicht nur eine verbesserte Energieversorgung realisiert werden sondern auch eine fehlerfreie Datenübertragung ausgehend von dem zentralen Steuerungssystem hin zu jedem der einzelnen Förderfahrzeuge 3a, 3b in den jeweiligen Regalebenen 16 erfolgen.

Auf die möglichen Ausführungen der Datenübertragung zwischen dem Steuerungssystem und einem der Förderfahrzeuge 3a, 3b ist in der DE 10 2010 030 998 A1 hingewiesen und kann als Gegenstand dieser Offenbarung herangezogen werden.

Weiteres können die Schleifleitungsanordnungen 67, 68 an den ersten sowie den zweiten Führungsschienen 27, 28 derart angeordnet sein, dass diese jeweils innerhalb eines von der ersten oder der zweiten Führungsschiene 27, 28 umgrenzten äußeren Profilquerschnitts verlaufend angeordnet sind bzw. innerhalb des Profilquerschnitts derselben liegen. Weiteres erstrecken sich die Schleifleitungsanordnungen 67, 68 zumindest über die jeweilige Längserstreckung der einzelnen Führungsschienen 27, 28. Sind mehrere der ersten bzw. der zweiten Führungsschienen 27, 28 in Längserstreckung hintereinander angeordnet, erstrecken sich die Schleifleitungsanordnungen 67, 68 jeweils über deren gesamte Längserstreckung und somit zumindest über den gesamten möglichen Verfahrweg, der den Förderfahrzeugen 3a, 3b zur Verfügung steht.

Bevorzugt ist vorgesehen, dass die erste Schleifleitungsanordnung 67 mit ihren Schleifleitungen 69 sowohl einen ersten Energieversorgungsbus als auch einen ersten Datenbus und die zweite Schleifleitungsanordnung 68 mit ihren Schleifleitungen 70 sowohl einen zweiten Energieversorgungsbus als auch einen zweiten Datenbus ausbilden. Damit können über die Schleifleitungen 69 der ersten Schleifleitungsanordnung 67 sowohl Motor- bzw. Steuerströme als auch Datenübertragungssignale für den Fahrantrieb 65a bzw. die Steuerelektronik 66a des ersten Förderfahrzeugs (3a) übertragen werden. Weiters können unabhängig davon über die Schleifleitungen 70 der zweiten Schleifleitungsanordnung 68 sowohl Motor- bzw. Steuerströme als auch Datenübertragungssignale für den Fahrantrieb 65b bzw. die Steuerelektronik 66b des zweiten Förderfahrzeugs 3b übertragen werden.

Es wäre aber auch möglich, dass über die Schleifleitungsanordnung 67 ausschließlich die Datenversorgung für das erste Förderfahrzeug 3a und über die Schleifleitungsanordnung 68 ausschließlich die Datenversorgung für das zweite Förderfahrzeug 3b erfolgen. In diesem Fall ist das jeweilige Förderfahrzeug 3a, 3b derart ausgestattet, dass es die für seinen Fahrbetrieb mittels Fahrmotor 8a, 8b und Stellantrieb für die Lastaufnahmevorrichtung 11a, 11b zum Transferieren/Umsetzen von Ladegütern 2 zwischen Lagerplatz 17 und Förderfahrzeug 3a, 3b benötigte elektrische Energie vollständig aus einer förderfahrzeugeigenen elektrischen Speichervorrichtung, wie einem Akkumulator, z.B. einem Kondensator, wie einem sogenannten "PowerCap", entnimmt, sodass das Förderfahrzeug 3a, 3b schienenungebunden mit Energie versorgbar ist. Die Nachladung der Speichervorrichtung erfolgt z.B. in unregelmäßigen Zeitintervallen, z.B. gesteuert in Abhängigkeit vom Ladezustand und ggf. zusätzlich in Abhängigkeit von der momentanen Arbeitsanforderung an das Förderfahrzeug 3a, 3b. Die Ladestationen sind z.B. in der Förderfahrzeug-Hebevorrichtung 5 angeordnet, sodass eine Nachladung der Speichervorrichtung stattfindet, wenn sich das Förderfahrzeug 3a, 3b auch der Förderfahrzeug-Hebevorrichtung 5 befindet. Es ist aber möglich, die Ladestationen an anderen Positionen im Regallager 1 anzubringen, z.B. an eigens dafür vorgesehenen Einzelpositionen in den Regalebenen 16 der Regalgasse 15.

Wie bereits zuvor kurz beschrieben, sind die ersten Führungsschienen 27 am ersten Lagerregal 12a und die zweiten Führungsschienen 28 am zweiten Lagerregal 12b befestigt. Die beiden Führungsschienen 27, 28 sind in jeder Regalebene 16 spiegelbildlich bezüglich der Längserstreckung der Regalgasse 15 angeordnet und weisen jeweils die zuvor bereits beschriebenen Profilstege 23a, 23b, Profilflansche 24a, 24b, 25a, 25b sowie Führungsstege 26a, 26b auf. Die unteren Profilflansche 25a, 25b dienen zur Befestigung bzw. Halterung der Schleifleitungsanordnungen 67, 68. Weiters weist das erste Förderfahrzeug 3a eine erste Führungsvorrichtung 9a und das zweite Förderfahrzeug 3b eine zweite Führungsvorrichtung 9b auf, die jeweils auf jener Seite der Förderfahrzeuge 3a, 3b angeordnet sind, welche der jeweiligen Führungsschiene 27, 28 zugewendet ist.

Jede der Schleifleitungsanordnungen 67, 68 umfasst hier jeweils einen elektrischen Isolator, z.B. aus Kunststoff, und maximal zwei durch den Isolator elektrisch voneinander getrennte Schleifleitungen 69; 70, wie in Fig. 6 ersichtlich.

Um eine eindeutige Zuordnung der einzelnen Förderfahrzeuge 3a, 3b zu den jeweiligen ersten bzw. zweiten Führungsschienen 27, 28 und deren daran bzw. darin angeordneten Schleifleitungsanordnungen 67, 68 zu erzielen, sind die Stromabnehmer 71a bzw. 71b jeweils nur an den dafür vorgesehenen Stellen des jeweiligen Förderfahrzeuges 3a, 3b anzubringen. Damit können sogenannte linke bzw. rechte Förderfahrzeuge 3a bzw. 3b geschaffen werden. So kann beispielsweise der Stromabnehmer 71a des ersten Förderfahrzeuges 3a an jener Seite des Förderfahrzeuges 3a angeordnet sein, welche der ersten Führungsschiene 27 mit deren ersten Schleifleitungsanordnung 67 zugewendet ist. Der weitere Stromabnehmer 71b des zweiten Führungsförderfahrzeugs 3b ist hingegen an jener Seite des Förderfahrzeuges 3b angeordnet, welche der zweiten Führungsschiene 28 mit deren zweiten Schleifleitungsanordnung 68 zugewendet ist. Gleiches gilt auch für die zuvor beschriebenen Führungsvorrichtungen 9a, 9b.

Es wird ersichtlich, dass somit das Regallagersystem zwei Typen unterschiedlicher Förderfahrzeuge 3a, 3b verwendet, auch wenn sich dieser Unterschied bloß auf die Anordnung der Stromabnehmer 71a, 71b auf den voneinander abgewandten Seiten der Förderfahrzeuge 3a, 3b bezieht. Der erste Typ Förderfahrzeug 3a (linkes Förderfahrzeug) ist bezüglich der Regalgasse 15 an seiner linken Seite mit dem Stromabnehmer 71a und der zweite Typ Förderfahrzeug 3b (rechtes Förderfahrzeug) ist bezüglich der Regalgasse 15 an seiner rechten Seite mit dem Stromabnehmer 71b versehen.

Diese Unterscheidung wird vom Steuerungssystem getroffen.

Die Förderfahrzeuge 3a, 3b können hierzu jeweils mit zumindest einem maschinenlesbaren Identifikationsträger (z.B. Barcode oder RFID) versehen sein, dessen Daten von einem Lesegerät (z.B. Barcodescanner oder RFID-Reader) ausgelesen werden können.Soll ein Förderfahrzeug 3a, 3b über die Förderfahrzeug-Hebevorrichtung 5 von einer Regalebene 16 auf eine in vertikaler Richtung distanzierte andere Regalebene 16 umgesetzt werden, kann eine falsche Zuteilung eines Förderfahrzeuges 3a, 3b vermieden werden, wenn dem Steuerungssystem bekannt ist, um welchen Typ Förderfahrzeug 3a, 3b es sich handelt. Das Regallagersystem umfasst zumindest ein Initiallesegerät. Zusätzlich oder alternativ kann das Regallagersystem zumindest ein Prüflesegerät aufweisen. Das Initiallesegerät und gegebenenfalls Prüflesegerät ist an das Steuerungssystem angeschlossen.

Grundsätzlich ist es möglich, dass vor Inbetriebnahme des Regallagersystems die Förderfahrzeuge 3a, 3b durch den Identifikationsträger/ Initiallesegerät eindeutig identifiziert und das Steuerungssystem die im Regallagersystem einzusetzenden Förderfahrzeuge 3a, 3b entweder auf den Typ erstes Förderfahrzeug 3a oder Typ zweites Förderfahrzeug 3b zuordnet.

Während des Betriebs kann es sich vorteilhaft erweisen, wenn die Förderfahrzeuge 3a, 3b vor einem Umsetzvorgang von einer Regalebene 16 auf eine in vertikaler Richtung distanzierte andere Regalebene 16 von einem Prüflesegerät nochmals identifiziert werden. Damit wird sichergestellt, dass stets das richtige Förderfahrzeug 3a, 3b (rechtes/linkes Förderfahrzeug) über die Förderfahrzeug-Hebevorrichtung 5 auf die entsprechende Führungsbahn abgegeben wird. Das Prüflesegerät kann beispielsweise an der Förderfahrzeug-Hebevorrichtung 5 oder entlang der Regalgasse 15 angeordnet sein.

Anderenfalls kann im laufenden Betrieb das Steuerungssystem die Fahrbewegungen und Übergabe der linken/rechten Förderfahrzeuge 3a, 3b zwischen den Regalebenen 16 alleinig durch "Datentracking" überwachen. Ein zusätzliches Prüflesegerät kann entfallen. Hierzu wird vorzugsweise ein Materialflussrechner als Steuerungssystem verwendet. Unter "Datentracking" wird verstanden, dass das Steuerungssystem (Materialflussrechner) nach der unverwechselbaren Identifikation eines linken/rechten Förderfahrzeugs 3a, 3b durch die Identifikationsträger/Initiallesegerätanordnung eine laufende "Wegeverfolgung" der Förderfahrzeuge 3a, 3b, wenn sie sich im Regallagersystem bewegen, durchführt. Somit ist dem Steuerungssystem zu jedem Zeitpunkt bekannt, welches der Vielzahl von linken Förderfahrzeugen 3a und Vielzahl von rechten Förderfahrzeugen 3b sich auf welcher Regalebene 16 bzw. auf der Förderfahrzeug-Hebevorrichtung 5 befinden.

Durch die Wahl der jeweils 2-poligen Schleifleitungsanordnungen 67, 68 wird nur ein relativ geringer Einbauraum benötigt. Damit können auch die die Führungsschienen 27, 28 weiterhin in vorteilhafter Weise mit einer sehr geringen Bauhöhe realisiert werden. So kann beispielsweise die Bauhöhe der Führungsschienen 27, 28 in vertikaler Richtung nur 55mm betragen. Ein mögliche Ausbildung derartiger Schleifleitungsanordnungen 67, 68 ist z.B. in der WO 2012/083333 A2 beschrieben.

Durch die getrennte Energieversorgung der einzelnen Förderfahrzeuge 3a, 3b über die voneinander getrennt verlaufenden Schleifleitungsanordnungen 67, 68 können so Spannungsschwankungen bzw. eine Unterversorgung der Förderfahrzeuge 3a, 3b mit Energie vermieden werden.

Eine mögliche Betriebsart, erklärt Anhand der ersten Ausführung (Fig. 1), kann so erfolgen, dass in einer ersten Betriebsphase das erste Förderfahrzeug 3a die Auslager-Bereitstellvorrichtung 43 für das Zwischenpuffern eines oder mehrerer auszulagernder Ladegüter 2 bedient. Das zweite Förderfahrzeug 3b bedient hingegen die Einlager-Bereitstellvorrichtung 44 für das Zwischenpuffern eines oder mehrerer einzulagernder Ladegüter 2.

In einer zweiten Betriebsphase bedienen das erste und das zweite Förderfahrzeug 3a, 3b entweder die Auslager-Bereitstellvorrichtung 43 für das Zwischenpuffern eines oder mehrerer auszulagernder Ladegüter 2 oder die Einlager-Bereitstell-vorrichtung 44 für das Zwischenpuffern eines oder mehrerer einzulagernder Ladegüter 2. Dabei werden die ersten und zweiten Förderfahrzeuge 3a, 3b jeweils über voneinander getrennte Schleifleitungsanordnungen 67, 68 mit jeweils eigenen Schleifleitungen 69, 70 jeweils unabhängig voneinander mit Energie- und/oder Daten versorgt.

Das Umschalten zwischen den Betriebsphasen erfolgt durch das Steuerungssystem und kann z.B. abhängig von einer Leistungsanforderung erfolgen. Soll z.B. die Auslagerleistung erhöht werden, können beide Förderfahrzeuge 3a, 3b die Auslager-Bereitstellvorrichtung bedienen.

Bei einer anderen gewählten Ausführungsform mit gegebenenfalls nur einer Bereitstellvorrichtung 43 oder 44 an einer der Seiten der Ladegut-Hebevorrichtung 34a, 34b oder nur einer der Ladegut-Hebevorrichtungen 34a oder 34b ist es möglich, dass bei einem Einlagervorgang zumindest eines Ladegutes 2 dieses bei der Einlager-Bereitstellvorrichtung 43, 44 oder der ersten Ladegut-Hebevorrichtung 34a in einer der Regalebenen 16 bereitgestellt wird, dort vom ersten Förderfahrzeug 3a übernommen und an einem freien Lagerplatz 17 in der gleichen Regalebene 16 zwischengelagert wird. Anschließend wird dieses dort zwischengelagerte Ladegut 2 vom zweiten Förderfahrzeug 3b übernommen. Dieser freie Lagerplatz 17 dient dann als "Pufferplatz".

Bei einer ersten möglichen Ausführung kann das auf dem Pufferplatz 17 zwischengelagerte Ladegut 2 vom zweiten Förderfahrzeug 3b übernommen werden, anschließend zu dem in dieser gleichen Regalebene 16 vorgesehenen Lagerplatz 17 verbracht und dort abgestellt werden. Während dieses Verfahrvorganges des zweiten Förderfahrzeugs 3b steht das erste Förderfahrzeug 3a schon wieder für einen weiteren, gleichzeig dazu durchführbaren Ein- und/oder Auslagervorgang zur Verfügung.

Unabhängig davon könnte aber mit dem zweiten Förderfahrzeug 3b zuerst das Ladegut 2 übernommen werden und anschließend zu der Förderfahrzeug-Hebevorrichtung 5 verbracht werden. Nachfolgend wird das zweite Förderfahrzeug 3b mit dem darauf aufgenommen Ladegut 2 von der Förderfahrzeug-Hebevorrichtung 5 auf eine dazu andere Regalebene 16 umgesetzt und das Ladegut 2 zu dem in dieser anderen Regalebene 16 vorgesehenen Lagerplatz 17 verbracht sowie dort abgestellt werden. Während dieses Verfahrvorganges steht auch hier wiederum das erste Förderfahrzeug 3a für einen weiteren, gleichzeitig dazu durchführbaren Ein- und/oder Auslagervorgang zur Verfügung.

Dieses Umsetzen von Ladegütern 2 kann z.B. bei sogenannten B- und C- Artikeln durchgeführt werden, wo es auf keine so raschen Ein- bzw. Auslagerzyklen ankommt.

Der Auslagervorgang kann dann in umgekehrter Reihenfolge erfolgen, als dies zuvor beschrieben worden ist. Dabei wird das oder werden die Ladegüter 2 vom Lagerplatz 17 durch das zweite Förderfahrzeug 3b entnommen, anschließend zu dem in dieser oder in einer anderen Regalebene 16 dafür vorgesehenen Pufferplatz verbracht und dort zwischengelagert. Anschließend kann das Ladegut 2 von diesem Pufferplatz vom ersten Förderfahrzeug 3a entnommen und entweder zu einer Bereitstellvorrichtung 43, 44; 72 oder zu einer Ladegut-Hebevorrichtung 34a, 34b verbracht und dort abgegeben werden.

Aufgrund der zuvor bereits detailliert beschriebenen unterschiedlichen Anordnungsmöglichkeiten sowie der auch zueinander unterschiedlichen Ausbildung der Ladegut-Manipulationseinheit 4 können unterschiedliche Abläufe für die Einlagerung und/oder Auslagerung von Ladegütern 2 durchgeführt werden.

Es ist bei einer Ausführungsform (z.B. gemäß der Ausführung nach Fig. 1) möglich, dass die Ladegut-Manipulationseinheit 4 zusätzlich zur ersten Ladegut-Hebevorrichtung 34a die erste Puffervorrichtung 35a mit in Richtung der Regalgasse 15 an einer Seite der ersten Ladegut-Hebevorrichtung 34a und in zumindest einigen der Regalebenen 16 die Auslager-Bereitstellvorrichtungen 43 für das Zwischenpuffern eines oder mehrerer auszulagernder Ladegüter 2 sowie in Richtung der Regalgasse 15 an der anderen Seite der ersten Ladegut-Hebevorrichtung 34a und in zumindest einigen der Regalebenen 16 die Einlager-Bereitstellvorrichtungen 44 für das Zwischenpuffern eines oder mehrerer einzulagernder Ladegüter 2 umfasst. Dabei kann an zumindest einer der Führungsbahnen das erste Förderfahrzeug 3a als auch das zweite Förderfahrzeug 3b derart verfahren werden, dass in einer ersten Betriebsphase das erste Förderfahrzeug 3a die Auslager-Bereitstellvorrichtung 43 für das Zwischenpuffern eines oder mehrerer auszulagernder Ladegüter 2 bedient und das zweite Förderfahrzeug 3b einerseits die Einlager-Bereitstellvorrichtung 44 für das Zwischenpuffern eines oder mehrerer einzulagernder Ladegüter 2 bedient.

In einer zweiten Betriebsphase kann in der Regalebene 16, in welcher sich die Förderfahrzeuge 3a, 3b befinden, das erste Förderfahrzeug 3a die Einlager-Bereitstellvorrichtung 44 für das Zwischenpuffern eines oder mehrerer einzulagernder Ladegüter 2 und das zweite Förderfahrzeug 3b die Auslager-Bereitstellvorrichtung 43 für das Zwischenpuffern eines oder mehrerer auszulagernder Ladegüter 2 bedienen. Anderenfalls kann in der zweiten Betriebsphase in der Regalebene 16, in welcher sich die Förderfahrzeuge 3a, 3b befinden, entweder nur das erste Förderfahrzeug 3a die Einlager-Bereitstellvorrichtung 44 für das Zwischenpuffern eines oder mehrerer einzulagernder Ladegüter 2 oder nur das zweite Förderfahrzeug 3b die Auslager-Bereitstellvorrichtung 43 für das Zwischenpuffern eines oder mehrerer auszulagernder Ladegüter 2 bedienen. Letzteres kann insbesondere dann von Vorteil sein, wenn z.B. eine hohe Auslagerleistung gefordert wird, sodass in dieser Regalebene 16 sowohl das erste Förderfahrzeug 3a als auch das zweite Förderfahrzeug 3b die Auslager-Bereitstellvorrichtung 43 bedienen. Dabei ist ausschließlich sicherzustellen, dass die Förderfahrzeuge 3a, 3b "kollisionsfrei" arbeiten.

Dabei wird vom Steuerungssystem zwischen den Betriebsphasen für die Förderfahrzeuge 3a, 3b umgeschaltet. Ebenso kann das Steuerungssystem die Fahrbewegungen der Förderfahrzeuge 3a, 3b, welche sich auf ein und derselben Regalebene 16 befinden, so steuern bzw. koordinieren, dass diese nicht kollidieren.

Umfasst die Ladegut-Manipulationseinheit 4 beidseits zur Regalgasse 15 eine erste Ladegut-Hebevorrichtung 34a mit einer ersten Puffervorrichtung 35a und eine zweite Ladegut-Hebevorrichtung 34b mit einer zweiten Puffervorrichtung 35b (z.B. gemäß der in Fig. 1 in strichlierten Linien dargestellten Ausführung), können die Auslager-Bereitstellvorrichtungen 43 bzw. Einlager-Bereitstellvorrichtungen 44 der zweiten Puffervorrichtung 35b auf dieselbe Weise über die Förderfahrzeuge 3a, 3b bedient werden, wie bei der ersten Puffervorrichtung 35a.

Es kann bei einer anderen Ausbildung (z.B. gemäß der Ausführung nach Fig. 7) die Ladegut-Manipulationseinheit 4 beidseits zur Regalgasse 15 eine erste Ladegut-Hebevorrichtung 34a mit einer ersten Puffervorrichtung 35a und eine zweite Ladegut-Hebevorrichtung 34b mit einer zweiten Puffervorrichtung 35b umfassen. Dabei weist die erste Puffervorrichtung 35a in Richtung der Regalgasse 15 an einer Seite der ersten Ladegut-Hebevorrichtung 34a und in zumindest einigen der Regalebenen 16 die Auslager-Bereitstellvorrichtungen 43 für das Zwischenpuffern eines oder mehrerer auszulagernder Ladegüter 2 auf. Die zweite Puffervorrich-tung 35b weist in Richtung der Regalgasse 15 an einer Seite der zweiten Ladegut-Hebevorrichtung 34b und in zumindest einigen der Regalebenen 16 die Einlager-Bereitstellvorrichtungen 44 für das Zwischenpuffern eines oder mehrerer einzulagernder Ladegüter 2 auf. Dadurch kann an zumindest einer der Führungsbahnen das erste Förderfahrzeug 3a als auch das zweite Förderfahrzeug 3b derart verfahren werden, dass in einer ersten Betriebsphase das erste Förderfahrzeug 3a die Auslager-Bereitstellvorrichtung 43 für das Zwischenpuffern eines oder mehrerer auszulagernder Ladegüter 2 oder die Einlager-Bereitstellvor-richtung 44 für das Zwischenpuffern eines oder mehrerer einzulagernder Ladegüter 2 bedient. Es kann dabei entweder das einzulagernde Ladegut 2 von der Einlager-Bereitstellvorrichtung 44 zu einem der als Pufferplatz dienenden Lagerplätze 17 oder das auszulagernde Ladegut 2 vom Pufferplatz zur Auslager-Bereitstellvorrichtung 43 transportiert werden. Es kann das zweite Förderfahrzeug 3b unabhängig vom ersten Förderfahrzeug 3a das auszulagernde/einzulagernde Ladegut 2 zwischen dem Pufferplatz und einem vordefinierten Lagerplatz 17 transportieren. In einer zweiten Betriebsphase kann zusätzlich zum ersten Förderfahrzeug 3a auch das zweite Förderfahrzeug 3b die Auslager-Bereitstellvorrichtung 43 für das Zwischenpuffern eines oder mehrerer auszulagernder Ladegüter 2 oder die Einlager-Bereitstellvorrichtung 44 für das Zwischenpuffern eines oder mehrerer einzulagernder Ladegüter 2 bedienen. Dadurch wird es möglich, dass nach einer ersten Ausführung entweder das einzulagernde Ladegut 2 von der Einlager-Bereitstellvorrichtung 44 zu einem der als Pufferplatz dienenden Lagerplätze 17 oder zu einem vordefinierten Lagerplatz 17 transportiert wird. Nach einer zweiten Ausführung kann auch das auszulagernde Ladegut 2 vom Pufferplatz oder vordefinierten Lagerplatz 17 zur Auslager-Bereitstellvorrichtung 43 transportiert werden. Dabei wird vom Steuerungssystem zwischen den Betriebsphasen für die Förderfahrzeuge 3a, 3b umgeschaltet. Ebenso kann das Steuerungssystem die Fahrbewegungen der Förderfahrzeuge 3a, 3b, welche sich auf ein und derselben Regalebene 16 befinden, so steuern bzw. koordinieren, dass diese nicht kollidieren.

Bei einer weiteren Ausführungsform (z.B. gemäß der Ausführung nach Fig. 8) kann die Ladegut-Manipulationseinheit 4 zusätzlich zur ersten Ladegut-Hebevorrichtung 34a die erste Puffervorrichtung 35a mit in Richtung der Regalgasse 15 an einer Seite der ersten Ladegut-Hebevorrichtung 34a und in zumindest einigen der Regalebenen 16 die Bereitstellvorrichtungen 72 für das Zwischenpuffern eines oder mehrerer auszulagernder Ladegüter 2 und/oder einzulagernder Ladegüter 2 aufweisen. Dadurch kann an zumindest einer der Führungsbahnen das erste Förderfahrzeug 3a als auch das zweite Förderfahrzeug 3b derart verfahren werden, dass in einer ersten Betriebsphase das erste Förderfahrzeug 3a die Bereitstellvorrichtung 72 für das Zwischenpuffern eines oder mehrerer auszulagernder Ladegüter 2 oder einzulagernder Ladegüter 2 bedient und entweder das einzulagernde Ladegut 2 von der Einlager-Bereitstellvorrichtung 72 zu einem der als Pufferplatz dienenden Lagerplätze 17 oder das auszulagernde Ladegut 2 vom Pufferplatz zur Auslager-Bereitstellvorrichtung 72 transportiert Die Bereitstellungsvorrichtung 72 dient demnach sowohl einem Einlagervorgang als auch Auslagervorgang. Das zweite Förderfahrzeug 3b kann unabhängig vom ersten Förderfahrzeug 3a das auszulagernde/einzulagernde Ladegut 2 zwischen dem Pufferplatz und einem vordefinierten Lagerplatz 17 transportieren.

In einer zweiten Betriebsphase kann auch das zweite Förderfahrzeug 3b die Bereitstellvorrichtung 72 für das Zwischenpuffern eines oder mehrerer auszulagernder Ladegüter 2 oder einzulagernder Ladegüter 2 bedienen und entweder das einzulagernde Ladegut 2 von der Bereitstellvorrichtung 72 zu einem der als Pufferplatz dienenden Lagerplätze 17 oder einem vordefinierten Lagerplatz 17, oder das auszulagernde Ladegut 2 vom Pufferplatz oder vordefinierten Lagerplatz 17 zur Bereitstellvorrichtung 72 transportieren. Dabei wird vom Steuerungssystem zwischen den Betriebsphasen für die Förderfahrzeuge 3a, 3b umgeschaltet.

Schließlich sei erwähnt, dass die Fahrbewegungen der Förderfahrzeuge 3a, 3b, welche auf den Führungsschienen 27, 28 der gleichen Führungsbahn in einer Regalebene 16 verfahren, derart zu koordinieren sind, dass eine Kollision vermieden wird, selbst wenn sich die Fahrbereiche der Förderfahrzeuge 3a, 3b überschneiden. Dies kann der Fall sein, wenn das Steuerungssystem zwischen der ersten Betriebsphase und zweiten Betriebsphase umschaltet, wie oben ausführlich beschrieben.

Dieser Kollisionsschutz kann entweder durch eine an den Förderfahrzeugen 3a, 3b jeweils angeordnete "interne" Sensorik 73a, 73b (wie in Fig. 9 schematisch in strichlierten Linien eingetragen) und/oder durch ein elektronisches Fahrwegplanungsmodul (Programmlogik) des Steuerungssystems (nicht dargestellt) realisiert werden. Außerdem kann mittels dem Fahrwegplanungsmodul eine Fahrwegoptimierung für die Förderfahrzeuge 3a, 3b erfolgen.

Die Sensorik 73a, 73b ist mit der Steuerelektronik 66a, 66b (Fig. 5) des jeweiligen Förderfahrzeugs 3a, 3b verbunden. Die erste Steuerelektronik 66a des Förderfahrzeugs 3a und zweite Steuerelektronik 66b des Förderfahrzeugs 3a, 3b können jeweils mit dem zentralen Steuerungssystem kommunizieren und Daten in oben beschriebener Weise bidirektional übertragen. Auch ist es möglich, dass die erste Steuerelektronik 66a des Förderfahrzeugs 3a und zweite Steuerelektronik 66b des Förderfahrzeugs 3a, 3b untereinander kommunizieren bzw. die Daten zwischen den Förderfahrzeugen 3a, 3b bidirektional übertragen werden. Die Sensorik 73a, 73b des Förderfahrzeugs 3a, 3b umfasst zumindest eine Abstandmesseinrichtung bzw. Distanzmesseinrichtung, beispielsweise ein opto-elektronisches Messsystem, insbesondere Laser- oder Infrarotmesssystem oder Triangulationssensor und dgl., oder einen Ultraschallsensor. Dadurch kann der Abstand zwischen den Förderfahrzeugen 3a, 3b gemessen und ein Sicherheitsabstand eingehalten werden, wenn sich die Förderfahrzeuge 3a, 3b gegenseitig annähern. Es ist damit möglich, dass mit zunehmender gegenseitiger Annäherung der Förderfahrzeuge 3a, 3b die Fahrantriebe 65a, 65b über das zentrale Steuerungssystem und/oder über die Steuerelektronik 66a, 66b derart gesteuert werden, dass entweder beide Förderfahrzeuge 3a, 3b kontrolliert abgebremst bzw. deren Fahrgeschwindigkeit, insbesondere geregelt reduziert wird oder eines der Förderfahrzeuge 3a, 3b kontrolliert abgebremst bzw. dessen Fahrgeschwindigkeit, insbesondere geregelt reduziert wird. Die Förderfahrzeuge 3a, 3b können sich dabei soweit aufeinander zu bewegen, dass diese gerade nicht kollidieren. Es kann auch vorgesehen werden, dass die Förderfahrzeuge 3a, 3b an ihren einander zugewandten Fahrzeugseiten jeweils mit einem Anschlagelement versehen sind. Die Anschlagelemente sind vorzugsweise aus elastisch nachgiebigem Elastomere, insbesondere Gummi, hergestellte Dämpfungselemente und bilden elastische Gummipuffer.

Die "interne" Sensorik 73a, 73b, beispielweise Infrarotlichtschranken, der Förderfahrzeuge 3a, 3b können auch der Datenversorgung zur Steuerung des Fahrbetriebes der einzelnen Förderfahrzeuge 3a, 3b und des Stellantriebes für die Lastaufnahmevorrichtung 11 dienen. Die Lichtschranken dienen demnach nicht nur der Abstandmessung für die Kollisionsvermeidung, sondern auch der drahtlosen Kommunikationen zwischen den Förderfahrzeugen 3a, 3b und dem Steuerungssystem und/oder drahtlosen Kommunikationen zwischen den Förderfahrzeugen 3a, 3b.

Andererseits kann das Fahrwegplanungsmodul die Fahrbewegungen und/oder Fahrwege der Förderfahrzeuge 3a, 3b abhängig von den Einlageraufträgen und Auslageraufträgen im Voraus derart steuern, dass sich die Fahrbereiche bzw. Fahrwege der Förderfahrzeuge 3a, 3b, welche auf den Führungsschienen 27, 28 der gleichen Führungsbahn in einer Regalebene 16 verfahren, erst gar nicht überschneiden. Optional kann auch die oben beschriebene Sensorik 73a, 73b zusätzlich zum Fahrwegplanungsmodul verwendet werden. In diesem Fall werden die Fahrbewegungen der Förderfahrzeuge 3a, 3b über ein Wegmesssystem ausgewertet. Das Wegmesssystem umfasst eine an das Steuerungssystem angeschlossene Wegmessvorrichtung, beispielweise einen kapazitiven Wegaufnehmer, induktiven Wegaufnehmer, magnetischen Wegaufnehmer oder opto-elektronischen Wegaufnehmer. Dabei macht man sich das Messverfahren der absoluten und inkrementalen Wegmessung zu Nutze. Vorzugsweise ist der Fahrmotor 8a, 8b bzw. Fahrantrieb 65a, 65b mit einem Resolver bzw. Inkrementalgeber (daher einer "internen" Sensorik 74a, 74b an den Förderfahrzeugen 3a, 3b, wie in Fig. 5 schematisch eingetragen) ausgestattet. Mittels der Wegmessvorrichtung können die Istpositionen der Förderfahrzeuge 3a, 3b, welche auf den Führungsschienen 27, 28 der gleichen Führungsbahn in einer Regalebene 16 verfahren, erfasst werden. Die Istpositionen werden dem Fahrwegplanungsmodul entweder über die Schleifleitungsanordnungen 67, 68 oder über die Funkverbindung dem Steuerungssystem, welches das Fahrwegplanungsmodul umfasst, übermittelt. Das Fahrwegplanungsmodul gibt die Sollpositionen für die Förderfahrzeuge 3a, 3b vor. Auch ist ein an sich bekanntes Barcode-Positioniersystem als Wegmessvorrichtung denkbar. Durch einen Soll-Istvergleich im Fahrwegplanungsmodul wird eine Kollision zwischen den Förderfahrzeuge 3a, 3b vermieden.

Weiterhin besteht auch die Möglichkeit, dass das Wegmesssystem ein nicht gezeigtes Positionsortungssystem, insbesondere eine Navigationsvorrichtung in Form von GPS zur Erfassung der Istpositionen der Förderfahrzeuge 3a, 3b ist. Dazu sind die Förderfahrzeuge 3a, 3b mit einer Sende- und/oder Empfangsvorrichtung (nicht gezeigt) und zum anderen das Steuerungssystem mit einer Sende- und/oder Empfangsvorrichtung versehen, über die ein drahtloser Datenaustausch erfolgt.

Grundsätzlich ist es auch möglich, dass eine an sich bekannte "Blockstreckensteuerung" zur Kollisionsvermeidung realisiert wird. Jede der Führungsbahnen, auf welcher gleichzeitig zumindest zwei Förderfahrzeuge 3a, 3b betrieben werden, wird in eine Anzahl von Blockstreckenabschnitten unterteilt. Befinden sich zwei Förderfahrzeuge 3a, 3b auf der Führungsbahn sind zwei oder eine höhere Anzahl von Blockstreckenabschnitten vorhanden, beispielweise drei. Die Förderfahrzeuge 3a, 3b werden gemäß einer ersten Betriebsphase und zweiten Betriebsphase betrieben, daher überschneiden sich die Fahrbereiche der Förderfahrzeuge 3a, 3b. Der erste Blockstreckenabschnitt erstreckt sich entlang den Lagerregalen 12a, 12b und der zweite Blockstreckenabschnitt erstreckt sich entlang der Puffervorrichtung 35a; 35b. Sind beispielweise beidseitig zur Ladegut-Hebevorrichtung 34a; 34b Pufferstreckenabschnitte 41a, 42a; 41b, 42b vorgesehen, wie in Fig. 1 oder Fig. 9 dargestellt, so erstreckt sich der erste Blockstreckenabschnitt entlang den Lagerregalen 12a, 12b, der zweite Blockstreckenabschnitt entlang dem Pufferstreckenabschnitt 42a; 41b und der dritte Blockstreckenabschnitt entlang dem Pufferstreckenabschnitt 41a; 42b. Das Regallagersystem umfasst je Führungsbahn, auf welcher gleichzeitig zumindest zwei Förderfahrzeuge 3a, 3b betrieben werden, eine "externe" Sensorik (nicht dargestellt), welche die Blockstreckenabschnitte definiert. Dabei ist die "externe" Sensorik beispielsweise durch Lichtschranken jeweils an den Enden der Blockstreckenabschnitte, ein Kamerasystem je Blockstreckenabschnitt und dgl., gebildet. Die "externe" Sensorik ist an das Steuerungssystem angeschlossen.

Die Funktionsweise der "Blockstreckensteuerung" wird nun anhand Fig. 9 beschrieben. Befindet sich nun auf einer Führungsbahn im Pufferstreckenabschnitt 41a; 42b entlang dem ersten Blockstreckenabschnitt das erste Förderfahrzeug 3a (erste Betriebsphase) und soll das zweite Förderfahrzeug 3b aus dem zweiten oder dritten Blockstreckenabschnitt in den ersten Blockstreckenabschnitt einfahren, beispielweise für einen Auslagervorgang (zweite Betriebsphase), so muss zuvor das erste Förderfahrzeug 3a den ersten Blockstreckenabschnitt vollständig verlassen haben, ehe das zweite Förderfahrzeug 3b in den ersten Blockstreckenabschnitt einfahren kann. Gleiches gilt, wenn sich im Pufferstreckenabschnitt 42a; 41b entlang dem zweiten Blockstreckenabschnitt das zweite Förderfahrzeug 3b befindet und das erste Förderfahrzeug 3a aus dem ersten oder dritten Blockstreckenabschnitt in den zweiten Block-streckenabschnitt einfahren soll, beispielweise für einen Auslagervorgang (zweite Betriebsphase). Die Anwesenheit des ersten/zweiten Förderfahrzeugs 3a; 3b im ersten/zweiten Blockstreckenabschnitt wird über die "externe" Sensorik erfasst.

Soll beispielweise mit beiden Förderfahrzeugen 3a; 3b eingelagert/ausgelagert werden, daher die Förderfahrzeuge 3a; 3b im dritten Blockstreckenabschnitt Ladegüter 2 in das Regallager 12a, 12b einlagern bzw. aus dem Regallager 12a, 12b auslagern, kann das jeweilige Förderfahrzeug 3a; 3b aus dem ersten/zweiten Blockstreckenabschnitt in den dritten Blockstreckenabschnitt einfahren, wenn das andere Förderfahrzeug 3a; 3b den dritten Blockstreckenabschnitt verlassen hat. Die Anwesenheit des ersten/zweiten Förderfahrzeugs 3a; 3b im dritten Blockstreckenabschnitt wird über die Sensorik erfasst. Bei längeren Fahrbahnen kann der dritte Blockstreckenabschnitt selbstverständlich in mehrere Blockstreckenteilabschnitten unterteilt werden, wobei dann jeder Blockstreckenteilabschnitt eine "externe" Sensorik umfasst.

Allen Ausführungen gemein ist, dass auch nach dem Umschalten zwischen der ersten und zweiten Betriebsphase zwischen den Förderfahrzeugen 3a, 3b, welche auf einer Führungsbahn gleichzeitig betrieben werden, ein Mindestabstand parallel zur Gassenrichtung eingehalten wird.

Abschließend wird noch auf Vorteile/Effekte des Regallagersystems hingewiesen.

Bei langen Regallagern können die Fahrwege der Förderfahrzeuge 3a, 3b deutlich reduziert werden, wie dies insbesondere aus Fig. 9 ersichtlich wird. Außerdem können in jeder Regalebene 16 über das (linke) erste Förderfahrzeug 3a Ladegüter 2 in die bzw. von den (linken) Lagerregalen 12a, 12b auf der linken Seite zur Ladegut-Hebevorrichtung 34a; 34b eingelagert bzw. ausgelagert und über das (rechte) zweite Förderfahrzeug 3b Ladegüter 2 in die bzw. von den (rechten) Lagerregalen 12a, 12b auf der rechten Seite zur Ladegut-Hebevorrichtung 34a; 34b eingelagert bzw. ausgelagert werden, daher die Förderfahrzeuge 3a, 3b unabhängig voneinander auf der rechten bzw. linke Seite bezüglich der Ladegut-Hebevorrichtung 34a; 34b und gleichzeitig im Einlager- und Auslagerbetrieb arbeiten.

Abhängig von der Auftragssituation (Anzahl der Einlager- und Auslagervorgänge) können aber auch beide Förderfahrzeuge 3a, 3b, welche auf den Führungsschienen 27, 28 der gleichen Führungsbahn in einer Regalebene 16 verfahren, Ladegüter 2 wahlweise entweder zwischen dem (linken) Pufferstreckenabschnitt 42a; 41b und den (linken) Lagerregalen 12a, 12b oder zwischen dem (rechten) Pufferstreckenabschnitt 41a; 42b und den (rechten) Lagerregalen 12a, 12b manipulieren (einlagern bzw. auslagern). Dies erfolgt durch das Umschalten zwischen der ersten und zweiten Betriebsphase.

Dadurch können bei einer "chaotischen Lagerung" so genannte "Schieflasten" ausgeglichen werden.

Unter "Schieflasten" versteht man die "ungleichmäßige" Verteilung von Aufträgen für die Förderfahrzeuge 3a, 3b bezüglich den (linken) Lagerregalen 12a, 12b auf der linken Seite zur Ladegut-Hebevorrichtung 34a; 34b und (rechten) Lagerregalen 12a, 12b auf der rechten Seite zur Ladegut-Hebevorrichtung 34a; 34b. So kann beispielweise gemäß Fig. 9 für einen Auslagervorgang von Ladegütern 2 aus den (linken) Lagerregalen 12a, 12b das (linke) zweite Förderfahrzeug 3b "entlastet" werden, wenn auch das (rechte) erste Förderfahrzeug 3a für den Auslagervorgang von Ladegütern 2 aus den (linken) Lagerregalen 12a, 12b herangezogen wird, indem dieses die Ladegut-Hebevorrichtung 34a; 34b passiert und in den Lagerbereich der (linken) Lagerregale 12a, 12b fährt. Gleiches gilt für einen Einlagervorgang von Ladegütern 2 sowie für einen Auslager- oder Einlagervorgang aus/in den/die (linken) Lagerregale 12a, 12b. Mit anderen Worten, können gleichzeitig mehrere Förderfahrzeuge 3a, 3b auch auf nur einer der Seiten relativ zur Ladegut-Hebevorrichtung 34a; 34b eingesetzt werden, daher jener Seite, wo eine verhältnismäßig hohe Anzahl an Aufträgen vorliegt.

Anderenfalls ist bei einer "leistungsoptimierten Lagerung" eine Leistungsanpassung für die Auslager- oder Einlagervorgänge von Ladegütern 2 unterschiedlicher Umschlaghäufigkeit (A-Artikel, B-Artikel, C-Artikel) zwischen den rechten Lagerregalen 12a, 12b und linken Lagerregalen 12a, 12b möglich. So kann gleichzeitig beispielweise das (linke) erste Förderfahrzeug 3a ein Ladegut 2 niedriger Umschlaghäufigkeit (C-Artikel) mit längerem Fahrweg eingelagern bzw. ausgelagern und das (rechte) zweite Förderfahrzeug 3b ein Ladegut 2 höher Umschlaghäufigkeit (A-Artikel) mit kürzerem Fahrweg eingelagern bzw. ausgelagern. Dabei kann beispielweise das (linke) erste Förderfahrzeug 3a ein Ladegut 2 niedriger Umschlaghäufigkeit (C-Artikel) eingelagern bzw. ausgelagern, währenddessen das (rechte) zweite Förderfahrzeug 3b mehrere Ladegüter 2 höher Umschlaghäufigkeit (A-Artikel) nacheinander eingelagern bzw. ausgelagern kann.

Ist eine Förderfahrzeug-Hebevorrichtung 5 optional vorgesehen, können zwischen den Regalebenen 16 ein oder mehrere Förderfahrzeuge 3a, 3b umgesetzt werden, wobei dann in jeder Regalebene 16 noch zumindest ein Förderfahrzeug 3a, 3b verbleibt. Dies kann ebenso abhängig von der Auftragssituation (Anzahl der Einlager- und Auslagervorgänge) erfolgen. Nach dieser Ausführung kann die Leistung sehr einfach skaliert werden.

Mittels Vorgabe der Fahrwege für die Förderfahrzeuge 3a, 3b, welche auf einer Führungsbahnen gleichzeitig betrieben werden, kann eine "logische Trennung" der Fahrwege geschaffen werden. Dies kann durch das Fahrwegplanungsmodul erfolgen. Mit anderen Worten kann beispielweise gemäß der Ausführung in Fig. 1 oder Fig. 9, das erste Förderfahrzeug 3a ausschließlich die Bereitstellvorrichtung 43 und das zweite Förderfahrzeug 3b ausschließlich die Bereitstellvorrichtung 44 bedienen. Es kann aber auch abhängig von der Auftragssituation (Anzahl der Einlager- und Auslagervorgänge) die Bedienweise für die Bereitstellvorrichtung 43, 44 geändert.

Gemäß der Ausführung nach Fig. 9 wäre es auch möglich, dass das (linke) erste Förderfahrzeuge 3a nicht bloß Ladegüter 2 zwischen dem (linken) Pufferstreckenabschnitt 42a; 41b und den (linken) Lagerregalen 12a, 12b manipuliert, sondern auch Ladegüter 2 zwischen dem (linken) Pufferstreckenabschnitt 42a; 41b und den (rechten) Lagerregalen 12a, 12b. Ebenso kann das (rechte) zweite Förderfahrzeuge 3b nicht bloß Ladegüter 2 zwischen dem (rechten) Pufferstreckenabschnitt 41a; 42b und den (rechten) Lagerregalen 12a, 12b manipulieren, sondern auch Ladegüter 2 zwischen dem (rechten) Pufferstreckenabschnitt 41a; 42b und den (linken) Lagerregalen 12a, 12b.

Die Ausführungsbeispiele zeigen mögliche Ausführungsvarianten des Regallagersystems mit dem Regallager 1 sowie der Ladegut-Manipulationseinheit 4, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Die Erfindung beschränkt sich jedenfalls auf die beigefügten Ansprüche. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Vor allem können die einzelnen in den Fig. 1 bis 9 gezeigten Ausführungen den Gegenstand von eigenständigen, erfindungsgemäßen Lösungen bilden.

Der Ordnung halber sei abschließend darauf hingewiesen, dass zum besseren Verständnis des Aufbaus des Regallagersystems mit dem Regallager 1 sowie der Ladegut-Manipulationseinheit 4 dieses bzw. dessen Bestandteile teilweise unmaßstäblich und/oder vergrößert und/oder verkleinert dargestellt wurden.

**Bezugszeichenaufstellung**

| | | | |
|---|---|---|---|
| 1 | Regallager | 31 | Hubantrieb |
| 2 | Ladegut | 32 | Aufnahmevorrichtung |
| 3 | Förderfahrzeug | 33 | Längstraverse |
| 4 | Ladegut-Manipulationseinheit | 34 | Ladegut-Hebevorrichtung |
| 5 | Förderfahrzeug-Hebevorrichtung | 35 | Puffervorrichtung |
| 6 | Grundrahmen | 36 | Transportvorrichtung |
| 7 | Laufrad | 37 | Hubantrieb |
| 8 | Fahrmotor | 38 | Mast |
| 9 | Führungsvorrichtung | 39 | Antriebsmotor |
| 10 | Führungsrad | 40 | Förderrichtung |
| 11 | Lastaufnahmevorrichtung | 41 | Pufferstreckenabschnitt |
| 12 | Lagerregal | 42 | Pufferstreckenabschnitt |
| 13 | Teleskoparm | 43 | Bereitstellvorrichtung |
| 14 | Mitnehmer | 44 | Bereitstellvorrichtung |
| 15 | Regalgasse | 45 | Übernahmeabschnitt |
| 16 | Regalebene | 46 | Übergabeabschnitt |
| 17 | Lagerplatz | 47 | Pufferabschnitt |
| 18 | erste Regallagerseite | 48 | Förderrichtung |
| 19 | zweite Regallagerseite | 49 | Übernahmeabschnitt |
| 20 | vordere Längstraverse | 50 | Übergabeabschnitt |
| 21 | hintere Längstraverse | 51 | Pufferabschnitt |
| 22 | Querträger | 52 | Förderrichtung |
| 23 | Profilsteg | 53 | Umsetzbereich |
| 24 | oberer Profilflansch | 54 | Fördervorrichtung |
| 25 | unterer Profilflansch | 55 | Fördervorrichtung |
| 26 | Führungssteg | 56 | Fördertechnikebene |
| 27 | erste Führungsschiene | 57 | Fördertechnikebene |
| 28 | zweite Führungsschiene | 58 | Förderabschnitt |
| 29 | | 59 | Förderabschnitt |
| 30 | Führungsrahmen | 60 | Umsetzheber |
| 61 | Transportvorrichtung | | |
| 62 | Mast | | |
| 63 | Antriebsmotor | | |
| 64 | | | |
| 65 | Fahrantrieb | | |
| 66 | Steuerelektronik | | |
| 67 | erste Schleifleitungsanordnung | | |
| 68 | zweite Schleifleitungsanordnung | | |
| 69 | Schleifleitung | | |
| 70 | Schleifleitung | | |
| 71 | Stromabnehmer | | |
| 72 | Bereitstellvorrichtung | | |
| 73 | Sensorik | | |
| 74 | Sensorik | | |

## Patentansprüche

1. Automatisches Regallagersystem mit
einem Regallager (1) mit Lagerregalen (12a, 12b), welche in übereinander liegenden Regalebenen (16) Lagerplätze (17) für Ladegüter (2) aufweisen, wobei sich zwischen den Lagerregalen (12a, 12b) eine Regalgasse (15) zumindest zwischen ersten und zweiten Regallagerseiten (18, 19) des Regallagers (1) erstreckt,
einer Ladegut-Manipulationseinheit (4) mit zumindest einer ersten Ladegut-Hebevorrichtung (34a) mit einer ersten heb- und senkbaren Transportvorrichtung (36a) zum Einlagern und/oder Auslagern der Ladegüter (2),
mehreren entlang der Regalgasse (15) in zumindest einigen der Regalebenen (16) verlaufenden Führungsbahnen mit jeweils einer ersten Führungsschiene (27) und einer zweiten Führungsschiene (28), wobei
sich die erste und die zweite Führungsschiene (27, 28) der jeweiligen Führungsbahn bis zu der Ladegut-Manipulationseinheit (4) erstrecken oder die erste und die zweite Führungsschiene (27, 28) an der Ladegut-Manipulationseinheit (4) vorbeilaufen und
zumindest einem ersten Förderfahrzeug (3a) und einem zweiten Förderfahrzeug (3b) zum Transport der Ladegüter (2) zwischen den Lagerregalen (12a, 12b) und der Ladegut-Manipulationseinheit (4), welches zumindest erste und zweite Förderfahrzeug (3a, 3b) auf der jeweiligen Führungsbahn auf deren ersten und zweiten Führungsschiene (27, 28) verfahrbar sind, wobei die Förderfahrzeuge (3a, 3b) jeweils einen Fahrantrieb (65a, 65b) und eine Steuerelektronik (66a, 66b) aufweisen sowie unabhängig voneinander ansteuerbar sind, und
zumindest einer an die erste Ladegut-Hebevorrichtung (34a) angeschlossenen Fördertechnik zum Antransport und Abtransport von Ladegütern (2) zu bzw. von der ersten Ladegut-Hebevorrichtung (34a),
**dadurch gekennzeichnet, dass**
die erste Führungsschiene (27) mit einer ersten Schleifleitungsanordnung (67) und die zweite Führungsschiene (28) mit einer zweiten Schleifleitungsanordnung (68) ausgestattet ist und jede der Schleifleitungsanordnungen (67, 68) eigene Schleifleitungen (69, 70) umfasst, und dass
das erste Förderfahrzeug (3a) zur Energie- und/oder Datenversorgung mit Stromabnehmern (71a) die Schleifleitungen (69) der ersten Schleifleitungsanordnung (67) kontaktiert und das zweite Förderfahrzeug (3b) zur Energie- und/oder Datenversorgung mit Stromabnehmern (71b) die Schleifleitungen (70) der zweiten Schleifleitungsanordnung (68) kontaktiert,
wobei entlang zumindest einer der Führungsbahnen auf deren ersten und zweiten Führungsschiene (27, 28) das erste Förderfahrzeug (3a) und das zweite Förderfahrzeug (3b) gleichzeitig und unabhängig voneinander verfahrbar sind.

2. Regallagersystem nach Anspruch 1, **dadurch gekennzeichnet, dass** jede der Schleifleitungsanordnungen (67, 68) jeweils einen elektrischen Isolator und zwei durch den Isolator elektrisch voneinander getrennte Schleifleitungen (69a, 69b; 70a, 70b) umfasst.

3. Regallagersystem nach Anspruch 1 oder 2, **dadurch gekennzeichnet, dass** die erste Schleifleitungsanordnung (67) mit ihren Schleifleitungen (69) ausschließlich einen ersten Energieversorgungsbus und die zweite Schleifleitungsanordnung (68) mit ihren Schleifleitungen (70) ausschließlich einen zweiten Energieversorgungsbus ausbilden, über welchen ersten Energieversorgungsbus Motor- bzw. Steuerströme für den Fahrantrieb (65a) bzw. die Steuerelektronik (66a) des ersten Förderfahrzeugs (3a) und über welchen zweiten Energieversorgungsbus Motor- bzw. Steuerströme für den Fahrantrieb (65b) bzw. die Steuerelektronik (66b) des zweiten Förderfahrzeugs (3b) übertragbar sind.

4. Regallagersystem nach Anspruch 3, **dadurch gekennzeichnet, dass** die Steuerelektronik (66a) des ersten Förderfahrzeugs (3a) und die Steuerelektronik (66b) des zweiten Förderfahrzeugs (3b) zur bidirektionalen Datenübertragung über ein drahtloses, insbesondere gemeinsames, Kommunikationsnetzwerk, insbesondere ein Funknetzwerk, mit einem zentralen Steuerungssystem verbunden sind.

5. Regallagersystem nach Anspruch 1 oder 2, **dadurch gekennzeichnet, dass** die erste Schleifleitungsanordnung (67) mit ihren Schleifleitungen (69) sowohl einen ersten Energieversorgungsbus als auch einen ersten Datenbus und die zweite Schleifleitungsanordnung (68) mit ihren Schleifleitungen (70) sowohl einen zweiten Energieversorgungsbus als auch einen zweiten Datenbus ausbilden, über welche Schleifleitungen (69) der ersten Schleifleitungsanordnung (67) sowohl Motor- bzw. Steuerströme als auch Datenübertragungssignale für den Fahrantrieb (65a) bzw. die Steuerelektronik (66a) des ersten Förderfahrzeugs (3a) und über welche Schleifleitungen (70) der zweiten Schleifleitungsanordnung (68) sowohl Motor- bzw. Steuerströme als auch Datenübertragungssignale für den Fahrantrieb (65b) bzw. die Steuerelektronik (66b) des zweiten Förderfahrzeugs (3b) übertragbar sind.

6. Regallagersystem nach einem der vorhergehenden Ansprüche, **dadurch gekennzeichnet, dass** die ersten Führungsschienen (27) an einem ersten Lagerregal (12a) und die zweiten Führungsschienen (28) an einem zweiten Lagerregal (12b) befestigt sind, wobei die ersten Führungsschienen (27) jeweils einen dem ersten Lagerregal (12a) zugewandten aufragenden Profilsteg (23a), einen von diesem abgewinkelten oberen Profilflansch (24a) mit einer horizontalen Lauffläche für Laufräder (7) des ersten und zweiten Förderfahrzeugs (3a, 3b), einen vom Profilsteg (23a) abgewinkelten unteren Profilflansch (25a) und einen vom oberen Profilflansch (24a) in Richtung zum unteren Profilflansch (25a) abgewinkelten Führungssteg (26a) mit einer Führungsfläche für eine erste Führungsvorrichtung (9a) des ersten Förderfahrzeugs (3a) und wobei die zweiten Führungsschienen (28) jeweils einen dem zweiten Lagerregal (12b) zugewandten aufragenden Profilsteg (23b), einen von diesem abgewinkelten oberen Profilflansch (24b) mit einer horizontalen Lauffläche für Laufräder (7) des ersten und zweiten Förderfahrzeugs (3a, 3b), einen vom Profilsteg (23b) abgewinkelten unteren Profilflansch (25b) und einen vom oberen Profilflansch (24b) in Richtung zum unteren Profilflansch (25b) abgewinkelten Führungssteg (26b) mit einer Führungsfläche für eine zweite Führungsvorrichtung (9b) des zweiten Förderfahrzeugs (3b) umfassen, wobei die ersten und zweiten Schleifleitungsanordnungen (67, 68) jeweils innerhalb des Profilquerschnitts der ersten Führungsschienen (27) und der zweiten Führungsschienen (28) liegen.

7. Regallagersystem nach einem der vorhergehenden Ansprüche, **dadurch gekennzeichnet, dass** der Stromabnehmer (71a) des ersten Förderfahrzeugs (3a) an jener Seite des Förderfahrzeugs (3a) angeordnet ist, welche der ersten Führungsschiene (27) mit deren ersten Schleifleitungsanordnung (67) zugewendet ist.

8. Regallagersystem nach einem der vorhergehenden Ansprüche, **dadurch gekennzeichnet, dass** der Stromabnehmer (71b) des zweiten Förderfahrzeugs (3b) an jener Seite des Förderfahrzeugs (3b) angeordnet ist, welche der zweiten Führungsschiene (28) mit deren zweiten Schleifleitungsanordnung (68) zugewendet ist.

9. Regallagersystem nach einem der vorhergehenden Ansprüche, **dadurch gekennzeichnet, dass** die Ladegut-Manipulationseinheit (4) die erste Ladegut-Hebevorrichtung (34a) und eine erste Puffervorrichtung (35a) aufweist, welche als Baueinheit außerhalb der Regalgasse (15) angeordnet sind, und dass die erste Puffervorrichtung (35a) in Richtung der Regalgasse (15) an einer der Seiten der ersten Ladegut-Hebevorrichtung (34a) und in zumindest einigen der Regalebenen (16) Bereitstellvorrichtungen (43, 44) für das Zwischenpuffern eines oder mehrerer einzulagernder und/oder auszulagernder Ladegüter (2) umfasst.

10. Regallagersystem nach Anspruch 9, **dadurch gekennzeichnet, dass** die Ladegut-Manipulationseinheit (4) die erste Ladegut-Hebevorrichtung (34a) und eine erste Puffervorrichtung (35a) aufweist, welche als Baueinheit außerhalb der Regalgasse (15) angeordnet sind, und dass die erste Puffervorrichtung (35a) in Richtung der Regalgasse (15) an einer Seite der ersten Ladegut-Hebevorrichtung (34a) und in zumindest einigen der Regalebenen (16) erste Bereitstellvorrichtungen (43) für das Zwischenpuffern eines oder mehrerer einzulagernder und/oder auszulagernder Ladegüter (2) sowie in Richtung der Regalgasse (15) an der anderen Seite der ersten Ladegut-Hebevorrichtung (34a) und in zumindest einigen der Regalebenen (16) zweite Bereitstellvorrichtungen (44) für das Zwischenpuffern eines oder mehrerer einzulagernder und/oder auszulagernder Ladegüter (2) umfasst.

11. Regallagersystem nach Anspruch 9 oder 10, **dadurch gekennzeichnet, dass** die Ladegut-Manipulationseinheit (4) auch eine zweite Ladegut-Hebevorrichtung (34b) mit einer zweiten heb- und senkbaren Transportvorrichtung (36b) zum Einlagern und/oder Auslagern der Ladegüter (2) umfasst.

12. Regallagersystem nach Anspruch 11, **dadurch gekennzeichnet, dass** die Ladegut-Manipulationseinheit (4) die zweite Ladegut-Hebevorrichtung (34b) und eine zweite Puffervorrichtung (35b) aufweist, welche als Baueinheit außerhalb der Regalgasse (15) angeordnet sind, und dass die zweite Puffervorrichtung (35b) an einer der Seiten der zweiten Ladegut-Hebevorrichtung (34b) und in zumindest einigen der Regalebenen (16) Bereitstellvorrichtungen (43, 44) für das Zwischenpuffern eines oder mehrerer einzulagernder und/oder auszulagernder Ladegüter (2) umfasst.

13. Regallagersystem nach Anspruch 12, **dadurch gekennzeichnet, dass** die Ladegut-Manipulationseinheit (4) die zweite Ladegut-Hebevorrichtung (34b) und eine zweite Puffervorrichtung (35b) aufweist, welche als Baueinheit außerhalb der Regalgasse (15) angeordnet sind, und dass die zweite Puffervorrichtung (35b) in Richtung der Regalgasse (15) an einer Seite der zweiten Ladegut-Hebevorrichtung (34b) und in zumindest einigen der Regalebenen (16) erste Bereitstellvorrichtungen (43) für das Zwischenpuffern eines oder mehrerer einzulagernder und/oder auszulagernder Ladegüter (2) sowie in Richtung der Regalgasse (15) an der anderen Seite der zweiten Ladegut-Hebevorrichtung (34b) und in zumindest einigen der Regalebenen (16) zweite Bereitstellvorrichtungen (44) für das Zwischenpuffern eines oder mehrerer einzulagernder und/oder auszulagernder Ladegüter (2) umfasst.

14. Regallagersystem nach einem der vorhergehenden Ansprüche, **dadurch gekennzeichnet, dass** die zumindest erste und/oder die zumindest zweite Ladegut-Hebevorrichtung (34a, 34b) zumindest um eine Gassenbreite voneinander distanziert aufgestellt sind und spiegelbildlich einander gegenüberliegen.

15. Regallagersystem nach einem der Ansprüche 1 bis 14, **dadurch gekennzeichnet, dass** die Ladegut-Manipulationseinheit (4) zwischen den stirnseitigen Regallagerseiten (18, 19) angeordnet und in den Lagerregalen (12a, 12b) intergiert ist.

16. Regallagersystem nach einem der Ansprüche 1 bis 14, **dadurch gekennzeichnet, dass** anschließend an die erste Regallagerseite (18) des Regallagers (1) die Ladegut-Manipulationseinheit (4) angeordnet ist.

17. Regallagersystem nach einem der Ansprüche 1 bis 16, **dadurch gekennzeichnet, dass** anschließend an die zweite Regallagerseite (19) des Regallagers (1) eine Förderfahrzeug-Hebevorrichtung (5) für die Aufnahme von zumindest einem Förderfahrzeug (3a, 3b) angeordnet ist.

18. Verfahren zum Ein- und Auslagern von Ladegütern (2) in einem Regallagersystem umfassend
ein Regallager (1) mit Lagerregalen (12a, 12b), welche in übereinander liegenden Regalebenen (16) Lagerplätze (17) für Ladegüter (2) aufweisen, wobei sich zwischen den Lagerregalen (12a, 12b) eine Regalgasse (15) zumindest zwischen ersten und zweiten Regallagerseite (18, 19) des Regallagers (1) erstreckt,
eine Ladegut-Manipulationseinheit (4) mit zumindest einer ersten Ladegut-Hebevorrichtung (34a) mit einer ersten heb- und senkbaren Transportvorrichtung (36a) zum Einlagern und/oder Auslagern der Ladegüter (2),
mehrere entlang der Regalgasse (15) in zumindest einigen der Regalebenen (16) verlaufende Führungsbahnen mit jeweils einer ersten Führungsschiene (27) und einer zweiten Führungsschiene (28), wobei
sich die erste und die zweite Führungsschiene (27, 28) der jeweiligen Führungsbahn bis zu der Ladegut-Manipulationseinheit (4) erstrecken oder die erste und die zweite Führungsschiene (27, 28) an der Ladegut-Manipulationseinheit (4) vorbeilaufen und
zumindest ein erstes Förderfahrzeug (3a) und ein zweites Förderfahrzeug (3b) zum Transport der Ladegüter (2) zwischen den Lagerregalen (12a, 12b) und der Ladegut-Manipulationseinheit (4), welches zumindest erste und zweite Förderfahrzeug (3a, 3b) auf der jeweiligen Führungsbahn auf deren ersten und zweiten Führungsschiene (27, 28) verfahrbar sind, wobei die Förderfahrzeuge (3a, 3b) jeweils einen Fahrantrieb (65a, 65b) und eine Steuerelektronik (66a, 66b) aufweisen sowie unabhängig voneinander über ein Steuerungssystem ansteuerbar sind, und
eine an die erste Ladegut-Hebevorrichtung (34a) angeschlossene Fördertechnik zum Antransport und Abtransport von Ladegütern (2) zu bzw. von der ersten Ladegut-Hebevorrichtung (34a),
insbesondere unter Verwendung des Regallagersystems nach einem der vorhergehenden Ansprüche,
**dadurch gekennzeichnet, dass**
an zumindest einer der Führungsbahnen das erste Förderfahrzeug (3a) als auch das zweite Förderfahrzeug (3b) verfahren und dabei die Förderfahrzeuge (3a, 3b) jeweils über voneinander getrennte Schleifleitungsanordnungen (67, 68) mit jeweils eigenen Schleifleitungen (69, 70) unabhängig voneinander mit Energie- und/oder Daten versorgt werden.

19. Verfahren nach Anspruch 18, **dadurch gekennzeichnet, dass** die Ladegut-Manipulationseinheit (4) auch eine erste Puffervorrichtung (35a) mit in Richtung der Regalgasse (15) an einer Seite der ersten Ladegut-Hebevorrichtung (34a) und in zumindest einigen der Regalebenen (16) Auslager-Bereitstellvorrichtungen (43) für das Zwischenpuffern eines oder mehrerer auszulagernder Ladegüter (2) sowie in Richtung der Regalgasse (15) an der anderen Seite der ersten Ladegut-Hebevorrichtung (34a) und in zumindest einigen der Regalebenen (16) Einlager-Bereitstellvorrichtungen (44) für das Zwischenpuffern eines oder mehrerer einzulagernder Ladegüter (2) umfasst, wobei an zumindest einer der Führungsbahnen das erste Förderfahrzeug (3a) als auch das zweite Förderfahrzeug (3b) derart verfahren werden, dass in einer ersten Betriebsphase das erste Förderfahrzeug (3a) einerseits die Auslager-Bereitstellvorrichtung (43) für das Zwischenpuffern eines oder mehrerer auszulagernder Ladegüter (2) bedient und das zweite Förderfahrzeug (3b) einerseits die Einlager-Bereitstellvorrichtung (44) für das Zwischenpuffern eines oder mehrerer einzulagernder Ladegüter (2) bedient und in einer zweiten Betriebsphase zumindest eines der Förderfahrzeuge (3a; 3b) andererseits die jeweils andere Auslager-Bereitstellvorrichtung (43) für das Zwischenpuffern eines oder mehrerer auszulagernder Ladegüter (2) oder Einlager-Bereitstellvorrichtung (44) für das Zwischenpuffern eines oder mehrerer einzulagernder Ladegüter (2) bedient, wobei das Steuerungssystem zwischen den Betriebsphasen für die Förderfahrzeuge (3a, 3b) umschaltet.

20. Verfahren nach Anspruch 19, **dadurch gekennzeichnet, dass** in der zweiten Betriebsphase das erste und zweite Förderfahrzeug (3a, 3b) entweder die Auslager-Bereitstellvorrichtung (43) für das Zwischenpuffern eines oder mehrerer auszulagernder Ladegüter (2) oder die Einlager-Bereitstellvorrichtung (44) für das Zwischenpuffern eines oder mehrerer einzulagernder Ladegüter (2) bedienen.

21. Verfahren nach Anspruch 18, **dadurch gekennzeichnet, dass** die Ladegut-Manipulationseinheit (4) beidseits zur Regalgasse (15) eine erste Ladegut-Hebevorrichtung (34a) mit einer ersten Puffervorrichtung (35a) und eine zweite Ladegut-Hebevorrichtung (34b) mit einer zweiten Puffervorrichtung (35b) umfasst, welche erste Puffervorrichtung (35a) in Richtung der Regalgasse (15) an einer Seite der ersten Ladegut-Hebevorrichtung (34a) und in zumindest einigen der Regalebenen (16) Auslager-Bereitstellvorrichtungen (43) für das Zwischenpuffern eines oder mehrerer auszulagernder Ladegüter (2), und welche zweite Puffervorrichtung (35b) in Richtung der Regalgasse (15) an einer Seite der zweiten Ladegut-Hebevorrichtung (34b) und in zumindest einigen der Regalebenen (16) Einlager-Bereitstellvorrichtungen (44) für das Zwischenpuffern eines oder mehrerer einzulagernder Ladegüter (2) aufweisen, wobei an zumindest einer der Führungsbahnen das erste Förderfahrzeug (3a) als auch das zweite Förderfahrzeug (3b) derart verfahren werden, dass
in einer ersten Betriebsphase das erste Förderfahrzeug (3a) die Auslager-Bereitstellvorrichtung (43) für das Zwischenpuffern eines oder mehrerer auszulagernder Ladegüter (2) oder die Einlager-Bereitstellvorrichtung (44) für das Zwischenpuffern eines oder mehrerer einzulagernder Ladegüter (2) bedient und entweder das einzulagernde Ladegut (2) von der Einlager-Bereitstellvorrichtung (44) zu einem der als Pufferplatz dienenden Lagerplätze (17) oder das auszulagernde Ladegut (2) vom Pufferplatz zur Auslager-Bereitstellvorrichtung (43) transportiert und das zweite Förderfahrzeug (3b) unabhängig vom ersten Förderfahrzeug (3a) das auszulagernde/einzulagernde Ladegut (2) zwischen dem Pufferplatz und einem vordefinierten Lagerplatz (17) transportiert, und
in einer zweiten Betriebsphase auch das zweite Förderfahrzeug (3b) die Auslager-Bereitstellvorrichtung (43) für das Zwischenpuffern eines oder mehrerer auszulagernder Ladegüter (2) oder die Einlager-Bereitstellvorrichtung (44) für das Zwischenpuffern eines oder mehrerer einzulagernder Ladegüter (2) bedient und entweder das einzulagernde Ladegut (2) von der Einlager-Bereitstellvorrichtung (44) zu einem der als Pufferplatz dienenden Lagerplätze (17) oder einem vordefinierten Lagerplatz (17), oder das auszulagernde Ladegut (2) vom Pufferplatz oder vordefinierten Lagerplatz (17) zur Auslager-Bereitstellvorrichtung (43) transportiert, wobei das Steuerungssystem zwischen den Betriebsphasen für die Förderfahrzeuge (3a, 3b) umschaltet.

22. Verfahren nach Anspruch 18, **dadurch gekennzeichnet, dass** die Ladegut-Manipulationseinheit (4) auch eine erste Puffervorrichtung (35a) mit in Richtung der Regalgasse (15) an einer Seite der ersten Ladegut-Hebevorrichtung (34a) und in zumindest einigen der Regalebenen (16) Bereitstellvorrichtungen (72) für das Zwischenpuffern eines oder mehrerer auszulagernder Ladegüter (2) und/oder einzulagernder Ladegüter (2) aufweisen, wobei an zumindest einer der Führungsbahnen das erste Förderfahrzeug (3a) als auch das zweite Förderfahrzeug (3b) derart verfahren werden, dass
in einer ersten Betriebsphase das erste Förderfahrzeug (3a) die Bereitstellvorrichtung (72) für das Zwischenpuffern eines oder mehrerer auszulagernder Ladegüter (2) oder einzulagernder Ladegüter (2) bedient und entweder das einzulagernde Ladegut (2) von der Einlager-Bereitstellvorrichtung (72) zu einem der als Pufferplatz dienenden Lagerplätze (17) oder das auszulagernde Ladegut (2) vom Pufferplatz zur Auslager-Bereitstellvorrichtung (72) transportiert und das zweite Förderfahrzeug (3b) unabhängig vom ersten Förderfahrzeug (3a) das auszulagernde/einzulagernde Ladegut (2) zwischen dem Pufferplatz und einem vordefinierten Lagerplatz (17) transportiert, und
in einer zweiten Betriebsphase auch das zweite Förderfahrzeug (3b) die Bereitstellvorrichtung (72) für das Zwischenpuffern eines oder mehrerer auszulagernder Ladegüter (2) oder einzulagernder Ladegüter (2) bedient und entweder das einzulagernde Ladegut (2) von der Bereitstellvorrichtung (72) zu einem der als Pufferplatz dienenden Lagerplätze (17) oder einem vordefinierten Lagerplatz (17), oder das auszulagernde Ladegut (2) vom Pufferplatz oder vordefinierten Lagerplatz (17) zur Bereitstellvorrichtung (72) transportiert, wobei das Steuerungssystem zwischen den Betriebsphasen für die Förderfahrzeuge (3a, 3b) umschaltet.

23. Verfahren nach einem der Ansprüche 18 bis 22, **dadurch gekennzeichnet**, das die Fahrbewegungen der Förderfahrzeuge (3a, 3b) über eine interne und/oder externe Sensorik (73a, 73b; 74a, 74b) und/oder ein elektronisches Fahrwegplanungsmodul derart überwacht werden, dass beim Umschalten zwischen der ersten und zweiten Betriebsphase ein Mindestabstand zwischen den Förderfahrzeugen (3a, 3b), welche auf der jeweiligen Führungsbahn gleichzeitig betrieben werden, eingehalten wird.

## Claims

1. An automatic rack storage system comprising
a storage rack (1) with storage shelves (12a, 12b) having storage spaces (17) for articles (2) in rack stages (16) lying one above the other, wherein a rack aisle (15) extends between the storage shelves (12a, 12b) at least between first and second storage rack sides (18, 19) of the storage rack (1),
an article handling unit (4) having at least a first article elevator device (34a) with a first conveyor device (36a) which can be raised and lowered for storing and/or retrieving articles (2),
several guide tracks running along the rack aisle (15) in at least some of the rack stages (16), each having a first guide rail (27) and a second guide rail (28), wherein
the first and second guide rails (27, 28) of the respective guide track extend as far as the article handling unit (4) or the first and second guide rails (27, 28) run past the article handling unit (4) and
at least a first conveyor vehicle (3a) and a second conveyor vehicle (3b) for conveying the articles (2) between the storage shelves (12a, 12b) and the article handling unit (4), which at least first and second conveyor vehicles (3a, 3b) can be moved on the respective guide track on the first and second guide rails (27, 28) thereof, wherein the conveyor vehicles (3a, 3b) respectively have a drive motor (65a, 65b) and an electronic control unit (66a, 66b) and can be controlled independently of one another, and
at least one conveyor system connected to the first article elevator device (34a) for conveying articles (2) in and out to and/or from the first article elevator device (34a), **characterized in that**
the first guide rail (27) is equipped with a first contact line arrangement (67) and the second guide rail (28) is equipped with a second contact line arrangement (68) and each of the contact line arrangements (67, 68) comprises separate contact lines (69, 70) and that
the first conveyor vehicle (3a) contacts the contact lines (69) of the first contact line arrangement (67) by means of current collectors (71a) to obtain a power and/or data supply and the second conveyor vehicle (3b) contacts the contact lines (70) of the second contact line arrangement (68) by means of current collectors (71b) to obtain a power and/or data supply,
wherein the first conveyor vehicle (3a) and the second conveyor vehicle (3b) can be moved along at least one of the guide tracks on the first and second guide rails (27, 28) thereof simultaneously and independently of one another.

2. The rack storage system according to claim 1, **characterized in that** each of the contact line arrangements (67, 68) respectively comprises an electric isolator and two separate contact lines (69a, 69b; 70a, 70b) electrically isolated from one another by the isolator.

3. The rack storage system according to claim 1 or 2, **characterized in that** the first contact line arrangement (67) with its contact lines (69) exclusively forms a first power supply bus and the second contact line arrangement (68) with its contact lines (70) exclusively forms a second power supply bus, via which first power supply bus motor and/or control currents for the drive motor (65a) and/or electronic control unit (66a) of the first conveyor vehicle (3a) can be transmitted and via which second power supply bus motor and/or control currents for the drive motor (65b) and/or electronic control unit (66b) of the second conveyor vehicle (3b) can be transmitted.

4. The rack storage system according to claim 3, **characterized in that** the electronic control unit (66a) of the first conveyor vehicle (3a) and the electronic control unit (66b) of the second conveyor vehicle (3b) are connected to a central control system via a wireless, in particular common, communication network, in particular a radio network, to enable a two-way data transmission.

5. The rack storage system according to claim 1 or 2, **characterized in that** the first contact line arrangement (67) with its contact lines (69) forms both a first power supply bus and a first data bus and the second contact line arrangement (68) with its contact lines (70) forms both a second power supply bus and a second data bus, via which contact lines (69) of the first contact line arrangement (67) both motor and/or control currents as well as data transmission signals for the drive motor (65a) and/or electronic control unit (66a) of the first conveyor vehicle (3a) can be transmitted and via which contact lines (70) of the second contact line arrangement (68) both motor and/or control currents as well as data transmission signals for the drive motor (65b) and/or electronic control unit (66b) of the second conveyor vehicle (3b) can be transmitted.

6. The rack storage system according to one of the preceding claims, **characterized in that** the first guide rails (27) are secured to a first shelf (12a) and the second guide rails (28) are secured to a second shelf (12b), wherein the first guide rails (27) respectively comprise a projecting web (23a) facing the first shelf (12a), a top flange (24a) disposed at an angle with respect to the latter having a horizontal running surface for running wheels (7) of the first and second conveyor vehicles (3a, 3b), a bottom flange (25a) disposed at an angle to the web (23a) and a guide web (26a) extending at an angle from the top flange (24a) in the direction towards the bottom flange (25a) with a guide surface for a first guide device (9a) of the first conveyor vehicle (3a) and wherein the second guide rails (28) respectively comprise a projecting web (23b) facing the second shelf (12b), a top flange (24b) disposed at an angle with respect to the latter having a horizontal running surface for running wheels (7) of the first and second conveyor vehicles (3a, 3b), a bottom flange (25b) disposed at an angle to the web (23b) and a guide web (26b) extending at an angle from the top flange (24b) in the direction towards the bottom flange (25b) with a guide surface for a second guide device (9b) of the second conveyor vehicles (3b), wherein the first and second contact line arrangements (67, 68) respectively lie inside the profiled cross-section of the first guide rails (27) and the second guide rails (28).

7. The rack storage system according to one of the preceding claims, **characterized in that** the current collector (71a) of the first conveyor vehicle (3a) is disposed on that side of the conveyor vehicle (3a) which faces the first guide rail (27) with its first contact line arrangement (67).

8. The rack storage system according to one of the preceding claims, **characterized in that** the current collector (71b) of the second conveyor vehicle (3b) is disposed on that side of the conveyor vehicle (3b) which faces the second guide rail (28) with its second contact line arrangement (68).

9. The rack storage system according to one of the preceding claims, **characterized in that** the article handling unit (4) comprises the first article elevator device (34a) and a first buffer device (35a) which are disposed outside the rack aisle (15) as a unit, and that the first buffer device (35a) comprises waiting devices (43, 44) in the direction of the rack aisle (15) on one of the sides of the first article elevator device (34a) and in at least some of the rack stages (16) for buffering one or more articles to be stored and/or retrieved (2).

10. The rack storage system according to claim 9, **characterized in that** the article handling unit (4) comprises the first article elevator device (34a) and a first buffer device (35a) which are disposed outside the rack aisle (15) as a unit and that the first buffer device (35a) comprises first waiting devices (43) in the direction of the rack aisle (15) on one side of the first article elevator device (34a) and in at least some of the rack stages (16) for buffering one or more articles to be stored and/or retrieved (2) as well as second waiting devices (44) in the direction of the rack aisle (15) on the other side of the first article elevator device (34a) and in at least some of the rack stages (16) for buffering one or more articles to be stored and/or retrieved (2).

11. The rack storage system according to claim 9 or 10, **characterized in that** the article handling unit (4) further comprises a second article elevator device (34b) with a second conveyor device (36b) which can be raised and lowered for storing and/or retrieving articles (2).

12. The rack storage system according to claim 11, **characterized in that** the article handling unit (4) comprises the second article elevator device (34b) and a second buffer device (35b) which are disposed outside the rack aisle (15) as a unit and that the second buffer device (35b) comprises waiting devices (43, 44) on one of the sides of the second article elevator device (34b) and in at least some of the rack stages (16) for buffering one or more articles to be stored and/or retrieved (2).

13. The rack storage system according to claim 12, **characterized in that** the article handling unit (4) comprises the second article elevator device (34b) and a second buffer device (35b) which are disposed outside the rack aisle (15) as a unit and that the second buffer device (35b) comprises first waiting devices (43) in the direction of the rack aisle (15) on one side of the second article elevator device (34b) and in at least some of the rack stages (16) for buffering one or more articles to be stored and/or retrieved (2) as well as second waiting devices (44) in the direction of the rack aisle (15) on the other side of the second article elevator device (34b) and in at least some of the rack stages (16) for buffering one or more articles to be stored and/or retrieved (2).

14. The rack storage system according to one of the preceding claims, **characterized in that** the at least first and/or the at least second article elevator device (34a, 34b) are installed spaced apart from one another by at least an aisle width and lie opposite one another in mirror image.

15. The rack storage system according to one of claims 1 to 14, **characterized in that** the article handling unit (4) is disposed between the front storage rack sides (18, 19) and is integrated in the storage shelves (12a, 12b).

16. The rack storage system according to one of claims 1 to 14, **characterized in that** the article handling unit (4) is disposed adjoining the first storage rack side (18) of the storage rack (1).

17. The rack storage system according to one of claims 1 to 16, **characterized in that** a conveyor vehicle-elevator (5) for accommodating at least one conveyor vehicle (3a, 3b) is disposed adjoining the second storage rack side (19) of the storage rack (1).

18. A method of storing and retrieving articles (2) from a rack storage system comprising a storage rack (1) with storage shelves (12a, 12b) having storage spaces (17) for articles (2) in rack stages (16) lying one above the other, wherein a rack aisle (15) extends between the storage shelves (12a, 12b) at least between first and second storage rack sides (18, 19) of the storage rack (1),
an article handling unit (4) having at least a first article elevator device (34a) with a first conveyor device (36a) which can be raised and lowered for storing and/or retrieving articles (2),
several guide tracks running along the rack aisle (15) in at least some of the rack stages (16), each having a first guide rail (27) and a second guide rail (28),
the first and second guide rails (27, 28) of the respective guide track extend as far as the article handling unit (4) or the first and second guide rails (27, 28) run past the article handling unit (4) and
at least a first conveyor vehicle (3a) and a second conveyor vehicle (3b) for conveying the articles (2) between the storage shelves (12a, 12b) and the article handling unit (4), which at least first and second conveyor vehicles (3a, 3b) can be moved on the respective guide track on the first and second guide rails (27, 28) thereof, wherein the conveyor vehicles (3a, 3b) respectively have a drive motor (65a, 65b) and an electronic control unit (66a, 66b) and can be controlled independently of one another via a control system, and
a conveyor system connected to the first article elevator device (34a) for conveying articles (2) in and out to and/or from the first article elevator device (34a),
in particular using the rack storage system according to one of the preceding claims, **characterized in that**
the first conveyor vehicle (3a) and the second conveyor vehicle (3b) move on at least one of the guide tracks and as they do so, the conveyor vehicles (3a, 3b) are supplied with power and/or data independently of one another by means of mutually separate contact line arrangements (67, 68) each having respectively separate contact lines (69, 70).

19. The method according to claim 18, **characterized in that** the article handling unit (4) further comprises a first buffer device (35a) with retrieval waiting devices (43) in the direction of the rack aisle (15) on one side of the first article elevator device (34a) and in at least some of the rack stages (16) for buffering one or more articles to be retrieved (2) and storage waiting devices (44) in the direction of the rack aisle (15) on the other side of the first article elevator device (34a) and in at least some of the rack stages (16) for buffering one or more articles (2) to be stored, wherein the first conveyor vehicle (3a) and the second conveyor vehicle (3b) are moved on at least one of the guide tracks in such a way that in a first operating phase, the first conveyor vehicle (3a) firstly serves the retrieval waiting device (43) for buffering one or more articles to be retrieved (2) and the second conveyor vehicle (3b) firstly serves the storage waiting device (44) for buffering one or more articles (2) to be stored and in a second operating phase at least one of the conveyor vehicles (3a; 3b) secondly serves the other respective retrieval waiting device (43) for buffering one or more articles (2) to be retrieved or storage waiting device (44) for buffering one or more articles (2) to be stored, wherein the control system switches between the operating phases for the conveyor vehicles (3a, 3b).

20. The method according to claim 19, **characterized in that** in the second operating phase, the first and second conveyor vehicle (3a, 3b) either serve the retrieval waiting device (43) for buffering one or more articles (2) to be retrieved or the storage waiting device (44) for buffering one or more articles (2) to be stored.

21. The method according to claim 18, **characterized in that** the article handling unit (4) comprises a first article elevator device (34a) having a first buffer device (35a) and a second article elevator device (34b) having a second buffer device (35b) on both sides of the rack aisle (15), which first buffer device (35a) comprises retrieval waiting devices (43) in the direction of the rack aisle (15) on one side of the first article elevator device (34a) and in at least some of the rack stages (16) for buffering one or more articles to be retrieved (2) and which second buffer device (35b) comprises storage waiting devices (44) in the direction of the rack aisle (15) on one side of the second article elevator device (34b) and in at least some of the rack stages (16) for buffering one or more articles (2) to be stored, wherein the first conveyor vehicle (3a) and the second conveyor vehicle (3b) are moved on at least one of the guide tracks in such a way that in a first operating phase, the first conveyor vehicle (3a) serves the retrieval waiting device (43) for buffering one or more articles (2) to be retrieved or the storage waiting device (44) for buffering one or more articles (2) to be stored and conveys the article (2) to be stored either from the storage waiting device (44) to one of the storage spaces (17) serving as a buffer space or conveys the article (2) to be retrieved from the buffer space to the retrieval waiting device (43) and the second conveyor vehicle (3b), independently of the first conveyor vehicle (3a), conveys the article (2) to be retrieved/stored between the buffer space and a predefined storage space (17), and
in a second operating phase, the second conveyor vehicle (3b) also serves the retrieval waiting device (43) for buffering one or more articles (2) to be retrieved or the storage waiting device (44) for buffering one or more articles (2) to be stored and either conveys the article (2) to be stored from the storage waiting device (44) to one of the storage spaces (17) serving as a buffer space or a predefined storage space (17) or conveys the article (2) to be retrieved from the buffer space or predefined storage space (17) to the retrieval waiting device (43), wherein the control system switches between the operating phases for the conveyor vehicles (3a, 3b).

22. The method according to claim 18, **characterized in that** the article handling unit (4) also comprises a first buffer device (35a) having waiting devices (72) in the direction of the rack aisle (15) on one side of the first article elevator device (34a) and in at least some of the rack stages (16) for buffering one or more articles (2) to be retrieved and/or articles (2) to be stored, wherein the first conveyor vehicle (3a) and also the second conveyor vehicle (3b) are moved on at least one der guide tracks in such a way that in a first operating phase, the first conveyor vehicle (3a) serves the waiting device (72) for buffering one or more articles (2) to be retrieved or articles (2) to be stored and either conveys the article (2) to be stored from the storage waiting device (72) to one of the storage spaces (17) serving as a buffer space or conveys the article (2) to be retrieved from the buffer space to the retrieval waiting device (72) and the second conveyor vehicle (3b), independently of the first conveyor vehicle (3a), conveys the article (2) to be retrieved/stored between the buffer space and a predefined storage space (17) and in a second operating phase, the second conveyor vehicle (3b) also serves the waiting device (72) for buffering one or more articles (2) to be retrieved or articles (2) to be stored and either conveys the article (2) to be stored from the waiting device (72) to one of the storage spaces (17) serving as a buffer space or a predefined storage space (17) or conveys the article (2) to be retrieved from the buffer space or predefined storage space (17) to the waiting device (72), wherein the control system switches between the operating phases for the conveyor vehicles (3a, 3b).

23. The method according to one of claims 18 to 22, **characterized in that** the movements of the conveyor vehicles (3a, 3b) are monitored by means of an internal and/or external sensor system (73a, 73b; 74a, 74b) and/or an electronic route planning module in such a way that when switching between the first and second operating phase, a minimum distance is maintained between the conveyor vehicles (3a, 3b) operating simultaneously on a respective guide track.

## Revendications

1. Système de stockage à rayonnages avec
un stockage à rayonnages (1) avec des rayonnages de stockage (12a, 12b) qui présentent, sur des plans de rayonnages superposés (16), des emplacements de stockage (7) pour des marchandises (2), une allée de rayonnages (15) s'étendant entre les rayonnages de stockage (12a, 12b), au moins entre des premiers et des deuxième côtés de stockage à rayonnages (18, 19) du stockage à rayonnages (1),
une unité de manipulation de marchandises (4) avec au moins un dispositif de levage de marchandises (34a) avec un premier dispositif de transport (36a) pouvant être levé et baissé, pour le stockage et/ou le déstockage des marchandises (2),
plusieurs pistes de guidage s'étendant le long de l'allée de rayonnages (15) dans au moins certains des plans de rayonnages (16), avec chacune une premier rail de guidage (27) et un deuxième rail de guidage (28),
le premier et le deuxième rails de guidage (27, 28) de la piste de guidage s'étendant jusqu'à l'unité de manipulation de marchandises (4) et le premier et le deuxième rails de guidage (27, 28) passant devant l'unité de manipulation de marchandises (4) et
au moins un premier chariot de manutention (3a) et un deuxième chariot de manutention (3b) pour le transport des marchandises (2) entre les rayonnages de stockage (12a, 12b) et l'unité de manipulation des marchandises (4), ces premier et deuxième chariots de manutention (3a, 3b) étant mobiles sur la piste de guidage, sur ses premier et deuxième rails de guidage (27, 28), les chariots de manutention (3a, 3b) comprenant chacun un dispositif d'entraînement (65a, 65b) et une électronique de commande (66a, 66b) et pouvant être commandés indépendamment l'un de l'autre et
au moins un système de convoyage connecté au premier dispositif de levage de marchandises (34a), pour l'introduction et l'évacuation de marchandises (2) vers ou hors du premier dispositif de levage de marchandises (34a),
**caractérisé en ce que**
le premier rail de guidage (27) est équipé d'un premier dispositif à lignes d'alimentation (67) et le deuxième rail de guidage (28) est équipé d'un deuxième dispositif à lignes d'alimentation (68) et chacun des dispositifs à lignes d'alimentation (67, 68) comprend ses propres lignes d'alimentation (69, 70) et **en ce que**
le premier chariot de manutention (3a) entre en contact, pour l'alimentation en énergie et/ou en données, avec des consommateurs de courant (71a), avec les lignes
d'alimentation (69) du premier dispositif à lignes d'alimentation (67) et le deuxième chariot de manutention (3b) entre en contact, pour l'alimentation en énergie et/ou en données, avec des consommateurs de courant (71b), avec les lignes d'alimentation (70) du deuxième dispositif à lignes d'alimentation (68),
le premier chariot de manutention (3a) et le deuxième chariot de manutention (3b) pouvant être déplacés en même temps et indépendamment l'un de l'autre le long d'au moins une des pistes de guidage, sur ses premier et deuxième rails de guidage (27, 28).

2. Système de stockage à rayonnages selon la revendication 1, **caractérisé en ce que** chacun des dispositifs à lignes d'alimentation (67, 68) comprend un isolateur électrique et deux lignes d'alimentation (69a, 69b ; 70a, 70b) séparées électriquement l'une de l'autre par l'isolateur.

3. Système de stockage à rayonnages selon la revendication 1 ou 2, **caractérisé en ce que** le premier dispositif à lignes d'alimentation (67) constitue, avec ses lignes d'alimentation (69), exclusivement un premier bus d'alimentation en énergie et le deuxième dispositif à lignes d'alimentation (68) constitue, avec ses lignes d'alimentation (70), exclusivement un deuxième bus d'alimentation en énergie, des courants de moteur ou de commande pour le dispositif d'entraînement (65a) ou l'électronique de commande (66a) du premier chariot de manutention (3a) pouvant être transmis par le premier bus d'alimentation en énergie et des courants de moteur ou de commande pour le dispositif d'entraînement (65b) ou l'électronique de commande (66b) du deuxième chariot de manutention (3b) pouvant être transmis par le deuxième bus d'alimentation en énergie.

4. Système de stockage à rayonnages selon la revendication 3, **caractérisé en ce que**
l'électronique de commande (66a) du premier chariot de manutention (3a) et
l'électronique de commande (66b) du deuxième chariot de manutention (3b) sont reliées, pour une transmission bidirectionnelle des données, par l'intermédiaire d'un réseau de communication sans fil, de préférence commun, plus particulièrement un réseau radio, avec un système de commande central.

5. Système de stockage à rayonnages selon la revendication 1 ou 2, **caractérisé en ce que** le premier dispositif à lignes d'alimentation (67) constitue, avec ses lignes d'alimentation (69), aussi bien un premier bus d'alimentation en énergie qu'un premier bus de données et le deuxième dispositif à lignes d'alimentation (68) constitue, avec ses lignes d'alimentation (70), aussi bien un deuxième bus d'alimentation en énergie qu'un deuxième bus de données, des courants de moteur ou de commande ainsi que des signaux de transmission de données pour le dispositif d'entraînement (65a) ou l'électronique de commande (66a) du premier chariot de manutention (3a) pouvant être transmis par les lignes d'alimentation (69) du premier dispositif à lignes d'alimentation (67) et des courants de moteur ou de commande ainsi que des signaux de transmission de données pour le dispositif d'entraînement (65b) ou l'électronique de commande (66b) du deuxième chariot de manutention (3b) pouvant être transmis par les lignes d'alimentation (70) du deuxième dispositif à lignes d'alimentation (68).

6. Système de stockage à rayonnages selon l'une des revendications précédentes, **caractérisé en ce que** les premiers rails de guidage (27) sont fixés à un premier rayonnage de stockage (12a) et les deuxièmes rails de guidage (28) sont fixés à un deuxième rayonnage de stockage (12b), les premiers rails de guidage (27) comprenant chacun une nervure profilée en saillie (23a) orientée vers le premier rayonnage de stockage (12a), une bride profilée supérieure (24a) inclinée par rapport à celle-ci, avec une surface de roulement horizontale pour des roues (7) du premier et du deuxième chariots de manutention (3a, 3b), une bride profilée inférieure (25a), inclinée par rapport à la nervure profilée (23a) et une nervure de guidage (26a), inclinée par rapport à la bride profilée supérieure (24a) en direction de la bride profilée inférieure (25a), avec une surface de guidage pour un premier dispositif de guidage (9a) du premier chariot de manutention (3a) et les deuxièmes rails de guidage (28) comprenant chacun une nervure profilée en saillie (23b) orientée vers le deuxième rayonnage de stockage (12b), une bride profilée supérieure (24b), inclinée par rapport à celle-ci, avec une surface de roulement pour des roues (7) du premier et du deuxième chariots de manutention (3a, 3b), une bride profilée inférieure (25b), inclinée par rapport à la nervure profilée (23b) et une nervure profilée (26b), inclinée par rapport à la bride profilée supérieure (24b) en direction de la bride profilée inférieure (25b), avec une surface de guidage pour un deuxième dispositif de guidage (9b) du deuxième chariot de manutention (3b), les premier et deuxième dispositifs à lignes d'alimentation (67, 68) se trouvant chacun à l'intérieur de la section profilée des premiers rails de guidage (27) et des deuxièmes rails de guidage (28).

7. Système de stockage à rayonnages selon l'une des revendications précédentes, **caractérisé en ce que** le consommateur de courant (71a) du premier chariot de manutention (3a) est disposé sur le côté du chariot de manutention (3a) qui est orienté vers le premier rail de guidage (27) avec son premier dispositif à lignes d'alimentation (67).

8. Système de stockage à rayonnages selon l'une des revendications précédentes, **caractérisé en ce que** le consommateur de courant (71b) du deuxième chariot de manutention (3b) est disposé sur le côté du chariot de manutention (3b) qui est orienté vers le deuxième rail de guidage (28) avec son deuxième dispositif à lignes d'alimentation (68).

9. Système de stockage à rayonnages selon l'une des revendications précédentes, **caractérisé en ce que** l'unité de manipulation de marchandises (4) comprend le premier dispositif de levage de marchandises (34a) et un premier dispositif de tampon (35a), qui sont disposés en tant que sous-ensemble à l'extérieur de l'allée de rayonnages (15) et **en ce que** le premier dispositif tampon (35a) comprend, en direction de l'allée de rayonnages (15), sur un des côtés du premier dispositif de levage de marchandises (34a) et dans au moins certains des plans de rayonnages (16), des dispositifs de mise à disposition (43, 44) pour l'entreposage d'une ou de plusieurs marchandises (2) à stocker et/ou à déstocker.

10. Système de stockage à rayonnages selon la revendication 9, **caractérisé en ce que** l'unité de manipulation de marchandises (4) comprend le premier dispositif de levage de marchandises (34a) et un premier dispositif tampon (35a), qui sont disposés en tant que sous-ensemble à l'extérieur de l'allée de rayonnages (15) et **en ce que** le premier dispositif tampon (35a) comprend, en direction de l'allée de rayonnages (15), sur un côté du premier dispositif de levage de marchandises (34a) et dans au moins certains des plans de rayonnages (16), des premiers dispositifs de mise à disposition (43) pour l'entreposage d'une ou de plusieurs marchandises (2) à stocker et/ou à déstocker ainsi que, dans la direction de l'allée de rayonnages (15), sur l'autre côté du premier dispositif de levage de marchandises (34a) et dans au moins certains des plans de rayonnages (16), des deuxièmes dispositifs de mise à disposition (44) pour l'entreposage d'une ou de plusieurs marchandises (2) à stocker et/ou à déstocker.

11. Système selon la revendication 9 ou 10, **caractérisé en ce que** l'unité de manipulation de marchandises (4) comprend également un deuxième dispositif de levage de marchandises (34b) avec un deuxième dispositif de transport (36b), pouvant être levé et baissé, pour le stockage et/ou le déstockage des marchandises (2).

12. Système de stockage à rayonnages selon la revendication 11, **caractérisé en ce que** l'unité de manipulation de marchandises (4) comprend le deuxième dispositif de levage de marchandise (34b) et un deuxième dispositif tampon (35b), qui sont disposés en tant que sous-ensemble à l'extérieur de l'allée de rayonnages (15) et **en ce que** le deuxième dispositif tampon (35b) comprend, au niveau d'un des côtés du deuxième dispositif de levage de marchandises (34b) et dans au moins certains des plans de rayonnages (16), des dispositifs de mise à disposition (43, 44) pour l'entreposage d'une ou de plusieurs marchandises (2) à stocker et/ou à déstocker.

13. Système de stockage à rayonnages selon la revendication 12, **caractérisé en ce que** l'unité de manipulation de marchandises (4) comprend le deuxième dispositif de levage de marchandise (34b) et un deuxième dispositif tampon (35b), qui sont disposés en tant que sous-ensemble à l'extérieur de l'allée de rayonnages (15) et **en ce que** le deuxième dispositif tampon (35b) comprend, en direction de l'allée de rayonnages (15), sur un côté du deuxième dispositif de levage de marchandise (34b) et dans au moins certains des plans de rayonnages (16), des premiers dispositifs de mise à disposition (43) pour l'entreposage d'une ou de plusieurs marchandises (2) à stocker et/ou à déstocker ainsi que, en direction de l'allée de rayonnages (15), sur l'autre côté deuxième dispositif de levage de marchandise (34b) et dans au moins certains des plans de rayonnages (16), des deuxièmes dispositifs de mise à disposition (44) pour l'entreposage d'une ou de plusieurs marchandises (2) à stocker et/ou à déstocker.

14. Système de stockage à rayonnages selon l'une des revendications précédentes, **caractérisé en ce que** l'au moins premier et/ou l'au moins deuxième dispositif de levage de marchandises (34a, 34b) sont disposés de manière à être écartés entre eux d'au moins une largeur d'allée et sont disposés de manière symétrique entre eux.

15. Système de stockage à rayonnages selon l'une des revendications 1 à 14, **caractérisé en ce que** l'unité de manipulation de marchandises (4) est disposée entre les côtés frontaux du stockage à rayonnages (18, 19) et est intégrée dans les rayonnages de stockage (12a, 12b).

16. Système de stockage à rayonnages selon l'une des revendications 1 à 14, **caractérisé en ce que** l'unité de manipulation de marchandises (4) est disposée dans le prolongement du premier côté (18) du stockage à rayonnages (1).

17. Système de stockage à rayonnages selon l'une des revendications 1 à 16, **caractérisé en ce que**, dans le prolongement du deuxième côté (19) du stockage à rayonnages (1), est disposé un dispositif de levage de chariot de manutention (5) pour le logement d'au moins un chariot de manutention (3a, 3b).

18. Procédé de stockage et de déstockage de marchandises (2) dans un système de stockage à rayonnages comprenant:
un stockage à rayonnages (1) avec des rayonnages de stockage (12a, 12b), qui comprennent dans des plans de rayonnages superposés (16), des emplacements de stockage (17) pour des marchandises (2), une allée de rayonnages (15) s'étendant entre les rayonnages de stockage (12a, 12b) au moins entre une premier et un deuxième côtés (18, 19) du stockage à rayonnages (1),
une unité de manipulation de marchandises (4) avec au moins un premier dispositif de levage de marchandises (34a) avec un dispositif de transport (36a), pouvant être levé et baissé, pour le stockage et/ou le déstockage des marchandises (2),
plusieurs pistes de guidage s'étendant le long de l'allée de rayonnages (15) dans au moins certains des plans de rayonnages (16) avec chacun un premier rail de guidage (27) et un deuxième rail de guidage (28),
le premier et le deuxième rails de guidage (27, 28) de la piste de guidage s'étendant jusqu'à l'unité de manipulation de marchandises (4) ou le premier et le deuxième rails de guidage (27, 28) passant devant l'unité de manipulation de marchandises (4) et au moins un premier chariot de manutention (3a) et un deuxième chariot de manutention (3b) pour le transport des marchandises (2) entre les rayonnages de stockage (12a, 12b) et l'unité de manipulation de marchandises (4), ces premiers et deuxième chariots de manutention (3a, 3b) étant mobiles sur la piste de guidage, sur ses premier et deuxième rails de guidage (27, 28), les chariots de manutention (3a, 3b) comprenant chacun un dispositif d'entraînement (65a, 65b) et une électronique de commande (66a, 66b) et pouvant être commandés indépendamment l'un de l'autre par l'intermédiaire d'un système de commande et
un système de convoyage connecté au premier dispositif de levage de marchandises (34a) pour l'introduction et l'évacuation de marchandises (2) vers ou hors du premier dispositif de levage de marchandises (34a),
plus particulièrement à l'aide du système de stockage à rayonnages selon l'une des revendications précédentes,
**caractérisé en ce que**
le premier chariot de manutention (3a) ainsi que le deuxième chariot de manutention (3b) sont déplacés sur au moins une des pistes de guidage et les chariots de manutention (3a, 3b) étant alimentés chacun par l'intermédiaire de dispositifs à lignes d'alimentation (67, 68) séparés les uns des autres avec chacun ses propres lignes d'alimentation (69, 70), indépendamment l'un de l'autre en énergie et/ou en données.

19. Procédé selon la revendication 18, **caractérisé en ce que** l'unité de manipulation de marchandises (4) comprend également un premier dispositif tampon (35a) avec des dispositifs de mise à disposition de déstockage (43) en direction de l'allée de rayonnages (15) sur un côté du premier dispositif de levage de marchandises (34a) et dans au moins certains des plans de rayonnages (16), pour l'entreposage d'une ou de plusieurs marchandises (2) à déstocker, ainsi que des dispositifs de mise à disposition de stockage (44) en direction de l'allée de rayonnages (15) sur l'autre côté du premier dispositif de levage de marchandises (34a) et dans au moins certains des plans de rayonnages (16), pour l'entreposage d'une ou de plusieurs marchandises (2) à stocker, le premier chariot de manutention (3a) ainsi que le deuxième chariot de manutention (3b) étant déplacés sur au moins une des pistes de guidage de façon à ce que, dans une première phase de fonctionnement, le premier chariot de manutention (3a) d'une part dessert le dispositif de mise à disposition de déstockage (43) pour l'entreposage d'une ou de plusieurs marchandises (2) à déstocker et le deuxième chariot de manutention (3b) d'une part dessert le dispositif de mise à disposition de stockage (44) pour l'entreposage d'une ou de plusieurs marchandises (2) à stocker et, dans une deuxième phase de fonctionnement, au moins un des chariots de manutention (3a ; 3b) d'autre part dessert l'autre dispositif de mise à disposition de déstockage (43) pour l'entreposage d'une ou de plusieurs marchandises (2) à déstocker ou un dispositif de mise à disposition de stockage (44) pour l'entreposage d'une ou de plusieurs marchandises (2) à stocker, le système de commande commutant entre les phases de fonctionnement pour les chariots de manutention (3a, 3b).

20. Procédé selon la revendication 19, **caractérisé en ce que**, dans la deuxième phase de fonctionnement, le premier et le deuxième chariots de manutention (3a, 3b) desservent soit le dispositif de mise à disposition de déstockage (43) pour l'entreposage d'une ou de plusieurs marchandises (2) à déstocker soit le dispositif de mise à disposition de stockage (44) pour l'entreposage d'une ou de plusieurs marchandises (2) à stocker.

21. Procédé selon la revendication 18, **caractérisé en ce que** l'unité de manipulation de marchandises (4) comprend, des deux côtés de l'allée de rayonnages (15), un premier dispositif de levage de marchandises (34a) avec un premier dispositif tampon (35a) et un deuxième dispositif de levage de marchandises (34b) avec un deuxième dispositif tampon (35b), le premier dispositif tampon (35a) comprenant, en direction de l'allée de rayonnages (15), sur un côté du premier dispositif de levage de marchandises (34a) et dans au moins certains des plans de rayonnages (16), des dispositifs de mise à disposition de déstockage (43) pour l'entreposage d'une ou de plusieurs marchandises (2) à déstocker, et le deuxième dispositif tampon (35b) comprenant, en direction de l'allée de rayonnages (15), sur un côté du deuxième dispositif tampon (34b) et dans au moins certains des plans de rayonnages (16), des dispositifs de mise à disposition de stockage (44) pour l'entreposage d'une ou de plusieurs marchandises (2) à stocker, le premier chariot de manutention (3a) ainsi que le deuxième chariot de manutention (3b) étant déplacés sur au moins une des pistes de guidage, de façon à ce que dans une première phase de fonctionnement, le premier chariot de manutention (3a) dessert le dispositif de mise à disposition de déstockage (43) pour l'entreposage d'une ou de plusieurs marchandises (2) à déstocker ou le dispositif de mise à disposition de stockage (44) pour l'entreposage d'une ou de plusieurs marchandises (2) à stocker et transporte soit la marchandise (2) à stocker du dispositif de mise à disposition de stockage (44) vers un des emplacements de stockage (17) servant d'emplacement tampon soit transporte la marchandise (2) à déstocker de l'emplacement tampon vers le dispositif de mise à disposition de déstockage (43) et le deuxième chariot de manutention (3b) transporte, indépendamment du premier chariot de manutention (3a), la marchandise (2) à déstocker/stocker entre l'emplacement tampon et un emplacement de stockage (17) prédéfini et
dans une deuxième phase de fonctionnement, le deuxième chariot de manutention (3b) dessert le dispositif de mise à disposition de déstockage (43) pour l'entreposage d'une ou de plusieurs marchandises (2) à déstocker ou le dispositif de mise à disposition de stockage (44) pour l'entreposage d'une ou de plusieurs marchandises (2) à stocker et soit transporte la marchandise (2) à stocker du dispositif de mise à disposition de stockage (44) vers un des emplacements de stockage (17) servant d'emplacement tampon ou vers un emplacement de stockage (17) prédéfini, soit transporte la marchandise (2) à déstocker de l'emplacement tampon ou de l'emplacement de stockage (17) prédéfini vers le dispositif de mise à disposition de déstockage (43), le système de commande commutant entre les phases de fonctionnement pour les chariots de manutention (3a, 3b).

22. Procédé selon la revendication 18, **caractérisé en ce que** l'unité de manipulation de marchandises (4) comprend également un premier dispositif tampon (35a) avec des dispositifs de mise à disposition (72), en direction de l'allée de rayonnages (15) sur un côté du premier dispositif de levage de marchandises (34a) et dans au moins certains des plans de rayonnages (16), pour l'entreposage d'une ou de plusieurs marchandises (2) à déstocker et/ou marchandises (2) à stocker, le premier chariot de manutention (3a) ainsi que le deuxième chariot de manutention (3b) étant déplacés sur au moins une des pistes de guidage, de façon à ce que
dans une première phase de fonctionnement, le premier chariot de manutention (3a) dessert le dispositif de mise à disposition (72) pour l'entreposage d'une ou de plusieurs marchandises (2) à déstocker ou marchandises (2) à stocker et soit transporte la marchandise à stocker (2) du dispositif de mise à disposition de stockage (72) vers un des emplacements de stockage (17) servant d'emplacement tampon soit transporte la marchandise (2) à déstocker de l'emplacement tampon vers le dispositif de mise à disposition de déstockage (72) et le deuxième chariot de manutention (3b) transporte, indépendamment du premier chariot de manutention (3a), la marchandise (2) à déstocker/stocker entre l'emplacement tampon et un emplacement de stockage (17) prédéfini et
dans une deuxième phase de fonctionnement, le deuxième chariot de manutention (3b) dessert le dispositif de mise à disposition (72) pour l'entreposage d'une ou de plusieurs marchandises (2) à déstocker ou marchandises (2) à stocker et soit transporte la marchandise (2) à stocker du dispositif de mise à disposition (72) vers un des emplacements de stockage (17) servant d'emplacement tampon ou un emplacement de stockage (17) prédéfini, soit transporte la marchandise (2) à déstocker de l'emplacement tampon ou de l'emplacement de stockage (17) prédéfini vers le dispositif de mise à disposition (72), le système de commande commutant entre les phases de fonctionnement pour les chariots de manutention (3a, 3b).

23. Procédé selon l'une des revendications 18 à 22, **caractérisé en ce que** les déplacements des chariots de manutention (3a, 3b) sont surveillés par l'intermédiaire d'un ensemble de capteurs internes et/ou externes (73a, 73b ; 74a, 74b) et/ou d'un module de planification de trajectoire électronique de façon à ce que, lors de la commutation entre la première et la deuxième phase de fonctionnement, une distance minimale entre les chariots de manutention (3a, 3b) qui fonctionnent simultanément sur la piste de guidage correspondante soit respectée.
